# EUROPÄISCHE PATENTSCHRIFT

(11) **EP 3 649 167 B1**
(45) Veröffentlichungstag und Bekanntmachung des Hinweises auf die Patenterteilung: **26.05.2021**
(21) Anmeldenummer: 18731112.1
(22) Anmeldetag: 20.06.2018
(51) Int. Cl.: C08G 18/67, C08G 18/76, C08G 18/10, C08G 18/32, C08L 75/16

(54) **MISCHUNG VON RADIKALISCH HÄRTBAREN VERBINDUNGEN UND DEREN VERWENDUNG**
MIXTURE OF RADICAL CURABLE COMPOUNDS AND THEIR USE
MÉLANGE DE COMPOSÉS DURCISSABLES PAR RÉACTION RADICALAIRE ET SON MÉLANGE

(30) Priorität: 03.07.2017 EP 17179288
(43) Veröffentlichungstag der Anmeldung: 13.05.2020
(73) Patentinhaber: Hilti Aktiengesellschaft, 9494 Schaan (LI)
(72) Erfinder: NICKERL, Georg, 86911 Dießen am Ammersee (DE); BUNZEN, Jens, 86159 Augsburg (DE); GNASS, Beate, 86368 Gersthofen (DE); GAEFKE, Gerald, 86159 Augsburg (DE); BÜRGEL, Thomas, 86899 Landsberg (DE); SCHAEFERS, Klaus, 86916 Kaufering (DE)
(74) Vertreter: Hilti Aktiengesellschaft Corporate Intellectual Property
(86) Internationale Anmeldenummer: PCT/EP2018/066439
(87) Internationale Veröffentlichungsnummer: WO 2019/007687

(56) Entgegenhaltungen:
- GB-A- 1 006 587
- US-A1- 2004 092 656
- US-A1- 2015 232 595

## Beschreibung

Die Erfindung betrifft Mischungen umfassend mindestens zwei radikalisch härtbare Verbindungen als Backbone-Harz, deren Verwendung in Reaktivharzen, insbesondere zur Erniedrigung der Viskosität solcher Mischungen enthaltenden Reaktivharzen und damit der Auspresskräfte von daraus hergestellten Reaktivharzkomponenten sowie zur Erhöhung der Leistungsfähigkeit solcher Mischungen enthaltenden Reaktivharze und daraus hergestellten Reaktivharzkomponenten. Des Weiteren betrifft die Erfindung die Verwendung dieser Reaktivharze und deren Reaktivharzkomponenten zu baulichen Zwecken, insbesondere zur chemischen Befestigung.

Die derzeit eingesetzten radikalisch härtbaren Befestigungsmassen basieren auf ungesättigten Polyestern, Vinylesterurethanharzen und Epoxyacrylaten. Es handelt sich dabei meist um Zweikomponenten-Reaktivharz-Systeme, wobei eine Komponente das Harz (sogenannte Komponente (A)) und die andere Komponente (Komponente (B)) das Härtungsmittel enthält. Weitere Bestandteile wie anorganische Füllmittel und Additive, Beschleuniger, Stabilisatoren und Reaktivverdünner können in der einen und/oder der anderen Komponente enthalten sein. Durch Vermischen der beiden Komponenten wird die Härtung der gemischten Komponenten in Gang setzt. Bei Verwendung der Befestigungsmassen zur Befestigung von Verankerungselementen in Bohrlöchern erfolgt die Härtung in den Bohrlöchern.

Eine solche Befestigungsmasse ist beispielsweise aus der DE 3940138 A1 bekannt. Diese beschreibt Befestigungsmassen auf Basis von cycloaliphatische Gruppen tragenden Monomeren, die zusätzlich ungesättigte Polyester- oder Vinylesterharze enthalten können. Derartige Mörtelmassen weisen aber verhältnismäßig hohe Viskositäten auf, wodurch ihre Anwendung, vor allem für die chemische Befestigungstechnik beschränkt wird. DE10115591 und DE102012219652 beschreiben chemische Befestigungssysteme auf Basis verschiedener urethanbasierten Vinylesterharzen.

Auf Baustellen können relativ große Temperaturbereiche von beispielsweise -25°C bis +45°C auftreten, je nach Jhreszeit und/oder geographischer Lage. Daher kann die hohe Viskosität bei den eingangs beschriebenen härtbaren Befestigungsmassen und deren resultierendes thixotropes Verhalten bei der Anwendung zu Problemen führen. Daher werden große Anforderungen an den Einsatzbereich, insbesondere den Einsatz in verschiedenen Temperaturbereichen, derartiger Befestigungsmassen gestellt.

Zum einen sollte im niederen Temperaturbereich eine ausreichend niedrige Viskosität der Masse beim Auspressen gewährleistet werden, so dass die Masse einen nicht zu hohen Strömungswiderstand aufweist. Damit soll sichergestellt werden, dass die Masse beispielsweise mit einem Handdispenser verarbeitet, z.B. in das Bohrloch injiziert, werden kann. Insbesondere bei der Verwendung von Statikmischern ist eine niedrige Viskosität für eine einwandfreie Vermischung der beiden Komponenten von Bedeutung. Zum anderen sollte die Masse im höheren Temperaturbereich hinreichend standfest sein, so dass ein Nachlaufen der einzelnen Komponenten nach dem Entspannen des Dispensers verhindert wird sowie bei der Überkopf-Montage die Masse nicht aus dem Bohrloch herausläuft.

Ein weiteres durch Temperaturschwankungen bedingtes Problem ist, dass die radikalische Kettenpolymerisation nicht einheitlich abläuft. Die ausgehärtete Mörtelmasse weist somit eine schwankende/unregelmäßige und häufig unzureichende Homogenität auf, was sich in Schwankungen der Lastwerte und häufig auch in generell niedrigen Lastwerten wiederspiegelt. Beispielsweise kann es bei Temperaturen unter 20°C durch eine Erhöhung der Viskosität zu einem frühzeitigen Erstarren der Befestigungsmasse kommen. Dadurch fällt der Umsatz bei der radikalischen Kettenpolymerisation wesentlich geringer aus, was zu einer Verringerung der Lastwerte beiträgt.

Da Temperaturschwankungen auf der Baustelle sich nicht vermeiden lassen, besteht nach wie vor ein Bedarf an Zweikomponenten-Reaktivharz-Systemen, welche sowohl bei hohen als auch bei niedrigen Temperaturen die Homogenität und die damit verbundene Reproduzierbarkeit der Lastwerte gewährleisten.

Um oben genannte Probleme zu adressieren, wird bei den auf dem Markt befindlichen Befestigungsmassen der Anteil an Reaktivverdünnern erhöht, was letztendlich zu einer Verringerung des Harzanteils in der Masse führt. Nicht selten beträgt der Anteil an Reaktivverdünnern mindestens 50%, bezogen auf das Reaktivharz.

Die Erhöhung des Anteils an Reaktivverdünnern führt allerdings auch zu einigen Nachteilen, die sich vor allem bei der Anwendung der Befestigungsmasse zur Befestigung von Verankerungsmittel in Bohrlöchern bemerkbar machen.

Ein erheblicher Nachteil ist, dass die Verringerung des Anteils an hochviskosem Harz, welches für die Leistungsfähigkeit der Masse wesentlich ist, die Leistungsfähigkeit der ausgehärteten Befestigungsmasse negativ beeinflusst.

Ein weiterer Nachteil ist ein größerer Schrumpf der Befestigungsmasse nach dem Aushärten, was zusätzlich die Leistungsfähigkeit der ausgehärteten Befestigungsmasse negativ beeinflussen kann. Dies wird darauf zurückgeführt, dass der Kontakt zwischen der ausgehärteten Befestigungsmasse und den beim Erstellen des Bohrlochs in der Bohrlochwandung gebildeten Hinterschnitten, die insbesondere bei der Verwendung von Schlagbohrmaschinen auftreten, deutlich verringert wird. Dies verhindert meist auch die Anwendung der Befestigungsmassen auf Basis radikalisch härtbarer Verbindungen in diamantgebohrten Löchern.

Ein weiterer Nachteil ist, dass sich je nach Art des Reaktivverdünners der Anteil an flüchtigen organischen Verbindungen (VOC; Volatile Organic Compounds) in den Massen erhöhen kann. Dies kann zu Ausdünstungen aus der Befestigungsmasse und/oder der Kartusche führen und gegebenenfalls zu einem daraus resultierenden Leistungsabfall der ausgehärteten Befestigungsmasse. Einige dieser Verbindungen können zudem auch gesundheitsgefährdend sein und/oder sind daher kennzeichnungspflichtig.

Die Anzahl an einsetzbaren Reaktivverdünner ist zudem gering, da es derzeit nur wenige verfügbare Reaktivverdünner auf dem Markt gibt. Die verfügbaren Reaktivverdünner tragen neben den radikalisch härtbaren funktionellen Gruppen keine oder nur eine sehr eingeschränkte Auswahl an anderen funktionellen Gruppen und haben daher meist nur wenig Einfluss auf die Eigenschaft der ausgehärteten Befestigungsmasse. Dies führt dazu, dass die Befestigungsmassen oft für bestimmte Anwendungen entwickelt werden, wie etwa bestimmte Temperaturbereiche, oder zur Anwendung in bestimmten Untergründen. Dies spricht für einen immensen Entwicklungsaufwand, um neue und breitere Anwendungen mit den Befestigungsmassen adressieren zu können.

Bisher werden Spezialprodukte, deren Formulierungen auf die speziellen Anwendungstemperaturen angepasst sind, hergestellt. Es gibt zwar Produkte, die für einen breiten Temperaturbereich gedacht sind, die jedoch über den gesamten Bereich gleiche Eigenschaften aufweisen. Gerade in den Randbereichen, d.h. bei niedrigen und bei hohen Temperaturen, muss entweder mit Beeinträchtigungen bei der Verarbeitbarkeit, bei der Aushärtung der Masse, oder bei den Eigenschaften der ausgehärteten Masse gerechnet werden. Es ist keine Befestigungsmasse bekannt, die einen sehr großen Temperaturbereich abdeckt, ohne Einbußen in den Randbereichen hinnehmen zu müssen.

Es besteht daher ein Bedarf an Befestigungsmassen deren Leistungsfähigkeit und Eigenschaften nicht durch den Einsatz von Reaktivverdünnern, sondern durch den Harzbestandteil beeinflusst werden kann.

Eine Aufgabe der vorliegenden Erfindung ist die Beeinflussung der Eigenschaften eines Reaktivharz-Masterbatches sowie eines daraus hergestellten Reaktivharzes, die allein auf die Struktur des Backbone-Harz zurückzuführen ist, nicht jedoch auf die Präsenz von zusätzlichen Verbindungen, wie z. B. Reaktivverdünner oder Additive. Hauptsächlich ist es Aufgabe der vorliegenden Erfindung die Eigenschaften eines Zwei- oder Mehrkomponenten-Reaktivharz-Systems mittels des enthaltenden Backbone-Harzes zu steuern. Insbesondere ist es Aufgabe der vorliegenden Erfindung Befestigungsmassen, wie beispielsweise Zwei- oder Mehrkomponenten-Reaktivharz-Systeme, bereitzustellen, deren Viskosität weniger von der Anwendungstemperatur der Befestigungsmasse abhängt, die insbesondere bei niedrigen Temperaturen, wie etwa unter 20°C, eine niedrige Viskosität aufweisen und damit die Bereitstellung von Reaktivharz-Systemen ermöglichen, die bei Anwendungstemperaturen unter 20°C, insbesondere bei Anwendungstemperaturen unter 10°C niedrigere Auspresskräfte aufweisen und damit anwenderfreundlicher sind als die herkömmlichen Befestigungssysteme.

Eine weitere Aufgabe der Erfindung ist die Bereitstellung einer Befestigungsmasse, welches niedrigere Auspresskräfte der Reaktivharz-Komponente und gleichzeitig höhere Lastwerte der ausgehärteten Befestigungsmasseaufweist als herkömmliche Massen.

Eine noch weitere Aufgabe der vorliegenden Erfindung ist die Bereitstellung einer Befestigungsmasse, welche hochgradig gesundheitsgefährdende Inhaltsstoffe in der Reaktivharz-Komponente vermeidet und gegebenenfalls auch kennzeichnungsfrei ist. Insbesondere ist es Aufgabe den Anteil an Reaktivverdünnern in Reaktivharzen für die chemische Befestigung zu verringern, ohne auf deren Funktion bzw. Funktionen und positiven Auswirkungen auf die ausgehärtete Befestigungsmasse verzichten zu müssen.

Eine noch weitere Aufgabe der vorliegenden Erfindung ist die Bereitstellung einer Befestigungsmasse, welche sich durch gute Verarbeitbarkeit, Aushärteverhalten und durch geringen Schrumpf über eine große Temperaturspanne auszeichnet.

Diese Aufgabe wird durch eine Mischung nach Anspruch 1 und deren Verwendung nach den Ansprüchen 17 bis 19, ein Reaktivharz nach Anspruch 20 und eine Reaktivharzkomponente nach Anspruch 21 gelöst.

Überraschender Weise wurde gefunden, dass durch die Verwendung einer Mischung aus wenigstens zwei Verbindungen, die unter bestimmten niedrigviskosen Urethanmethacrylat-Verbindungen, bestimmten niedrigviskosen Epoxymethacrylatverbindungen und bestimmten verzweigten Urethanmethacrylat-Verbindungen ausgewählt sind, als Backbone-Harz die Temperaturspanne, in der die Viskosität eines diese Mischung enthaltenden Reaktivharzes und einer daraus erhältlichen Reaktivharzkomponente von den Temperaturen weitestgehend wenig beeinflusst bleibt, groß ist.

Vorteilhafterweise ermöglicht die vorliegende Erfindung bei niedrigen Anwendungstemperaturen niedrige Auspresskräfte bei einem Reaktivharz-System im Vergleich zu den herkömmlichen Systemen. Durch den Einsatz von Mischungen aus wenigstens zwei Verbindungen, die unter bestimmten niedrigviskosen Urethanmethacrylat-Verbindungen, bestimmten niedrigviskosen Epoxymethactrylatverbindungen und bestimmten verzweigten Urethanmethacrylat-Verbindungen ausgewählt sind, als Backbone-Harz in Reaktivharzen ist es somit gelungen, die Auspresskräfte eines Reaktivharz-Systems sowohl bei 20°C als auch bei niedrigeren Temperaturen, beispielsweise bei Temperaturen unter 10°C, bevorzugt unter 5°C zu senken, ohne dass hierzu ein hoher Anteil an Reaktivverdünner erforderlich ist.

Ferner wurde gefunden, dass es möglich ist, durch den Einsatz von Mischungen aus wenigstens zwei Verbindungen, die unter bestimmten niedrigviskosen Urethanmethacrylat-Verbindungen, bestimmten niedrigviskosen Epoxymethactrylatverbindungen und bestimmten verzweigten Urethanmethacrylat-Verbindungen ausgewählt sind, den Anteil an Reaktivverdünnern in Reaktivharzen für die chemische Befestigung zu verringern, ohne auf deren Funktion bzw. Funktionen und positiven Auswirkungen auf die ausgehärtete Befestigungsmasse verzichten zu müssen, da der Anteil an Backbone-Harz erhöht werden kann. Hierdurch wird es zum einen möglich, die Lastwerte einer ausgehärteten Masse zu steigern, und zum anderen bei höheren Temperaturen, beispielsweise bei 80°C, bei gleichem Anteil an Backbone-Harz höhere Lastwerte zu erzielen.

Die Erfindung beruht auf der Erkenntnis, dass es möglich ist, die bisher in Befestigungsmassen eingesetzten Harze durch kleinere Backbone-Harze zu ersetzen, um zum einen den Anteil an Reaktivverdünner zu verringern und zum anderen, die Funktionalität der Reaktivverdünner auf die Backbone-Harze zu übertragen. Ziel der Erfindung war es, ein modulares System bereitzustellen, das es ermöglicht, die Mischung von radikalisch härtbaren Verbindungen als Backbone-Harz anhand der gewünschten Eigenschaften der Befestigungsmasse zusammenzustellen.

Zum besseren Verständnis der Erfindung werden die folgenden Erläuterungen zum Herstellungsverfahren für ein Reaktivharz und zur hierin verwendeten Terminologie als sinnvoll erachtet.

Das Herstellungsverfahren für ein Reaktivharz mit einer Mischung aus härtbaren Verbindungen als Backbone-Harz verläuft, hier erläutert am Beispiel einer Mischung aus einem MDI-basierten Urethanmethacrylat und einem 1,4-Butandiol-diglycidyletherbasierten Epoxymethacrylat, typischerweise wie folgt:

### 1. Herstellung Backbone-Harz/Reaktivharz-Masterbatch

Es wird ein Reaktivharz-Masterbatch mit einem MDI-basierten Urethanmethacrylat als Backbone-Harz 1 wie folgt hergestellt:
Methandiphenyldiisocyanat (MDI) und Hydroxypropylmethacrylat (HPMA) werden in Anwesenheit eines Katalysators und eines Inhibitors (dient dazu, das durch die Polymerisation gebildete Backbone-Harz zu stabilisieren, häufig auch Stabilisator oder Prozessstabilisator genannt) zur Reaktion gebracht. Hierbei entsteht das Backbone-Harz 1.

Unabhängig davon wird ein Reaktivharz-Masterbatch mit einem 1,4-Butandiol-diglycidylether-basierten Epoxymethacrylat als Backbone-Harz 2 wie folgt hergestellt:
1,4-Butandiol-diglycidylether und Methacrylsäure werden in Anwesenheit eines Katalysators und eines Inhibitors zur Reaktion gebracht. Hierbei entsteht das Backbone-Harz 2.

Das nach Ende der Reaktion jeweils erhaltene Reaktionsgemisch wird als Reaktivharz-Masterbatch bezeichnet. Dieses wird nicht weiter aufgearbeitet, d.h. das Backbone-Harz wird nicht isoliert.

### 2. Herstellung Reaktivharze

Zu den beiden Reaktivharz-Masterbatches werden nach Abschluss der Reaktion zum Backbone-Harz jeweils ein Beschleuniger-Inhibitor-System, d.h. eine Kombination aus einem oder mehreren zusätzlichen Inhibitoren und einem oder mehreren Beschleunigern sowie gegebenenfalls ein Reaktivverdünner gegeben.

Hierdurch erhält man das Reaktivharz 1 und unabhängig davon das Reaktivharz 2.

Das Beschleuniger-Inhibitor-System dient dazu, die Reaktivität des Reaktiv-Harzes einzustellen, also den Zeitpunkt einzustellen, bis zu dem das Reaktiv-Harz nach Zugabe eines Initiators noch nicht vollständig ausgehärtet ist und bis zu welchem Zeitpunkt daher eine mit dem Reaktivharz angemischte Dübelmasse nach dem Mischen mit dem Initiator verarbeitbar bleibt.

Der Inhibitor in dem Beschleuniger-Inhibitor-System kann gleich dem Inhibitor bei der Herstellung des Backbone-Harzes sein, wenn dieser auch dazu geeignet ist, die Reaktivität einzustellen, oder ein anderer Inhibitor sein, wenn er nicht beide Funktionen aufweist. 4-Hydroxy-2,2,6,6-tetramethyl-piperidinyl-1-oxyl (TEMPOL) etwa kann als Stabilisator und als Inhibitor zu Einstellung der Reaktivität eingesetzt werden.

### 3. Herstellung Mischung

Die beiden Reaktivharze 1 und 2 werden gemischt, woraus ein Reaktivharz resultiert, welches das Backbone-Harz 1 und das Backbone-Harz 2 enthält.

Alternativ ist es auch möglich, vor der Herstellung des Reaktivharzes die beiden Masterbatches zu mischen und dann die zur Herstellung der Reaktivharzes weiteren Bestandteile hinzuzugeben.

### 4. Herstellung Reaktivharzkomponente

Für die Verwendung des Reaktivharzes, welches das Backbone-Harz 1 und das Backbone-Harz 2 enthält, für bauliche Zwecke, insbesondere für die chemische Befestigung, werden nach der Herstellung des Reaktivharzes ein oder mehrere anorganische Zuschlagstoffe, wie Additive und/oder Füllstoffe, gegeben.

Hierdurch wird die Reaktivharzkomponente erhalten.

Im Sinne der Erfindung bedeuten die verwendeten Begriffe:
- *"Backbone-Harz"* ein üblicherweise festes oder hochviskoses radikalisch polymerisierbares Harz, welches durch Polymerisation (z.B. nach Zugabe eines Initiators in Gegenwart eines Beschleunigers) härtet und in der Regel ohne Reaktivverdünner und ohne weiterer Reinigung vorliegt und damit Verunreinigung enthalten kann;
- *"Reaktivharz-Masterbatch"* das Reaktionsprodukt der Reaktion zur Herstellung des Backbone-Harzes, also eine Mischung aus Backbone-Harz, Reaktivverdünner und gegebenenfalls weiteren Bestandteilen der Reaktionsmischung;
- *"Reaktivharz"* eine Mischung aus Reaktivharz-Masterbatch, mindestens einem Beschleuniger und mindestens einem Inhibitor (auch als Beschleuniger-Inhibitor-System bezeichnet), mindestens einem Reaktivverdünner und gegebenenfalls weiteren Additiven; das Reaktivharz ist typischerweise flüssig oder viskos und kann zu einer Reaktivharzkomponente weiterverarbeitet werden; hierin wird das Reaktivharz auch als *"Harzmischung"* bezeichnet;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet - die jeweilige Bedeutung des Begriffes erschließt sich aus dem Kontext);
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Initiator"* einen Stoff, der (üblicherweise in Kombination mit einem Beschleuniger) reaktionsinitierende Radikale bildet;
- *"Härterkomponente"* eine Zusammensetzung, die einen Initiator für die Polymerisation eines Backbone-Harzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Mörtelmasse*/*Befestigungsmasse"* die Zusammensetzung, die durch das Mischen der Reaktivharzkomponente mit der Härterkomponente erhalten wird und als solche direkt zur chemischen Befestigung verwendet werden kann;
- *"Reaktivharz-System"* allgemein ein System, das voneinander getrennt gelagerte Komponenten umfasst, so dass eine Härtung des in einer Komponente enthaltenen Backbone-Harzes erst nach dem Mischen der Komponenten erfolgt;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- *"bauliche Zwecke"* jegliche Anwendung zur Erstellung und Instandhaltung bzw. - setzung von Bauteilen und Bauwerken, als Polymerbeton, als Beschichtungsmasse auf Kunstharzbasis oder als kalthärtende Straßenmarkierung; insbesondere die Verstärkung von Bauteilen und Bauwerken, beispielsweise Wände, Decken oder Böden, die Befestigung von Bauteilen, wie Platten oder Blöcken, z. B. aus Stein, Glas oder Kunststoff, an Bauteilen oder Bauwerken, etwa durch Kleben (bauliches Kleben) und ganz besonders die chemische Befestigung von Verankerungsmitteln, wie Ankerstangen, Bolzen oder dergleichen in Aussparungen, wie Bohrlöchern;
- *"chemische Befestigung"* eine (stoff- und/oder formschlüssige) Befestigung von Verankerungsmitteln, wie Ankerstangen, Bolzen, Bewehrungseisen, Schrauben oder dergleichen in Aussparungen, wie Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl;
- *"aliphatische Kohlenwasserstoffgruppe"* eine acyclische und cyclische, gesättigte oder ungesättigte Kohlenwasserstoffgruppe, die nicht aromatisch sind (PAC, 1995, 67, 1307; *Glossary of class names of organic compounds and reactivity intermediates based on structure* (IUPAC Recommendations 1995));
- *"aromatische Kohlenwasserstoffgruppe",* eine cyclische, planare Kohlenwasserstoffgruppe mit aromatischem System, die aufgrund ihres delokalisierten Elektronensystems energetisch günstiger als ihre nicht aromatischen Mesomere und deshalb chemisch stabiler sind (PAC, 1995, 67, 1307; *Glossary of class names of organic compounds and reactivity intermediates based on structure* (IUPAC Recommendations 1995) page 1319);
- *aromatisch-aliphatische Kohlenwasserstoffgruppe* eine Kohlenwasserstoffgruppe mit einer aromatischen Kohlenwasserstoffgruppe an die eine oder mehrere aliphatische Kohlenwasserstoffgruppe(n) angebunden ist/sind, wobei die aliphatische Kohlenwasserstoffgruppe als Brücke zu einer funktionellen Gruppe dient, so dass die funktionelle Gruppe nicht direkt an die aromatische Kohlenwasserstoffgruppe gebunden wird;
- *"aromatisches Diisocyanat"* eine Verbindung, bei der die beiden Isocyanatgruppen direkt an ein aromatisches Kohlenwasserstoffgerüst gebunden sind;
- *"aromatisch-aliphatisches Diisocyanat",* eine Verbindung mit einem alkylsubstituierten Benzolring als aromatischen Kern, wobei die beiden Isocyanatgruppen nicht direkt an den aromatischen Kern, sondern an die Alkylengruppen gebunden sind, so dass die Alkylengruppen als Alkylenbrücken dienen;
- *"(Meth)acryl...*/*...(meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..." -Verbindungen gemeint;
- *"ein", "eine", "einer"als* Artikel vor einer chemischen Verbindungsklasse, z.B. vor dem Wort "Urethanmethacrylat", dass mindestens eine, d.h., eine oder mehrere unter diese chemische Verbindungsklasse fallende Verbindungen, z.B. verschiedene Urethanmethacrylate, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint*;*
- *"enthalten" und "umfassen",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten" und "umfassen"* den Begriff *"bestehen aus";*
- *"etwa"* oder *"circa"* vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Ein erster Gegenstand der Erfindung ist eine Mischung umfassend mindestens zwei radikalisch härtbare Verbindungen ausgewählt aus der Gruppe bestehend aus Strukturen der allgemeinen Formeln (I), (V) oder (VII): 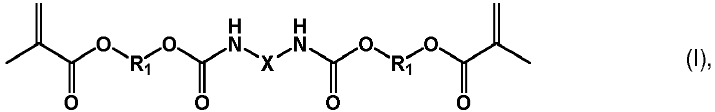 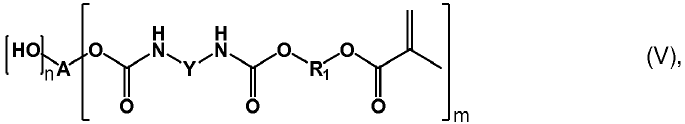 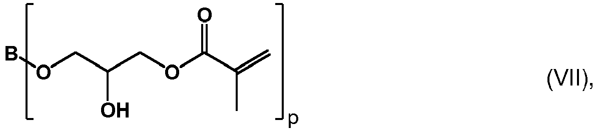 worin
jedes R₁ unabhängig voneinander eine verzweigte oder lineare aliphatische C₁-C₁₅-Alkylengruppe ist,
A eine lineare oder verzweigte aliphatische C₃-C₁₀-Alkylengruppe ist,
B eine lineare, verzweigte oder cyclische aliphatische Kohlenwasserstoffgruppe oder eine aromatische Kohlenwasserstoffgruppe ist,
X eine zweiwertige lineare, verzweigte oder cyclische aliphatische oder aromatische Kohlenwasserstoffgruppe oder eine Gruppe der Formel (Z) 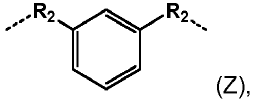 worin R₂ eine zweiwertige verzweigte oder lineare aliphatische C₁-C₆-Alkylengruppe ist,
ist,
Y ein aromatische Kohlenwasserstoffgruppe ist,
n eine ganze Zahl größer oder gleich 0 ist,
m eine ganze Zahl größer oder gleich 3 ist, und
p eine ganze Zahl größer oder gleich 2 ist.

Ein zweiter Gegenstand ist deren Verwendung zur Herstellung eines Reaktivharzes oder einer Reaktivharzkomponente für bauliche Zwecke. Ein dritter Gegenstand ist deren Verwendung zur Erniedrigung der Viskosität eines Reaktivharzes oder zur Erniedrigung der Auspresskräfte einer Reaktivharzkomponente oder eines Reaktivharz-Systems für bauliche Zwecke. Ein vierter Gegenstand ist deren Verwendung zur Erhöhung der Verbundspannung einer ausgehärteten Befestigungsmasse. Ein fünfter Gegenstand ist ein Reaktivharz umfassend die Mischung der radikalisch härtbaren Verbindungen, einen Inhibitor, einen Beschleuniger und gegebenenfalls einen Reaktivverdünner. Ein sechster Gegentand ist eine Reaktivharzkomponente für ein Reaktivharz-System umfassen das Reaktivharz. Ein siebter Gegenstand ist ein Reaktivharz-System mit der Reaktivharzkomponente und einer Härterkomponente, die einen Initiator enthält. Ein achter Gegenstand ist die Verwendung des Reaktivharzes oder des Reaktivharz-Systems für bauliche Zwecke.

Erfindungsgemäß umfasst die Mischung mindestens zwei radikalisch härtbare Verbindungen ausgewählt aus der Gruppe bestehend aus Strukturen der allgemeinen Formeln (I), (V) oder (VII) 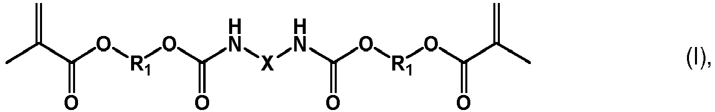 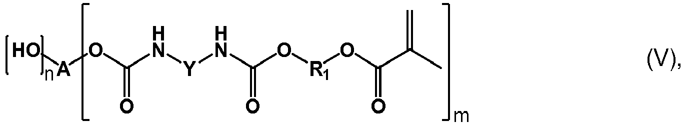 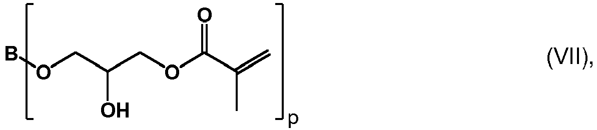 worin
jedes R₁ unabhängig voneinander eine verzweigte oder lineare aliphatische C₁-C₁₅-Alkylengruppe ist,
A eine lineare oder verzweigte aliphatische C₃-C₁₀-Alkylengruppe ist,
B eine lineare, verzweigte oder cyclische aliphatische Kohlenwasserstoffgruppe oder eine aromatische Kohlenwasserstoffgruppe ist,
X eine zweiwertige lineare, verzweigte oder cyclische aliphatische oder aromatische Kohlenwasserstoffgruppe oder eine Gruppe der Formel (Z) 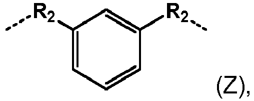 worin R₂ eine zweiwertige verzweigte oder lineare aliphatische C₁-C₆-Alkylengruppe ist,
ist,
Y ein aromatische Kohlenwasserstoffgruppe ist,
n eine ganze Zahl größer oder gleich 0 ist,
m eine ganze Zahl größer oder gleich 3 ist, und
p eine ganze Zahl größer oder gleich 2 ist.

### Radikalisch härtbare Verbindungen

### Niedrigviskose Urethanmethacrylat-Verbindungen

Erfindungsgemäß kann die Mischung als eine radikalisch härtbare Verbindung eine niedrigviskose Urethanmethacrylat-Verbindung der allgemeinen Formel (I) sein 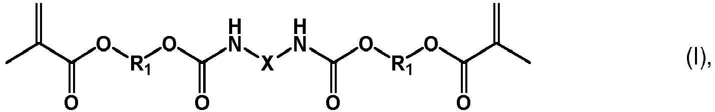 worin
X (i) eine zweiwertige aromatische, (ii) eine zweiwertige lineare, verzweigte oder cyclische aliphatische Kohlenwasserstoffgruppe oder (iii) eine Gruppe der Formel (Z) 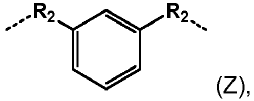 worin R₂ eine zweiwertige verzweigte oder lineare aliphatische C₁-C₆-Alkylengruppe ist,
ist, und
jedes R₁ unabhängig voneinander eine verzweigte oder lineare aliphatische C₁-C₁₅-Alkylengruppe ist.

### (i) zweiwertige aromatische Kohlenwasserstoffgruppe X

Die Kohlenwasserstoffgruppe X kann eine zweiwertige aromatische Kohlenwasserstoffgruppe sein, bevorzugt eine C₆-C₂₀-Kohlenwasserstoffgruppe und weiter bevorzugt eine C₆-C₁₄-Kohlenwasserstoffgruppe. Die aromatische Kohlenwasserstoffgruppe kann substituiert sein, insbesondere durch Alkylreste, worunter Alkylreste mit einem bis vier Kohlenstoffatomen bevorzugt sind.

In einer Ausführungsform enthält die aromatische Kohlenwasserstoffgruppe einen Benzolring, der substituiert sein kann.

In einer alternativen Ausführungsform enthält die aromatische Kohlenwasserstoffgruppe zwei kondensierte Benzolringe oder zwei Benzolringe, die über eine Alkylengruppe, wie eine Methylen- oder Ethylengruppe verbrückt sind. Sowohl die Benzolringe als auch die Alkylenbrücke kann substitutiert sein, bevorzugt mit Alkylgruppen.

Die aromatische Kohlenwasserstoffgruppe ist von aromatischen Diisocyanaten abgeleitet, wobei "aromatisches Diisocyanat" bedeutet, dass die beiden Isocyanatgruppen direkt an ein aromatisches Kohlenwasserstoffgerüst gebunden sind.

Geeignete aromatische Kohlenwasserstoffgruppen sind zweiwertige Gruppen, wie sie durch Entfernung der Isocyanatgruppen aus einem aromatischen Diisocyanat erhalten werden, beispielsweise eine zweiwertige Phenylengruppe aus einem Benzoldiisocyanat, eine Methylphenylengruppe aus einem Toluoldiisocyanat (TDI) oder eine Ethylphenylengruppe aus einem Ethylbenzoldiisocyanat, eine zweiwertige Methylendiphenylengruppe aus einem Methylendiphenyldiisocyanat (MDI) oder eine zweiwertige Naphthylgruppe aus einem Naphthalendiisocyanat (NDI).

Besonders bevorzugt ist die aromatische Kohlenwasserstoffgruppe abgeleitet von 1,3-Diisocyanatobenzol, 1,4-Diisocyanatobenzol, 2,4-Diisocyanatotoluol, 2,6-Diisocyanatotoluol, 2,4'-Diphenylmethandiisocyanat, 4,4'-Diphenylmethandiisocyanat oder 1,5-Diisocyanatonaphthalin.

### (ii) zweiwertige lineare, verzweigte oder cyclische aliphatische Kohlenwasserstoffgruppe X

Alternativ kann die Kohlenwasserstoffgruppe X eine zweiwertige lineare, verzweigte oder cyclische aliphatische Kohlenwasserstoffgruppe sein, die bevorzugt aus der Gruppe bestehend aus Pentylen-, Hexylen-, Heptylen- oder Octylengruppen ausgewählt ist. Besonders bevorzugt ist in dieser Ausführungsform die lineare aliphatische Kohlenwasserstoffgruppe X eine Hexylengruppe.

In einer alternativen Ausführungsform ist die Kohlenwasserstoffgruppe X eine zweiwertige cycloaliphatische Kohlenwasserstoffgruppe, die bevorzugt aus der Gruppe bestehend aus 3-Methylen-3,5,5-Tetramethylcyclohexylen-, Methylendicyclohexylen- und 1,3-Dimethylencyclohexylgruppen ausgewählt ist. Besonders bevorzugt ist in dieser Ausführungsform die cycloaliphatische Kohlenwasserstoffgruppe eine 3-Methylen-3,5,5-Trimethylcyclohexylen- oder 1,3-Dimethylencyclohexylengruppe.

Die aliphatische Kohlenwasserstoffgruppe ist von aliphatischen Diisocyanaten abgeleitet, was lineare und verzweigte aliphatische Diisocyanate und cycloaliphatische Diisocyanate einschließt.

Geeignete aliphatische Kohlenwasserstoffgruppen sind zweiwertige Gruppen, wie sie durch Entfernung der Isocyanatgruppen aus einem aliphatischen Diisocyanat erhalten werden.

Besonders bevorzugt ist X abgeleitet von aliphatischen Diisocyanaten, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-lsocyanato-1-methyl-4(3)-isocyanatomethylcyclohexan, 2,4'-und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan.

### (iii) zweiwertige aromatisch-aliphatische Kohlenwasserstoffgruppe X

Die Kohlenwasserstoffgruppe X kann eine zweiwertige aromatisch-aliphatische Kohlenwasserstoffgruppe Z der Formel (Z) 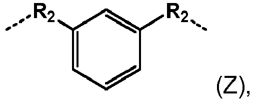 worin R₂ eine zweiwertige verzweigte oder lineare aliphatische C₁-C₆-Alkylengruppe, bevorzugt C₁-C₃-Alkylengruppe ist, sein.

Die aromatisch-aliphatische Kohlenwasserstoffgruppe ist von aromatisch-aliphatischen Diisocyanaten abgeleitet, wobei "aromatisch-aliphatisches Diisocyanat" bedeutet, dass die beiden Isocyanatgruppen nicht direkt an den aromatischen Kern, sondern an die Alkylengruppen gebunden sind.

Geeignete aromatisch-aliphatische Kohlenwasserstoffgruppen sind zweiwertige Gruppen, wie sie durch Entfernung der Isocyanatgruppen aus einem aromatisch-aliphatischen Diisocyanat erhalten werden, wie beispielsweise aus Isomeren aus Bis(1-isocyanato-1-methylethyl)-benzol und Xylylendiisocyanat (Bis-(isocyanatomethyl)benzol), bevorzugt aus 1,3-Bis(1-isocyanato-1-methylethyl)-benzol oder *m*-Xylylendiisocyanat (1,3-Bis-(isocyanatomethyl)benzol).

R₁ ist jeweils unabhängig voneinander eine verzweigte oder lineare aliphatische C₁-C₁₅-Alkylengruppe, die substituiert sein kann. R₁ ist von Hydroxyalkylmethacrylaten abgeleitet und umfasst zweiwertige Alkylengruppen, wie sie durch Entfernung der Hydroxylgruppen und der Methacrylatgruppe erhalten werden.

In einer Ausführungsform ist die Alkylengruppe R₁ zweiwertig.

In einer alternativen Ausführungsform kann sie aber auch drei- oder höherwertig sein, so dass die Verbindung der Formel (I) auch mehr als zwei Methacrylatgruppen aufweisen kann, auch wenn dies nicht direkt aus der Formel (I) ersichtlich ist.

Bevorzugt ist die Alkylengruppe R₁ eine zweiwertige lineare oder verzweigte C₁-C₁₅-Alkylengruppe, bevorzugt C₁-C₆-Alkylengruppe und besonders bevorzugt eine C₁-C₄-Alkylengruppe. Dazu zählen insbesondere die Methylen-, Ethylen-, Propylen-, *i*-Propylen-, *n*-Butylen-, 2-Butylen-, *sec*.-Butylen-, *tert*.-Butylen-, *n*-Pentylen-, 2-Pentylen-, 2-Methylbutylen-, 3-Methylbutylen-, 1,2-Dimethylpropylen-, 1,1-Dimethylpropylen-, 2,2-Dimethylpropylen-, 1-Ethylpropylen-, *n*-Hexylen-, 2-Hexylen-, 2-Methylpentylen-, 3-Methylpentylen-, 4-Methylpentylen-, 1,2-Dimethylbutylen-, 1,3-Dimethylbutylen-, 2,3-Dimethylbutylen-, 1,1-Dimethylbutylen-, 2,2-Dimethylbutylen-, 3,3-Dimethylbutylen-, 1,1,2-Trimethylpropylen-, 1,2,2-Trimethylpropylen-, 1-Ethylbutylen-, 2-Ethylbutylen-, 1-Ethyl-2-methylpropylen-, *n-*Heptylen-, 2-Heptylen-, 3-Heptylen-, 2-Ethylpentylen-, 1-Propylbutylen- oder die Octylengruppe, worunter die Ethylen-, Propylen- und *i*-Propylengruppe weiter bevorzugt sind. In einer besonders bevorzugten Ausführungsform der vorliegenden Erfindung sind die beiden R₁-Gruppen identisch und eine Ethylen-, Propylen- oder *i*-Propylengruppe.

Die erfindungsgemäßen niedrigviskosen Urethanmethacrylat-Verbindungen werden durch Umsetzen von zwei Äquivalenten Hydroxyalkylmethacrylat mit mindestens einem Äquivalent an Diisocyanat erhalten. Das Diisocyanat und das Hydroxyalkylmethacrylat werden in Anwesenheit eines Katalysators und eines Inhibitors, welcher dazu dient, die gebildete Verbindung zu stabilisieren, zur Reaktion gebracht.

Geeignete Hydroxyalkylmethacrylate sind solche mit Alkylengruppen mit einem bis 15 Kohlenstoffatomen, wobei die Alkylengruppen linear oder verzweigt sein können. Bevorzugt sind Hydroxyalkylmethacrylate mit einem bis 10 Kohlenstoffatomen. Weiter bevorzugt sind Hydroxyalkylmethacrylate mit zwei bis sechs Kohlenstoffatomen, worunter 2-Hydroxyethylmethacrylat, 2-Hydroxypropylmethacrylat (2-HPMA), 3-Hydroxypropylmethacrylat (3-HPMA) und Glycerol-1,3-dimethacrylat besonders bevorzugt sind. Ganz besonders bevorzugt sind 2-Hydroxypropylmethacrylat (2-HPMA) oder 3-Hydroxypropylmethacrylat (3-HPMA).

Geeignete aromatische Diisocyanate sind solche mit aromatisch gebundenen Isocyanatgruppen, wie Diisocyanatobenzol, Toluoldiisocyanate (TDI), Diphenylmethandiisocyanate (MDI), Diisocyanatonaphthaline. Diese Verbindungen können sowohl als reine Verbindungen als auch optische Isomere oder Isomerengemische, in unterschiedlicher Zusammensetzung vorliegen, die gegebenenfalls in üblicher Art und Weise getrennt werden können.

Besonders bevorzugte aromatische Diisocyanate sind 1,4-Diisocyanatobenzol, 2,4-Diisocyanatotoluol, 2,6-Diisocyanatotoluol, 2,4'-Diphenylmethandiisocyanat, 4,4'-Diphenylmethandiisocyanat und 1,5-Diisocyanatonaphthalin.

Geeignete Diisocyanate sind solche mit aliphatisch und/oder cycloaliphatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1 '-bi(cyclohexyl), 4,4'-Diisocyanato-3,3'-dimethyl-1,1 '-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan.

Bevorzugte Diisocyanate sind Hexamethylendiisocyanat, Isophorondiisocyanat und 1,3-Bis(isocyanatomethyl)cyclohexan davon.

Geeignete aromatisch-aliphatische Diisocyanate sind solche mit einem Benzolring als alkylsubstituierten aromatischen Kern und mit aliphatisch gebundenen Isocyanatgruppen, d.h. die Isocyanatgruppe ist an die Alkylengruppen gebunden, wie Isomeren aus Bis(1-isocyanato-1-methylethyl)-benzol und Xylylendiisocyanat (Bis-(isocyanatomethyl)benzol).

Bevorzugte aromatisch-aliphatische Diisocyanate sind 1,3-Bis(1-isocyanato-1-methylethyl)-benzol oder *m*-Xylylendiisocyanat (1,3-Bis-(isocyanatomethyl)benzol).

Bevorzugt ist die Verbindung der allgemeinen Formel (I) eine Verbindung der allgemeinen Formel (IIa), (IIb), (IIIa), (IIIb), (IIIc), (IVa) oder (IVb): 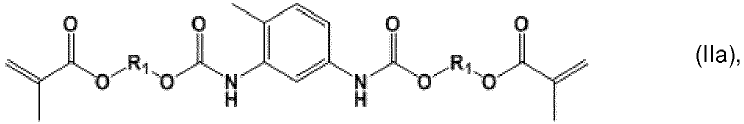 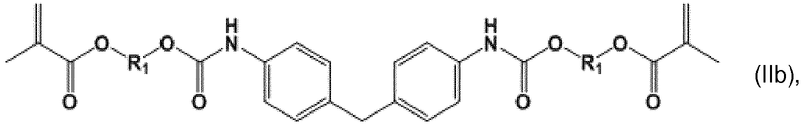 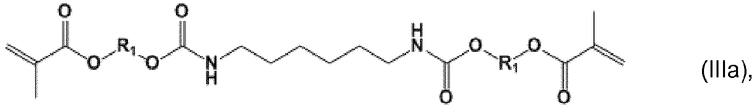 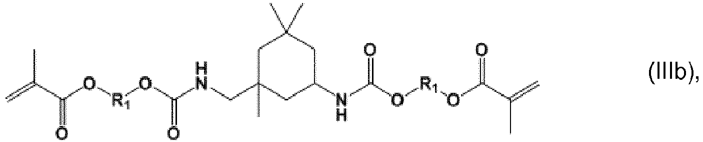 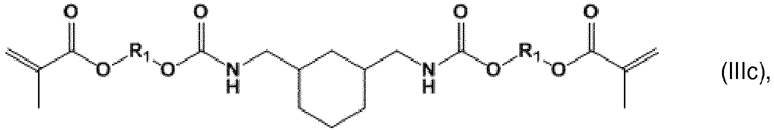 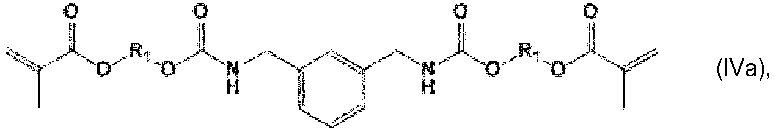 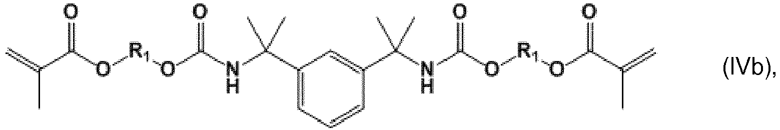 worin jedes R₁ unabhängig voneinander wie oben definiert ist.

Ganz besonders bevorzugt ist die Verbindung der allgemeinen Formel (I) eine Verbindung der Formeln (IIc), (IId), (IIId), (IIIe), (IIIf), (IVc) oder (IVd):

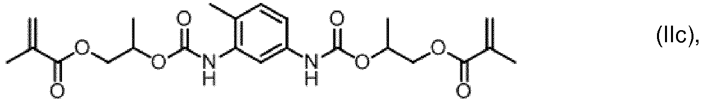

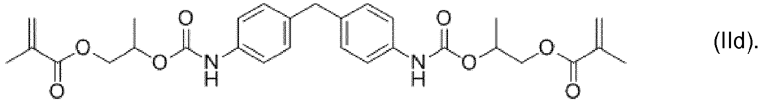

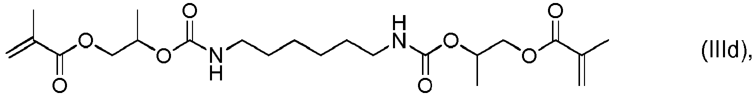

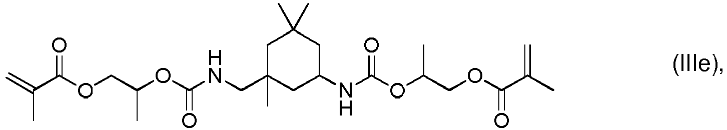

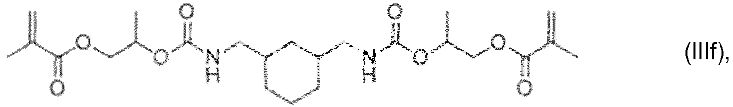

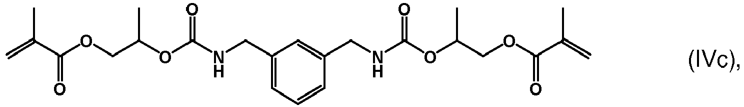

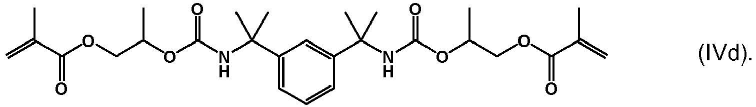

Die in den Formeln (IIa) bis (IId) und (IVa) bis (IVd) gezeigten Strukturen sollen die erfindungsgemäßen Verbindungen nur beispielhaft darstellen, da die zu deren Herstellung verwendeten Diisocyanate sowohl als isomerenreine Verbindungen als auch als Gemische der unterschiedlichen Isomere, in jeweils unterschiedlicher Zusammensetzung, d.h. in unterschiedlichen Mengenverhältnissen, eingesetzt werden können. Die gezeigten Strukturen sind daher nicht als einschränkend auszulegen.

Folglich können die erfindungsgemäßen Verbindungen als isomerenreine Verbindungen oder als Isomerengemische, in unterschiedlicher Zusammensetzung vorliegen, die gegebenenfalls in üblicher Art und Weise getrennt werden können. Sowohl die reinen Isomeren als auch die Isomerengemische sind Gegenstand der vorliegenden Erfindung. Gemische mit unterschiedlichen Anteilen an isomeren Verbindungen sind ebenfalls Gegenstand der Erfindung.

Die Verbindungen der Formeln (IIIa) bis (IIIf) können sowohl als reine Verbindungen als auch als optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische und deren Verwendung sind Gegenstand der vorliegenden Erfindung. Gemische mit unterschiedlichen Anteilen an isomeren Verbindungen sind ebenfalls Gegenstand der Erfindung.

Die niedrigviskosen aliphatischen Urethanmethacrylat-Verbindungen dienen vor allem dazu, die Viskosität einer diese Verbindungen enthaltenden Reaktivharzes und die Auspresskräfte einer diese Verbindungen enthaltenden Reaktivharzkomponente zu erniedrigen. Sie wirken sich also positiv auf die Verarbeitbarkeit der Reaktivharzkomponenten insbesondere eines diese umfassenden Reaktivharz-Systems aus. Ferner kann durch deren Verwendung der Anteil an Reaktivverdünner reduziert werden.

Die niedrigviskosen aromatischen Urethanmethacrylat-Verbindungen dienen zusätzlich dazu, die Lastwerte einer diese Verbindungen enthaltenden ausgehärteten Reaktivharzkomponente positiv zu beeinflussen, insbesondere zu erhöhen.

### Verzweigte aromatische Urethanmethacrvlat-Verbindunqen

Erfindungsgemäß kann die Mischung als eine radikalisch härtbare Verbindung eine verzweigte Urethanmethacrylat-Verbindung der allgemeinen Formel (V) sein 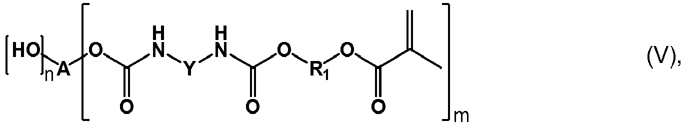 worin
Y eine aromatische Kohlenwasserstoffgruppe ist,
A eine lineare oder verzweigte aliphatische C₃-C₁₀-Alkylengruppe ist,
jedes R₁ jeweils unabhängig voneinander eine verzweigte oder lineare aliphatische C₁-C₁₅-Alkylengruppe ist,
n eine ganze Zahl größer oder gleich 0 ist, und
m eine ganze Zahl größer oder gleich 3 ist.

In einer bevorzugten Ausführungsform ist die verzweigte Urethanmethacrylat-Verbindung eine Verbindung der allgemeinen Formel (VI) 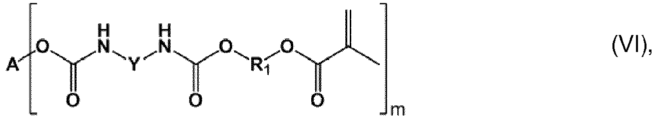 worin
Y eine aromatische Kohlenwasserstoffgruppe ist,
A eine lineare oder verzweigte aliphatische C₃-C₁₀-Alkylengruppe ist,
jedes R₁ jeweils unabhängig voneinander eine verzweigte oder lineare aliphatische C₁-C₁₅-Alkylengruppe ist, und
m eine ganze Zahl größer oder gleich 3 ist.

Die aromatische Kohlenwasserstoffgruppe Y ist zweiwertig und hat bevorzugt 6 bis 20 Kohlenstoffatome und weiter bevorzugt 6 bis 14 Kohlenstoffatome. Die aromatische Kohlenwasserstoffgruppe kann substituiert sein, insbesondere durch Alkylreste, worunter Alkylreste mit einem bis vier Kohlenstoffatomen bevorzugt sind.

In einer Ausführungsform enthält die aromatische Kohlenwasserstoffgruppe Y einen Benzolring, der substituiert sein kann.

In einer alternativen Ausführungsform enthält die aromatische Kohlenwasserstoffgruppe Y zwei kondensierte Benzolringe oder zwei Benzolringe, die über eine Alkylengruppe, wie eine Methylen oder Ethylengruppe verbrückt sind. Sowohl die Benzolringe als auch die Alkylenbrücke kann substitutiert sein, bevorzugt mit Alkylgruppen.

Die aromatische Kohlenwasserstoffgruppe ist von aromatischen Diisocyanaten abgeleitet, wobei "aromatisches Diisocyanat" bedeutet, dass die beiden Isocyanatgruppen direkt an ein aromatisches Kohlenwasserstoffgerüst gebunden sind.

Geeignete aromatische Kohlenwasserstoffgruppen sind zweiwertige Gruppen, wie sie durch Entfernung der Isocyanatgruppen aus einem aromatischen Diisocyanat erhalten werden, beispielsweise eine zweiwertige Phenylengruppe aus einem Benzoldiisocyanat, eine Methylphenylengruppe aus einem Toluoldiisocyanat (TDI) oder eine Ethylphenylengruppe aus einem Ethylbenzoldiisocyanat, eine zweiwertige Methandiphenylengruppe aus einem Methandiphenyldiisocyanat (MDI) oder eine zweiwertige Naphthylgruppe aus einem Naphthalendiisocyanat (NDI).

Besonders bevorzugt ist Y abgeleitet von 1,3-Diisocyanatobenzol, 1,4-Diisocyanatobenzol, 2,4-Diisocyanatotoluol, 2,6-Diisocyanatotoluol, 2,4'-Diphenylmethandiisocyanat, 4,4'-Diphenylmethandiisocyanat oder 1,5-Diisocyanatonaphthalin.

Hinsichtlich der Gruppe R₁ gilt das bereits oben für die Formel (I) gesagte, so dass an dieser Stelle auf die Definition oben verwiesen wird, die entsprechend auf die Formeln (V) und (VI) anzuwenden ist.

Die aliphatische C₃-C₁₀-Alkylengruppe A dient als Gerüst, an welchem die Urethanmethacrylat-Gruppen hängen, und ist eine drei- oder höherwertige C₃-C₁₀-Alkylengruppe, die linear oder verzweigt ist.

Geeignete lineare oder verzweigte aliphatische C₃-C₁₀-Alkylengruppen sind drei- oder höherwertige, bevorzugt drei- oder vierwertige Gruppen, wie sie durch Entfernung der Hydroxylgruppen aus einem tri- oder höherfunktionellen, bevorzugt tri- oder tetrafunktionellen Alkohol erhalten werden. Entsprechend geeignete Alkohole sind beispielsweise Glycerin, Trimethylolmethan, Trimethylolethan, Trimethylolpropan, Trimethylolbutan, 1,2,4-Butantriol, 1,2,3-Hexantriol, 1,2,4-Hexantriol, Pentaerythrit, Diglycerin, Triglycerin, Bis(trimethylolpropan), Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, oder Polyesterol.

Hierdurch wird erreicht, dass mehr als zwei radikalisch härtbare Gruppen, nämliche die Methacrylatgruppen, pro Verbindung enthalten sind, so dass die Verbindungen bei der Polymerisation als sogenannte Vernetzer dienen. Die Verwendung dieser Verbindungen kann aufgrund der weiteren Methacrylatgruppe zu einer Quervernetzung der gebildeten Polymerketten führen, so sich ein vernetztes Polymernetzwerk ausbilden kann.

Dementsprechend entspricht m zusammen mit n (m + n) der Wertigkeit des zur Herstellung der erfindungsgemäßen Verbindung verwendeten Alkohols. Folglich ist m = 3 wenn ein trifunktioneller Alkohol und m + n = 3 oder 4 wenn ein tetrafunktioneller Alkohol verwendet wird.

Durch die Steuerung der Reaktionsbedingungen ist es möglich, dass nicht alle Hydroxylgruppen mit einer Isocyanatgruppe reagieren, so dass in der erhaltenen Verbindung noch freie Hydroxylgruppen vorhanden sind. Diese Verbindungen sind ebenfalls vom Umfang der Erfindung umfasst.

Hieraus resultieren Verbindungen der allgemeinen Formel (I), in denen n > 0 ist.

Werden alle Hydroxylgruppen umgesetzt, so dass in der erhaltenen Verbindung keine freien Hydroxylgruppen mehr vorhanden sind, entspricht m alleine (n = 0) der Wertigkeit des zur Herstellung der erfindungsgemäßen Verbindung verwendeten Alkohols. Folglich ist m = 3 wenn ein trifunktioneller Alkohol und m = 4 wenn ein tetrafunktioneller Alkohol verwendet wird.

Hieraus resultieren Verbindungen der allgemeinen Formel (I), in denen n = 0 ist, wie in Formel (II) gezeigt.

Bevorzugt ist n = 0, 1 oder 2 und m = 3, 4 oder 5, weiter bevorzugt ist n = 0 oder 1 und m = 3 oder 4 und besonders bevorzugt ist n = 0 und m = 3 oder 4.

Bevorzugt ist n + m = 3, 4, 5 oder 6, besonders bevorzugt 3,4 oder 5 und ganz bevorzugt ist n + m = 3 oder 4, mit der Maßgabe, dass m ≥ 3 ist.

Bevorzugt ist n = 0, 1 oder 2 und m = 2, 3 oder 4 mit n + m = 3, 4, 5 oder 6, weiter bevorzugt ist n = 0 oder 1 und m = 2, 3 oder 4 mit n + m = 3, 4 oder 5 und besonders bevorzugt ist n = 0 und m = 3 oder 4 (n + m = 3 oder 4), jeweils mit der Maßgabe, dass m ≥ 3 ist.

Die verzweigten Urethanmethacrylat-Verbindungen werden durch Umsetzen von einem Hydroxyalkylmethacrylat mit einem aromatischen Diisocyanat und einem mindestens trifunktionellen Alkohol erhalten. Das Hydroxyalkylmethacrylat, das aromatische Diisocyanat und der Alkohol werden in Anwesenheit eines Katalysators und eines Inhibitors, welcher dazu dient, die gebildete Verbindung zu stabilisieren, zur Reaktion gebracht.

Geeignete Hydroxyalkylmethacrylate und aromatische Diisocyanate sind solche wie sie oben in Zusammenhang mit den Verbindungen der Formel (I) erwähnt werden. Daher wird auf die dortigen Ausführungen verwiesen die entsprechend für die Verbindungen der Formeln (V) und (VI) gelten.

Geeignete Alkohole sind tri- oder höherfunktionelle Alkohole, ausgewählt aus C₃-C₁₀-Alkoholen, bevorzugt C₃-C₄-Alkoholen mit den Hydroxylgruppen an den Enden und/oder entlang der Alkylkette. Beispiele für Alkohole mit mindestens drei OH-Gruppen umfassen Glycerin, Trimethylolmethan, Trimethylolethan, Trimethylolpropan, Trimethylolbutan, 1,2,4-Butantriol, 1,2,3-Hexantriol, 1,2,4-Hexantriol, Pentaerythrit, Diglycerin, Triglycerin, Bis(trimethylolpropan), Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, oder Polyesterol, worunter Glycerin, Trimethylolpropan und Pentaerythrit bevorzugt sind.

Bevorzugt sind die erfindungsgemäßen Verbindungen der Formeln (V) und (VI) Verbindungen der allgemeinen Formel (Va), (Vb), (VIa) oder (Vlb): 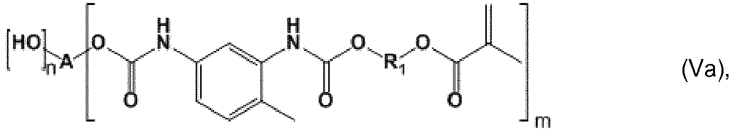 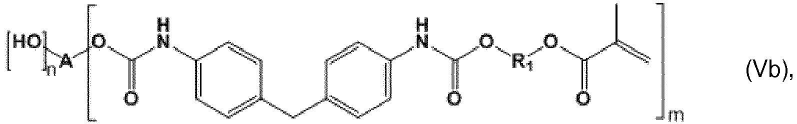 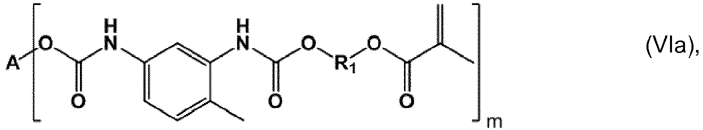 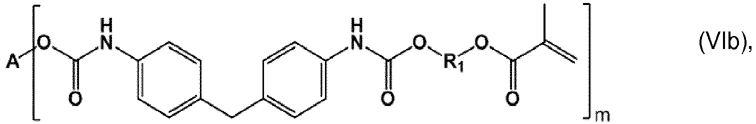 worin jeweils A, R₁, n und m wie oben für Formeln (V) und (VI) definiert sind.

Besonders bevorzugte erfindungsgemäße Verbindungen sind Verbindungen der Formel (Vlc) und (Vld):

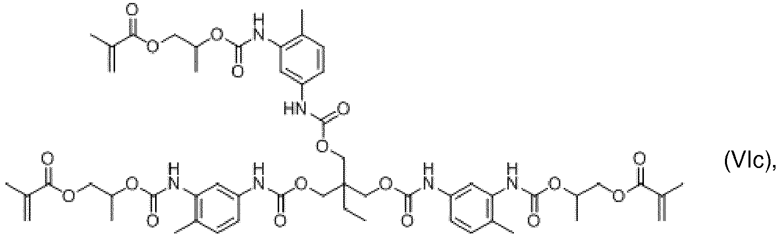

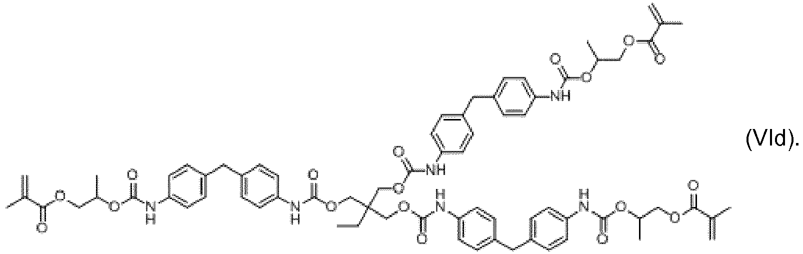

Die in den Formeln (Va), (Vb) und (VIa) bis (VId) gezeigten Strukturen sollen die erfindungsgemäßen Verbindungen nur beispielhaft darstellen, da die zu deren Herstellung verwendeten aromatischen Diisocyanate sowohl als isomerenreine Verbindungen als auch als Gemische der unterschiedlichen Isomere, in jeweils unterschiedlicher Zusammensetzung, d.h. in unterschiedlichen Mengenverhältnissen, eingesetzt werden können. Die gezeigten Strukturen sind daher nicht als einschränkend auszulegen.

Folglich können die erfindungsgemäßen Verbindungen als isomerenreine Verbindungen oder als Isomerengemische, in unterschiedlicher Zusammensetzung vorliegen, die gegebenenfalls in üblicher Art und Weise getrennt werden können. Sowohl die reinen Isomeren als auch die Isomerengemische sind Gegenstand der vorliegenden Erfindung. Gemische mit unterschiedlichen Anteilen an isomeren Verbindungen sind ebenfalls Gegenstand der Erfindung.

Ferner können je nach Reaktionsführung, insbesondere durch das Verhältnis von Isocyanatgruppen aus dem Diisocyanat zu Hydroxylgruppen aus dem tri- oder höherfunktionellen Alkohol die Oligomere der Verbindungen der Formeln (V) und (VI) gebildet werden, so dass die Verbindungen eine Oligomerenverteilung haben. Gezeigt wird jeweils das Oligomer mit einer Wiederholungseinheit. Die Darstellung mit einer Wiederholungseinheit ist jedoch nicht einschränkend auszulegen, sondern dient der leichteren Darstellung. Die nicht gezeigten Oligomere, sofern diese vorhanden sind, werden auch von der Erfindung umfasst.

Die verzweigten aromatischen Urethanmethacrylat-Verbindungen dienen vor allem dazu die Lastwerte der ausgehärteten Reaktivharzkomponenten positiv zu beeinflussen, insbesondere zu erhöhen. Durch die zusätzliche Methacrylatgruppe verglichen mit den Verbindungen der Formel (I) wird eine Verzweigungsstelle bereitgestellt, so dass ein höherer Verzweigungsgrad erreicht werden kann. Hierdurch wird die Möglichkeit der höheren Quervernetzung geschaffen. Es wird erwartet, dass sich ein höher verzweigtes Polymernetzwerk bildet. Dies ist besonders dann vorteilhaft, wenn auf tri- oder multi-funktionelle Reaktivverdünner verzichtet aber die Möglichkeit der höheren Quervernetzung beibehalten werden soll.

### Niedrigviskose Epoxymethacrylat-Verbindungen

Erfindungsgemäß kann die Mischung als eine radikalisch härtbare Verbindung eine niedrigviskose verzweigte Epoxymethacrylat-Verbindung der allgemeinen Formel (VII) sein 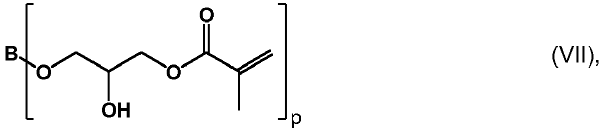 worin
B eine lineare, verzweigte oder cyclische aliphatische Kohlenwasserstoffgruppe oder eine aromatische Kohlenwasserstoffgruppe ist, und
p eine ganze Zahl größer oder gleich 2 ist.

### (i) zweiwertige lineare, verzweigte oder cyclische aliphatische Kohlenwasserstoffgruppe B

Die Kohlenwasserstoffgruppe B kann eine zweiwertige lineare, verzweigte oder cyclische aliphatische Kohlenwasserstoffgruppe sein, die substituiert sein kann, insbesondere hydroxysubstituiert.

Vorzugsweise ist die aliphatische Kohlenwasserstoffgruppe eine lineare oder verzweigte Alkylengruppe, die gegebenenfalls hydroxysubstituiert ist.

Die Alkylengruppe ist vorzugsweise eine C₂-C₁₂-Alkylengruppe, bevorzugt eine C₂-C₈-Alkylengruppe, noch stärker bevorzugt eine C₂-C₆-Alkylengruppe. Die Alkylengruppe kann substituiert sein, insbesondere durch einen Alkylrest.

Geeignete Alkylengruppen sind n-wertige Gruppen, wie sie durch Entfernung der Glycidylgruppen aus einer aliphatischen Polyglycidylverbindung erhalten werden, wobei n für die Anzahl der Glycidylgruppen (Wertigkeit) in der Polyglycidylverbindung steht. m entspricht dabei der Anzahl der Glycidylgruppen in der Polyglycidylverbindung und damit der Wertigkeit der Polyglycidylverbindung. Die Polyglycidylverbindung sind von Polyalkoholen abgeleitet, bei denen die Hydroxylgruppen ganz oder teilweise durch Umsetzen mit Epihalogenhydrin in eine Glycidylethergruppe umgewandelt werden. Geeignete Polyalkohole sind beispielsweise 1,2-Ethandiol, 1,2-Propandiol, 1,3-Propandiol, 1,3-Butandiol, 1,4-Butandiol, 1,6-Hexandiol, Glycerin, Neopentylglykol, Ethylenglykol, Cyclohexandimethanol, Trimethylolpropan, Pentaerythrit und Polyethylenglykole.

### (ii) zweiwertige aromatische Kohlenwasserstoffgruppe B

Die Kohlenwasserstoffgruppe B kann eine zweiwertige aromatische Kohlenwasserstoffgruppe sein, bevorzugt eine C₆-C₂₀-Kohlenwasserstoffgruppe und weiter bevorzugt eine C₆-C₁₄-Kohlenwasserstoffgruppe, besonders bevorzugt eine C₁₃-C₁₅-Kohlenwasserstoffgruppe. Die aromatische Kohlenwasserstoffgruppe kann substituiert sein, insbesondere durch Alkylreste, worunter Alkylreste mit einem bis vier Kohlenstoffatomen bevorzugt sind.

In einer Ausführungsform enthält die aromatische Kohlenwasserstoffgruppe einen Benzolring, der substituiert sein kann.

In einer alternativen Ausführungsform enthält die aromatische Kohlenwasserstoffgruppe zwei kondensierte Benzolringe oder zwei Benzolringe, die über eine Alkylengruppe, wie eine Methylen oder Ethylengruppe verbrückt sind. Sowohl die Benzolringe als auch die Alkylenbrücke kann substitutiert sein, bevorzugt mit Alkylgruppen.

Die aromatische Kohlenwasserstoffgruppe B ist von aromatischen Diglycidylethern abgeleitet, wobei "aromatischer Diglycidylether" bedeutet, dass die beiden Glycidylethergruppen direkt an ein aromatisches Kohlenwasserstoffgerüst gebunden sind.

Geeignete aromatische Kohlenwasserstoffgruppen sind zweiwertige Gruppen, wie sie durch Entfernung der Glycidylethergruppen aus einem aromatischen Diglycidylether erhalten werden, beispielsweise eine zweiwertige Phenylengruppe aus einem Resorcindigylcidylether oder eine zweiwertige, gegebenenfalls alkylsubstituierte Methandiphenylengruppe aus einem Bisphenol-diglycidylether.

Besonders bevorzugt ist die aromatische Kohlenwasserstoffgruppe abgeleitet von 1,3-Bis(glycidyloxy)benzol, Bisphenol-A-diglycidylether oder Bisphenol-F-diglycidylether.

p ist bevorzugt eine ganze Zahl zwischen 2 und 5, stärker bevorzugt zwischen 2 und 4, noch stärker bevorzugt 2 oder 3.

Wenn B eine zweiwertige aromatische Kohlenwasserstoffgruppe B ist, dann ist besonders bevorzugt p = 2.

Ist p gleich 2, so weist die Verbindung der Formel 1 zwei endständige Methacrylatgruppen auf, die radikalisch polymerisieren können.

Ist p größer als 2, so weist die Verbindung der Formel 1 mehr als zwei endständige Methacrylatgruppen auf, die radikalisch polymerisieren können. Durch die zusätzliche Methacrylatgruppe, etwa einer dritten Methacrylatgruppe wenn p gleich 3 ist, wird eine Verzweigungsstelle bereitgestellt, so dass ein höherer Verzweigungsgrad erreicht werden kann. Hierdurch wird die Möglichkeit der höheren Quervernetzung geschaffen. Es wird erwartet, dass sich ein höher verzweigtes Polymernetzwerk bildet. Dies ist besonders dann vorteilhaft, wenn auf tri- oder multi-funktionelle Reaktivverdünner verzichtet aber die Möglichkeit einer höheren Quervernetzung beibehalten werden soll.

Bevorzugte erfindungsgemäße Verbindungen mit zwei Methacrylatgruppen haben die Struktur (VIIIa), (VIIIb), (VIIIc), (VIIId) oder (VIIIe):

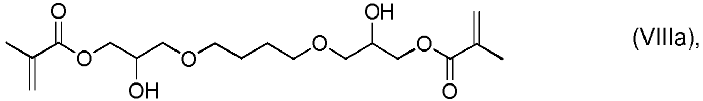

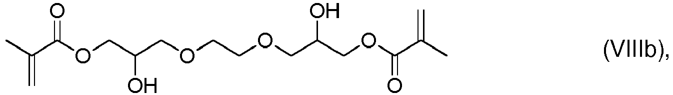

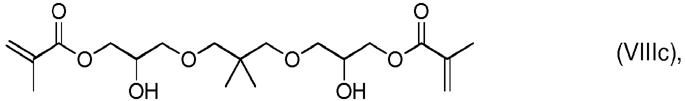

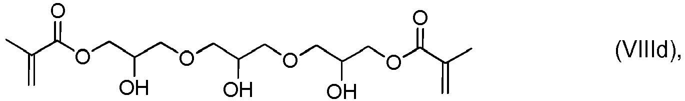

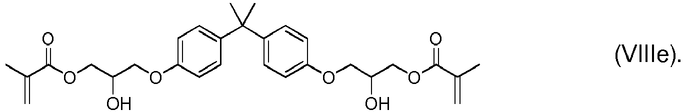

Eine bevorzugte erfindungsgemäße Verbindung mit drei Methacrylatgruppen hat die Struktur (IX):

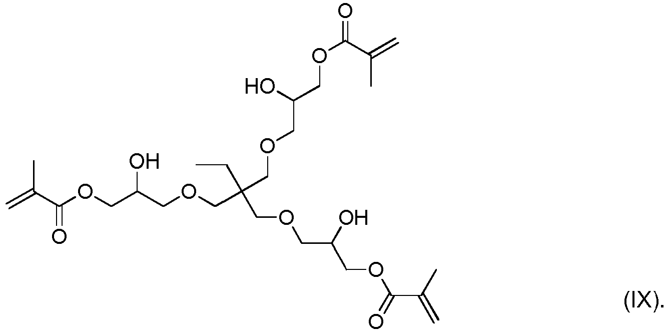

Die niedrigviskosen Epoxymethacrylat-Verbindungen können durch Umsetzen von Methacrylsäure mit einem multifunktionellen Glycidylether erhalten werden. Zweckmäßig werden pro Epoxidäquivalent 0,7 bis 1,2 Carboxyläquivalente Methacrylsäure eingesetzt. Die Epoxidgruppen aufweisenden organischen Verbindungen und die Methacrylsäure werden dabei bevorzugt in etwa stöchiometrischen Verhältnissen eingesetzt, d.h. pro Epoxidäquivalent der organischen Verbindung wird etwa ein Äquivalent Methacrylsäure eingesetzt. Der Gylcidylether und die Methacrylsäure werden in Anwesenheit eines Katalysators und gegebenenfalls eines Inhibitors, welcher dazu dient, das gebildete Backbone-Harz zu stabilisieren zur Reaktion gebracht. Hierbei entsteht das Backbone-Harz.

Geeignete Glycidylether sind aliphatische oder alicyclische Glycidylether aus Polyolen (mehrwertige Alkohole) mit einer Epoxidfunktionalität von mindestens 2, wie beispielsweise 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE).

Darüberhinaus können niedrigviskose Glycidylether verwendet werden, die in EpoxyAmin-Systemen als Reaktivverdünner eingesetzt werden können und die eine Epoxydfunktionalität von mindestens zwei haben.

Die niedrigviskosen Epoxymethacrylat-Verbindungen dienen vor allem dazu, die Viskosität einer diese Verbindungen enthaltenden Reaktivharzes und die Auspresskräfte einer diese Verbindungen enthaltenden Reaktivharzkomponente zu erniedrigen. Sie wirken sich also positiv auf die Verarbeitbarkeit der Reaktivharzkomponenten insbesondere eines diese umfassenden Reaktivharz-Systems aus. Ferner kann durch deren Verwendung der Anteil an Reaktivverdünner reduziert werden.

Wenn p in Formel (VI) gleich 3 oder größer ist, wird durch die zusätzliche Methacrylatgruppe eine Verzweigungsstelle bereitgestellt, so dass ein höherer Verzweigungsgrad erreicht werden kann. Hierdurch wird die Möglichkeit der höheren Quervernetzung geschaffen. Es wird erwartet, dass sich ein höher verzweigtes Polymernetzwerk bildet. Dies ist besonders dann vorteilhaft, wenn auf tri- oder multi-funktionelle Reaktivverdünner verzichtet aber die Möglichkeit einer höheren Quervernetzung beibehalten werden soll.

Für den Fall, dass bei der Herstellung aller oben beschriebenen Verbindungen für die erfindungsgemäße Mischung nicht alle Isocyanat- bzw. Glycidylgruppen umgesetzt werden oder ein Teil der Isocyanat- bzw. Glycidylgruppen vor der Reaktion etwa durch eine Nebenreaktion in andere Gruppen umgewandelt werden, werden Verbindungen erhalten, die entweder als Hauptverbindungen oder als Verunreinigungen in den Reaktionsharz-Masterbatches enthalten sein können. Diese Verbindungen sind, sofern sie für die erfindungsgemäßen Zwecke verwendet werden können auch von der Erfindung umfasst.

### Erfindungsgemäße Mischung

Erfindungsgemäß umfasst die Mischung mindestens zwei oben beschrieben radikalisch härtbare Verbindungen. Dabei ist jegliche Mischung möglich, d.h. die Verbindungen können frei aus den obigen Formeln (I), (V) und (VII) ausgewählt werden.

Die radikalisch härtbaren Verbindungen können ausschließlich aus Verbindungen der allgemeinen Formel (I) ausgewählt werden. Dabei können die Verbindungen ausschließlich aromatischer Natur sein, was im Sinne der Erfindung bedeutet, dass die Verbindungen aus Verbindungen der allgemeinen Formeln (I) ausgewählt werden, in der X eine zweiwertige aromatische oder eine zweiwertige aromatisch-aliphatische Kohlenwasserstoffgruppe ist. Entsprechend ist es möglich, dass die Verbindungen ausschließlich aliphatischer Natur sind, was im Sinne der Erfindung bedeutet, dass die Verbindungen aus Verbindungen der allgemeinen Formeln (I) ausgewählt werden, in der X eine zweiwertige lineare, verzweigte oder cyclische aliphatische Kohlenwasserstoffgruppe ist. Ferner ist es möglich, dass die Verbindungen gemischter Natur sind, wobei eine Verbindung aromatischer Natur und eine Verbindung aliphatischer Natur ist.

Die radikalisch härtbaren Verbindungen können in einer Alternative auch ausschließlich verzweigte aromatische Urethanmethacrylat-Verbindungen sein und aus Verbindungen der allgemeinen Formel (V) ausgewählt werden. In diesem Fall kann ein höherer Anteil an Reaktivverdünner nötig werden, da diese Verbindungen bereits eine relativ hohe Viskosität haben, verglichen mit den anderen hierin beschriebenen Verbindungen.

Die radikalisch härtbaren Verbindungen können in einer weiteren Alternative auch ausschließlich niedrigviskose Epoxymethacrylat-Verbindungen sein und aus Verbindungen der allgemeinen Formel (VII) ausgewählt werden. Dabei können die Verbindungen ausschließlich linearer Natur sein, was im Sinne der Erfindung bedeutet, dass die Verbindungen aus Verbindungen der allgemeinen Formeln (VII) ausgewählt werden, in der p gleich zwei ist, so dass die Verbindungen zwei Methacrylatgruppen tragen. Entsprechend ist es möglich, dass die Verbindungen ausschließlich verzweigter Natur sind, was im Sinne der Erfindung bedeutet, dass die Verbindungen aus Verbindungen der allgemeinen Formeln (VII) ausgewählt werden, in der p größer als zwei ist, so dass die Verbindungen somit drei oder mehr Methacrylatgruppen tragen. Ferner ist es möglich, dass die Verbindungen gemischter Natur sind, wobei eine Verbindung linearer Natur und eine Verbindung verzweigter Natur ist. Ferner können die Verbindungen ausschließlich aromatischer Natur sein, was im Sinne der Erfindung bedeutet, dass die Verbindungen aus Verbindungen der allgemeinen Formeln (VII) ausgewählt werden, in der B eine zweiwertige aromatische Kohlenwasserstoffgruppe ist. Entsprechend ist es möglich, dass die Verbindungen ausschließlich aliphatischer Natur sind, was im Sinne der Erfindung bedeutet, dass die Verbindungen aus Verbindungen der allgemeinen Formeln (VII) ausgewählt werden, in der B eine zweiwertige lineare, verzweigte oder cyclische aliphatische Kohlenwasserstoffgruppe ist. Ferner ist es möglich, dass die Verbindungen gemischter Natur sind, wobei eine Verbindung aromatischer Natur und eine Verbindung aliphatischer Natur ist.

Daneben sind als Mischungen jegliche Kombination aus radikalisch härtbaren Verbindungen aus den obigen Formeln (I), (V) und (VII) möglich. Beispielsweise ist eine Verbindung aus Verbindungen der obigen Formel (I) ausgewählt und die weitere Verbindung aus Verbindungen der obigen Formeln (V) oder (VII). In einem weiteren Beispiel ist eine Verbindung aus Verbindungen der obigen Formel (V) ausgewählt und die weitere Verbindung aus Verbindungen der obigen Formeln (VII).

Die erfindungsgemäße Mischung kann auch mehr als zwei der oben beschriebenen radikalisch härtbaren Verbindungen enthalten, wobei auch hier keine Einschränkung hinsichtlich der Kombination der Verbindung besteht. Daher gilt das bereits für eine Mischung aus zwei radikalisch härtbaren Verbindungen gesagte entsprechend.

Die Auswahl der Verbindungen für die Mischung erfolgt anhand der gewünschten Eigenschaften des Reaktivharzes oder der Reaktivharzkomponente, in denen die Mischung verwendet werden soll.

Ist dabei eine Erniedrigung der Viskosität eines Reaktivharzes und somit eine Erniedrigung der Auspresskräfte einer Reaktivharzkomponente in einem Reaktivharz-System vorrangig, so werden die Verbindungen bevorzugt unter niedrigviskosen Verbindungen ausgewählt, bzw. wird der Anteil an niedrigviskosen Verbindungen möglichst hochgehalten.

Ist jedoch eine Erhöhung der Lastwerte einer ausgehärteten Masse auf Basis einer die Mischung enthaltenden Reaktivharzkomponente vorrangig, so werden die Verbindungen bevorzugt unter niedrigviskosen oder verzweigten aromatischen Urethanmethacrylat-Verbindungen und/oder unter verzweigten Epoxymethacrylat-Verbindungen ausgewählt.

Durch die Erfindung wird es auch möglich, sowohl eine Erniedrigung der Viskosität eines Reaktivharzes und eine Erniedrigung der Auspresskräfte einer Reaktivharzkomponente in einem Reaktivharz-System als auch eine Erhöhung der Lastwerte einer ausgehärteten Masse auf Basis einer die Mischung enthaltenden Reaktivharzkomponente zu erreichen.

Diesbezüglich wird auf die oben beschriebenen Eigenschaften, die den verschiedenen Verbindungstypen zugeordnet werden, verwiesen, wobei die Beschreibungen nicht einschränkend auszulegen sind, sondern als Orientierung für deren Einsatzbereich dienen sollen.

Der Fachmann weiß oder kann einfach ermitteln, welche Verbindungen für eine Mischung ausgewählt werden müssen und welches Mischungsverhältnis gewählt werden muss, um die gewünschten Anwendung und die gewünschte Eigenschaft einer Formulierung, in der die Mischung verwendet werden soll, zu adressieren.

Eine bevorzugte erfindungsgemäße Mischung umfasst mindestens zwei Verbindung, die aus der Gruppe bestehend aus Verbindungen der Formeln (IIa), (IIb), (IIIa), (IIIb), (IIIc), (IVa), (IVb), (VIa), (VIb) und (VII) ausgewählt sind.

Eine weiter bevorzugte erfindungsgemäße Mischung umfasst mindestens zwei Verbindung, die aus der Gruppe bestehend aus Verbindungen der Formeln (IIc), (IId), (IIId), (IIIe), (IIIf), (IVc), (IVd), (VIc), (VId), (VIIIa), (VIIIb), (VIIIc), (VIIId), (VIIIe) und (IX) ausgewählt sind.

Besonders bevorzugte erfindungsgemäße Mischungen sind folgende Mischungen:
- eine Mischung umfassend Verbindung (IIb) und (IIIa)
- eine Mischung umfassend Verbindung (IIa) und (IIb)
- eine Mischung umfassend Verbindung (VIIIa) und (VIIIe)
- eine Mischung umfassend Verbindung (IIb) und (VIIIa)
- eine Mischung umfassend Verbindung (IIIa) und (VIIIe)
- eine Mischung aus Verbindung (IIb), (IIIa) und (VIIIe)
- eine Mischung aus Verbindung (IIb), (VIIIa) und (VIIIe).

### Reaktivharze

Die erfindungsgemäßen Mischungen werden zur Herstellung eines Reaktivharzes verwendet. Hierdurch kann die Viskosität des so hergestellten Reaktivharzes verringert werden, ohne dass ein hoher Anteil an Reaktivverdünnern erforderlich wird, wie dies bei den handelsüblichen Massen der Fall ist und ohne dass die mit einem hohen Anteil an Reaktivverdünnern einhergehenden Probleme, wie etwa die Verringerung der erreichbaren Lastwerte der ausgehärteten Masse, auftreten. Damit kann eine Erniedrigung der Auspresskräfte eines Reaktivharz-Systems, welches die erfindungsgemäßen Verbindungen enthält, erreicht werden. Ferner können durch die Verwendung der erfindungsgemäßen Mischung die Lastwerte einer ausgehärteten Befestigungsmasse erhöht werden.

Das erfindungsgemäße Reaktivharz enthält eine Mischung aus mindestens zwei radikalisch härtbaren Verbindungen wie oben beschrieben als Mischung von Backbone-Harzen, einen Inhibitor, einen Beschleuniger und gegebenenfalls einen Reaktivverdünner. Da die Backbone-Harze nach deren Herstellung typischerweise ohne Isolierung für die Herstellung des Reaktivharzes verwendet wird, sind in der Regel auch noch die neben den Backbone-Harzen in den jeweiligen Reaktivharz-Masterbatches enthaltenen weiteren Bestandteile im Reaktivharz vorhanden, wie etwa einen Katalysator.

Der Anteil der Mischung, unabhängig davon, ob die Mischung zwei oder mehr radikalisch härtbare Verbindungen enthält, in dem erfindungsgemäßen Reaktivharz beträgt von 25 Gew.-% bis 65 Gew.-%, vorzugsweise von 30 Gew.-% bis 45 Gew.-%, besonders bevorzugt von 35 Gew.-% bis 40 Gew.-%, ganz besonders bevorzugt von 33 Gew.-% bis 40 Gew.-% bezogen auf das Gesamtgewicht des Reaktivharzes.

Als Inhibitor sind die für radikalisch polymerisierbare Verbindungen üblicherweise verwendeten stabilen Radikale, wie *N*-Oxyl-Radikale geeignet, wie sie dem Fachmann bekannt sind.

Der Inhibitor kann zum einen dazu dienen, eine unerwünschte radikalische Polymerisation während der Synthese des Backbone-Harzes oder der Lagerung des Reaktivharzes und der Reaktivharzkomponente zu unterdrücken. Er kann auch dazu dienen - gegebenenfalls zusätzlich - die radikalische Polymerisation des Backbone-Harzes nach Zugabe des Initiators zeitlich zu verzögern und dadurch die Verarbeitungszeit des Reaktivharzes oder der Reaktivharzkomponente nach dem Mischen mit dem Härtungsmittel einzustellen.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Neben dem Nitroxylradikal vom Typ Piperidinyl-*N*-oxyl oder Tetrahydropyrrol-*N*-oxyl können sowohl zur weiteren Stabilisierung des Reaktivharzes oder der das Reaktivharz enthaltenden Reaktivharzkomponente (A) oder anderer das Reaktivharz enthaltender Zusammensetzungen als auch zur Einstellung der Harzreaktivität ein oder mehrere weitere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese weiteren Inhibitoren unter phenolischen Verbindungen und nicht-phenolischen Verbindungen und/oder Phenothiazinen, ausgewählt.

Als phenolische Inhibitoren, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-oxyl-Radikale, jedoch nicht vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Ferner können in para-Stellung zur Hydroxylgruppe substituierte Pyrimidinol- oder Pyridinol-Verbindungen, wie sie in der Patentschrift DE 102011 077 248 B1 beschrieben sind, als Inhibitoren eingesetzt werden.

Bevorzugt sind die weiteren Inhibitoren ausgewählt aus der Gruppe der Catechole, Catecholderivate, Phenothiazine, tert-Butylcatechol, Tempol oder ein Gemisch von Zwei oder mehr davon. Besonders bevorzugt sind die weiteren Inhibitoren ausgewählt aus der Gruppe der Catechole und Phenothiazine. Ganz besonders bevorzugt sind die in den Beispielen verwendeten weiteren Inhibitoren, bevorzugt etwa in den in den Beispielen angegebenen Mengen.

Die weiteren Inhibitoren können, abhängig von den gewünschten Eigenschaften des Reaktivharzes, entweder alleine oder als Kombination von zweien oder mehreren davon verwendet werden.

Der Inhibitor oder die Inhibitormischung wird zugesetzt in der Fachwelt bekannten üblichen Mengen, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz), noch stärker bevorzugt von etwa 0,2 bis etwa 0,5 Gew.-% (bezogen auf das Reaktivharz).

Die hierin beschriebenen radikalisch härtbaren Verbindungen, insbesondere bei der Verwendung in Reaktivharzen und Reaktivharzkomponenten für die chemische Befestigung und das bauliche Kleben, werden im Allgemeinen durch Peroxide als Härtungsmittel gehärtet. Die Peroxide werden bevorzugt durch einen Beschleuniger initiiert, damit auch bei niedrigen Anwendungstemperaturen eine Polymerisation stattfindet. Der Beschleuniger wird bereits dem Reaktivharz zugegeben.

Geeignete Beschleuniger, die dem Fachmann bekannt sind, sind beispielsweise Amine, bevorzugt tertiäre Amine und/oder Metallsalze.

Geeignete Amine sind unter folgenden Verbindungen ausgewählt: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1 -diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Als Beschleuniger wird erfindungsgemäß Di-iso-propanol-p-toluidin oder N,N-Bis(2-hydroxyethyl)-m-toluidin eingesetzt.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan. Besonders bevorzugt ist Di-iso-propanol-p-toluidin.

Polymere Amine, wie solche die durch Polykondensation von N,N-Bis(hydroxylalkyl)anilin mit Dicarbonsäuren oder durch Polyaddition von Ethylenoxid oder anderen Epoxiden und diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylate. Weitere geeignete Metallsalze sind die weiter oben beschriebenen Zinn-Katalysatoren.

Sofern ein Beschleuniger verwendet wird, wird er in einer Menge von 0,01 bis 10 Gew.-%, bevorzugt 0,2 bis 5 Gew.-%, bezogen auf das Reaktivharz, eingesetzt.

Das Reaktivharz kann noch einen Reaktivverdünner enthalten, sofern dies erforderlich wird.

Dabei kann ein gegebenenfalls bei der Herstellung der Urethanmethacrylat-Verbindungen eingesetzte Überschuss an hydroxyfunktionalisiertem (Meth)acrylat als Reaktivverdünner fungieren. Daneben, wenn das hydroxyfunktionalisierte (Meth)acrylat in etwa äquimolaren Mengen mit der Isocyanatgruppe eingesetzt wird, oder zusätzlich, falls ein Überschuss an hydroxyfunktionalisiertem (Meth)acrylat verwendet wird, können weitere Reaktivverdünner dem Reaktionsgemisch zugegeben werden, welche strukturell von dem hydroxyfunktionalisierten (Meth)acrylat verschieden sind.

Geeignete Reaktivverdünner sind niederviskose, radikalisch co-polymerisierbare Verbindungen, bevorzugt kennzeichnungsfreie Verbindungen, die zugegeben werden um unter anderem die Viskosität des Urethanmethacrylats bzw. der Vorstufen bei dessen Herstellung anzupassen, falls erforderlich.

Geeignete Reaktivverdünner sind in den Anmeldungen EP 1 935 860 A1 und DE 195 31 649 A1 beschrieben. Vorzugsweise enthält das Reaktivharz (die Harzmischung) als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-Hydroxypropyl(meth)acrylat, 3-Hydroxypropyl(meth)acrylat, 1,2-Ethandioldi(meth)acrylat, 1,3-Propandioldimethacrylat, 1,3-Butandioldi(meth)acrylat, 1,4-Butandioldi(meth)acrylat, TrimethyIoIpropantri(meth)acrylat, Phenylethyl(meth)acrylat, Tetrahydrofurfuryl(meth)acrylat, Ethyltriglykol(meth)acrylat, *N,N-*Dimethylaminoethyl(meth)acηlat, N,N-Dimethylaminomethyl(meth)acrylat, N,N-Diethylaminoethyl(meth)acrylat, Acetoacetoxyethyl(meth)acrylat, Isobornyl(meth)acrylat, 2-Ethylhexyl(meth)acrylat, tert-Butylcyclohexyl(meth)acrylat, Benzyl(meth)acrylat, Methyl(meth)acrylat, n-Butyl(meth)acrylat, iso-Butyl(meth)acrylat, 3-Trimethoxysilylpropyl(meth)acrylat, Isodecyl(meth)acrylat, Diethylenglykoldi(meth)acrylat, Triethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1,0.2.6-decan, 3-(Meth)acryloyl-oxymethyl-tricylo-5.2.1,0.2.6-decan, 3-(Meth)cyclopentadienyl(meth)acrylat, und Decalyl-2-(meth)acrylat; PEG-di(meth)acrylat wie PEG200-di(meth)acrylat, Tetraehtylenglykoldi(meth)acrylat, Solketal(meth)acrylat, Cyclohexyl(meth)acrylat, Phenoxyethyldi(meth)acrylat, 2-Phenoxyethyl(meth)acrylat, Hexandiol-1,6-di(meth)acrylat, 1,2-Butandioldi(meth)acrylat, Methoxyethyl(meth)acrylat, Butyldiglykol(meth)acrylat, tert-Butyl(meth)acrylat und Norbornyl(meth)acrylat. Methacrylate sind gegenüber Acrylaten bevorzugt.

Besonders bevorzugt sind 2- und 3-Hydroxypropylmethacrylat, 1,2-Ethandioldimethacrylat, 1,4-Butandioldimethacrylat, 1,3-Butandioldimethacrylat, Glyceroldimethacrylat, Trimethylolpropantrimethacrylat, Acetoacetoxyethylmethacrylat, Isobornylmethacrylat, Bisphenol-A-dimethacrylat, ethoxylierte Bisphenol-A-methacrylate wie E2BADMA oder E3BADMA, Trimethylcyclohexylmethacrylat, 2-Hydroxyethylmethacrylat, PEG200-dimethacrylat und Norbornylmethacrylat und ganz besonders bevorzugt sind ein Gemisch aus 2- und 3-Hydroxypropylmethacrylat und 1,4-Butandioldimethacrylat oder eine Mischung aus diesen drei Methacrylaten.

Am bevorzugtesten ist ein Gemisch aus 2- und 3-Hydroxypropylmethacrylat. Grundsätzlich können auch andere übliche radikalisch polymerisierbare Verbindungen, allein oder im Gemisch mit den (Meth)acrylsäureestern, als Reaktivverdünner eingesetzt werden, z. B. Methacrylsäure, Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Der bzw. die Reaktivverdünner wird bzw. werden in einer Menge bis zu 65 Gew.-%, vorzugsweise bis zu 60 Gew.-%, weiter bevorzugt bis zu 55 Gew.-%, besonders bevorzugt in Mengen unter 50 Gew.-%, bezogen auf das Reaktivharz, zugegeben werden.

Ein Beispielhaftes Reaktivharz umfasst eine Mischung aus einer Verbindungen der obigen Formel (I) und einer Verbindung der obigen Formeln (V) oder (VII) und mindestens einen Inhibitor, mindestens einen Beschleuniger und mindestens einen Reaktivverdünner.

In einem weiteren Beispiel umfasst ein Reaktivharz eine Mischung aus einer Verbindung der obigen Formel (V) und einer Verbindung der obigen Formeln (VII) und mindestens einen Inhibitor, mindestens einen Beschleuniger und mindestens einen Reaktivverdünner.

In einem weiteren Beispiel umfasst ein Reaktivharz eine Mischung, die mindestens zwei Verbindung, die aus der Gruppe bestehend aus Verbindungen der Formeln (IIa), (IIb), (IIIa), (IIIb), (IIIc), (IVa), (IVb), (VIa), (VIb) und (VII) ausgewählt sind, umfasst, und ein stabiles Nitroxylradikal als Inhibitor, ein substituiertes Toluidin als Beschleuniger und zwei Reaktivverdünner.

In einem weiteren Beispiel umfasst ein Reaktivharz eine Mischung, die mindestens zwei Verbindung, die aus der Gruppe bestehend aus Verbindungen der Formeln (IIc), (IId), (IIId), (IIIe), (IIIf), (IVc), (IVd), (VIc), (VId), (VIIIa), (VIIIb), (VIIIc), (VIIId), (VIIIe) und (IX) ausgewählt sind, umfasst, und ein stabiles Nitroxylradikal als Inhibitor, ein substituiertes Toluidin als Beschleuniger und zwei Reaktivverdünner.

In einem weiteren Beispiel umfasst ein Reaktivharz eine Mischung aus den Verbindungen der Formeln (IIb) und (IIIa), oder (IIa) und (IIb) oder (VIIIa) und (VIIIe) oder (IIb) und (VIIIa) oder (IIIa) und (VIIIe), oder (IIb), (IIIa) und (VIIIe), oder (IIb), (VIIIa) und (Vllle) und 4-Hydroxy-2,2,6,6-tetramethyl-piperidinyl-1-oxyl (TEMPOL) als Inhibitor, Di-isopropanol-p-toluidin als Beschleuniger und eine Mischung aus Hydroxypropylmethacrylat (HPMA) und 1,4-Butandioldimethacrylat (BDDMA) als Reaktivverdünner.

### Reaktivharzkomponenten

Ein erfindungsgemäßes Reaktivharz weist, aufgrund der niedrigviskosen Mischung von radikalisch härtbaren Verbindung, eine besonders niedrige dynamische Viskosität auf, so dass es möglich wird, eine Reaktivharzkomponente für ein Reaktivharz-System herzustellen, welche bei Anwendungstemperaturen unter 10°C, vorzugsweise bei 0°C wesentlich niedrigere Auspresskräfte zeigt als bei den herkömmlichen Systemen, ohne die dafür bisher benötigten hohen Anteile an Reaktivverdünnern.

Enthält die erfindungsgemäße Mischung eine verzweigte radikalisch härtbare Verbindung als Backbone-Harz-Bestandteil, hat ein derartiges Reaktivharz die Fähigkeit ein Polymernetzwerk zu bilden, so dass es möglich wird, eine Reaktivharzkomponente für ein Reaktivharz-System herzustellen, welche nach deren Aushärtung eine erhöhte Leistungsfähigkeit, insbesondere erhöhte Lastwerte zeigt als bei den herkömmlichen Systemen, ohne die dafür bisher benötigten Anteile an vernetzenden Reaktivverdünnern.

Ein weiterer Gegenstand der Erfindung ist daher eine Reaktivharzkomponente, welche das Reaktivharz enthält. Die Reaktivharzkomponente kann neben dem erfindungsgemäßen Reaktivharz anorganische Zuschlagstoffe, wie Füllstoffe und/oder Additive, enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe nicht überschreiten.

Zur Herstellung einer Reaktivharzkomponente für bauliche Zwecke, inbesondere die chemische Befestigung können dem erfindungsgemäßen Reaktivharz übliche Füllstoffe und/oder Additive zugegeben werden. Diese Füllstoffe sind typischerweise anorganische Füllstoffe und Additive, wie beispielsweise weiter unten beschrieben.

Der Anteil des Reaktivharzes in der Reaktivharzkomponente beträgt bevorzugt von etwa 10 bis etwa 70 Gew.-%, stärker bevorzugt von etwa 30 bis etwa 50 Gew.-%, bezogen auf die Reaktivharzkomponente. Dementsprechend beträgt der Anteil der Füllstoffe bevorzugt von etwa 90 bis etwa 30 Gew.-%, stärker bevorzugt von etwa 70 bis etwa 50 Gew.-%, bezogen auf die Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon. Ganz besonders bevorzugt ist für die Reaktivharzkomponente (A) eine Mischung aus Zement (insbesondere Aluminatzement (oft auch als Tonerdezement bezeichnet) oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Als Additive finden übliche Additive Verwendung, also Thixotropiermittel, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, weitere Stabilisatoren neben den erfindungsgemäß verwendeten Stabilisatoren und Inhibitoren, Antistatikmittel, Verdickungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Auch nicht reaktive Verdünnungsmittel (Lösungsmittel) können, vorzugsweise in einer Menge bis zu 30 Gew.-%, bezogen auf die Gesamtmenge der Reaktivharzkomponente enthalten sein, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure.

In dieser Hinsicht wird Bezug genommen auf die Anmeldungen WO 02/079341 und WO 02/079293 sowie WO 2011/128061 A1.

Der Anteil der Additive in der Reaktivharzkomponente kann bis zu etwa 5 Gew.-%, bezogen auf die Reaktivharzkomponente, betragen.

Die erfindungsgemäß hergestellten Reaktivharze sind in vielen Bereichen, bei denen sonst üblicherweise ungesättigte Polyesterharze, Vinylesterharze oder Vinylesterurethanharze Verwendung finden, einsetzbar. Sie finden üblicherweise Verwendung als Harzbestandteil in der Reaktivharzkomponente eines Reaktivharz-Systems, wie ein Mehrkomponenten-System, typischerweise ein Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und appliziert.

Gegenstand der vorliegenden Erfindung ist somit auch ein Reaktivharz-System mit einer eben beschriebenen Reaktivharzkomponente (A) und einer Härterkomponente (B), die einen Initiator für die Urethanmethacrylat-Verbindung enthält.

Der Initiator ist gewöhnlich ein Peroxid. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)O-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. PeroxidVerbindungen mit tertiären Kohlenstoffatomen, die direkt an eine -O-O-acyl- oder-OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten (Di-benzoyl)peroxid (BPO) verwendet.

Das Reaktivharz-System kann in Form eines Zwei- oder Mehrkomponenten-Systems vorliegen, bei dem die jeweiligen Komponenten räumlich getrennt voneinander vorliegen, so dass eine Reaktion (Aushärtung) der Komponenten erst nach deren Vermischen erfolgt.

Ein Zweikomponenten-Reaktivharz-System umfasst bevorzugt die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Reaktivharzsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wird hierin ein Patronensystem oder ein Injektionssystem eingesetzt, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Bei einer bevorzugten Ausführungsform des erfindungsgemäßen Reaktivharz-Systems ist das Reaktivharz-System ein Zweikomponenten-System und enthält die Reaktivharzkomponente (A) neben dem Backbone-Harz zusätzlich noch eine hydraulisch abbindende oder polykondensierbare anorganische Verbindung, insbesondere Zement, und die Härterkomponente (B) neben dem Initiator für die Polymerisation des Backbone-Harzes noch Wasser. Derartige Hybridmörtelsysteme sind ausführlich in DE 4231161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. polare, nicht nachbehandelte pyrogene Kieselsäure umfassen.

Das Volumenverhältnis von Komponente A zu Komponente B in einem Zweikomponenten-System ist vorzugsweise 3:1; 5:1 oder 7:1. Besonders bevorzugt ist ein Volumenverhältnis 3:1 oder 5:1.

In einer bevorzugten Ausführungsform enthält die Reaktivharzkomponente (A) also folglich:
- mindestens eine wie oben definierte Mischung, bevorzugt mindestens zwei Verbindungen ausgewählt unter Verbindungen der Formeln (IIa), (IIb), (IIIa), (IIIb), (IIIc), (IVa), (IVb), (VIa), (VIb) und (VII);
- mindestens einen wie oben definierten Inhibitor vom Typ Piperidinyl-*N*-oxyl oder Tetrahydropyrrol-*N*-oxyl, bevorzugt TEMPOL;
- mindestens einen wie oben definierten Beschleuniger, bevorzugt ein Toluidin-Derivat, besonders bevorzugt Di-*iso*-propanol-*p*-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
   und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat; und
- Wasser.

In einer bevorzugteren Ausführungsform enthält die Reaktivharzkomponente (A):
- mindestens eine wie oben definierte Mischung, bevorzugt mindestens zwei Verbindungen ausgewählt unter Verbindungen der Formeln (IIa), (IIb), (IIIa), (IIIb), (IIIc), (IVa), (IVb), (VIa), (VIb) und (VII);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-iso-propanol-p-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
   und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl; und
- Wasser.

In einer noch bevorzugteren Ausführungsform enthält die Reaktivharzkomponente (A):
- mindestens eine wie oben definierte Mischung, bevorzugt mindestens zwei Verbindungen ausgewählt unter Verbindungen der Formeln (IIa), (IIb), (IIIa), (IIIb), (IIIc), (IVa), (IVb), (VIa), (VIb) und (VII);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement; und
- mindestens ein Thixotropiermittel, bevorzugt pyrogene Kieselsäure,
   und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens eine wie oben definierte Mischung, bevorzugt mindestens zwei Verbindungen ausgewählt unter Verbindungen der Formeln (IIc), (IId), (IIId), (IIIe), (IIIf), (IVc), (IVd), (VIc), (VId), (VIIIa), (VIIIb), (VIIIc), (VIIId), (VIIIe) und (IX);
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement;
- mindestens ein Thixotropiermittel, bevorzugt pyrogene Kieselsäure, und
- mindestens einen weiteren Füllstoff, bevorzugt Quarzsand,
   und die Härterkomponente (B) enthält:
- Benzoylperoxid (BPO) oder tert-Butylperoxybenzoat als Initiatorfür die Initiierung der Polymerisation des Urethan(meth)acrylats;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens eine wie oben definierte Mischung, bevorzugt die Verbindungen der Formeln (IIb) und (IIIa), oder (IIa) und (IIb), oder (VIIIa) und (VIIIe), oder (IIb) und (VIIIa), oder (IIIa) und (VIIIe), oder (IIb), (IIIa) und (VIIIe) oder (IIb), (VIIIa) und (VIIIe);
- TEMPOL;
- Di-*iso*-propanol-*p*-toluidin;
- mindestens einen weiteren Inhibitor, der ausgewählt ist aus der Gruppe besteht aus Catecholen und Phenothiazinen;
- Zement;
- pyrogene Kieselsäure; und
- Quarzsand,
   und die Härterkomponente (B) enthält:
- mindestens einen Initiator für die Initiierung der Polymerisation des Urethan(meth)acrylats;
- pyrogene Kieselsäure;
- Quarzsand oder Quarzmehl und
- Wasser.

In jeder dieser Ausführungsformen enthält in einer bevorzugten Ausführungsform die Reaktivharzkomponente (A) zusätzlich noch mindestens einen Reaktivverdünner.

Die Reaktivharzkomponenten (A) und die Härterkomponenten (B) in jeder dieser Ausführungsformen sind beliebig miteinander kombinierbar.

Ein solches Reaktivharz-System findet vor allem im Baubereich Verwendung (bauliche Zwecke), beispielsweise bei der Erstellung und Instandhaltung bzw. -setzung von Bauteilen und Bauwerken, etwa aus Beton, als Polymerbeton, als Beschichtungsmasse auf Kunstharzbasis oder als kalthärtende Straßenmarkierung, zur Verstärkung von Bauteilen und Bauwerken, beispielsweise Wände, Decken oder Böden, die Befestigung von Bauteilen, wie Platten oder Blöcken, z. B. aus Stein, Glas oder Kunststoff, an Bauteilen oder Bauwerken, etwa durch Kleben (bauliches Kleben). Besonders eignet sie sich zur chemischen Befestigung. Ganz besonders eignet sie sich zur (stoff- und/oder formschlüssigen) chemischen Befestigung von Verankerungsmitteln, wie Ankerstangen, Bolzen, Bewehrungseisen, Schrauben oder dergleichen in Aussparungen, wie Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Hierzu werden die Komponenten in das Bohrloch injiziert, wonach die zu befestigenden Einrichtungen, wie Ankergewindestangen und dergleichen, in das mit dem aushärtenden Reaktivharz beschickte Bohrloch eingebracht und entsprechend justiert werden.

Die folgenden Beispiele dienen der weiteren Erläuterung der Erfindung.

### BEISPIELE

Um den Einfluss von Mischungen radikalisch härtbarer Verbindungen als Backbone-Harz auf die Viskosität von mit diesen Mischungen hergestellter Reaktivharze und Reaktivharzkomponenten sowie den Einfluss auf die Leistungsfähigkeit von diese Mischungen enthaltende Befestigungsmassen zu untersuchen, wurden Mischungen aus zwei bzw. drei Reaktivharzen mit unterschiedlichen Strukturelementen (aromatisch, aliphatisch) und/oder unterschiedlichen Bindungsarten (Urethanmethacrylat, Glycidylmethacrylat) hergestellt, um die Mischung der radikalisch härtbaren Verbindungen zu erhalten. Durch die Mischung der Reaktivharze wurden Reaktivharze erhalten, die nun die Mischung der radikalisch härtbaren Verbindungen als Backbone-Harz enthielten, aus denen dann Reaktivharzkomponenten, Reaktivharz-Systeme und Befestigungsmassen hergestellt und deren Eigenschaften (Viskosität, Auspresskräfte, Lastwerte) untersucht wurden.

Dafür wurden zunächst Reaktivharz-Masterbatches, Reaktivharze, Reaktivharzkomponenten und Zweikomponenten-Reaktivharz-Systeme, die die Verbindungen (IId), (IIc), (VId), (VIIIe), (IIId), (VIIIa) und (IIIe) als Backbone-Harze enthielten, hergestellt. Diese dienten zum einen als Grundlage zur Herstellung der erfindungsgemäßen Mischungen als Backbone-Harz. Zum anderen dienen diese Verbindungen und die damit hergestellten Reaktivharze, Reaktivharzkomponenten und Zweikomponenten-Reaktivharz-Systeme zum Vergleich, wie unten näher erläutert.

### Verbindungen (IId), (IIc), (VId), (VIIIe), (IIId), (VIIIa) und (IIIe)

### 1. Herstellung des Reaktivharz-Masterbatches 1 mit Verbindung (IId)

In einem 2 Liter Laborglasreaktor mit Innenthermometer und Rührwelle wurden 1396 g Hydroxypropylmethacrylat vorgelegt und mit 0,2 g Phenothiazin (D Prills; Allessa Chemie), 0,5 g 4-Hydroxy-2,2,6,6-tetramethyl-piperidinyl-1-oxyl (TEMPOL; Evonik Degussa GmbH) und 0,4 g Dioctylzinndilaurat (TIB KAT® 216; TIB Chemicals) versetzt. Der Ansatz wurde auf 70°C erwärmt. Anschließend wurden 603 g Methylendi(phenylisocyanat) (Lupranat MIS; BASF SE) unter Rühren bei 200 U/min über 45 Minuten zugetropft. Danach wurde weitere 45 Minuten bei 80°C gerührt.

Hierdurch wurde der Reaktivharz-Masterbatch 1 erhalten, der 65 Gew.-% der Verbindung (IId) als Backbone-Harz und 35 Gew.-% Hydroxypropylmethacrylat, bezogen auf das Gesamtgewicht des Reaktivharz-Masterbatches, enthält.

Die Verbindung (IId) hat folgende Struktur:

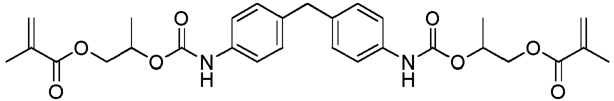

### 2. Herstellung des Reaktivharz-Masterbatches 2 mit Verbindung (IIc)

In einem 2 Liter Laborglasreaktor mit Innenthermometer und Rührwelle wurden 1542 g Hydroxypropylmethacrylat vorgelegt und mit 0,24 g Phenothiazin (D Prills; Allessa Chemie), 0,60 g 4-Hydroxy-2,2,6,6-tetramethyl-piperidinyl-1-oxyl (TEMPOL; Evonik Degussa GmbH) und 0,40 g Dioctylzinndilaurat (TIB KAT® 216; TIB Chemicals) versetzt. Der Ansatz wurde auf 80°C erwärmt. Anschließend wurden 500 g Toluol-2,4-diisocyanat (TCI Deutschland GmbH) unter Rühren bei 200 U/min über 45 Minuten zugegeben. Danach wurde weitere 180 Minuten bei 80°C gerührt.

Hierdurch wurde der Reaktivharz-Masterbatch 2 erhalten, der 65 Gew.-% der Verbindung (IIc) als Backbone-Harz und 35 Gew.-% Hydroxypropylmethacrylat, bezogen auf das Gesamtgewicht des Reaktivharz-Masterbatches, enthält.

Die Verbindung (IIc) hat folgende Struktur:

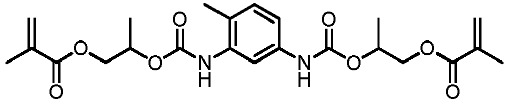

### 3. Herstellung des Reaktivharz-Masterbatches 3 mit Verbindung (VId)

In einem 2 Liter Laborglasreaktor mit Innenthermometer und Rührwelle wurden 218 g Hydroxypropylmethacrylat und 669 g 1,4-Butandioldimethacrylat (BDDMA; Evonik AG) vorgelegt und mit 0,13 g Phenothiazin (D Prills; Allessa Chemie), 0,37 g 4-Hydroxy-2,2,6,6-tetramethyl-piperidinyl-1-oxyl (TEMPOL; Evonik Degussa GmbH), 0,23 g Dioctylzinndilaurat (TIB KAT® 216; TIB Chemicals) und 67 g Trimethylolpropan versetzt. Der Ansatz wurde auf 100°C erwärmt. Anschließend wurden 380 g MDI unter Rühren bei 200 U/min über 70 Minuten zugetropft. Danach wurde weitere 300 Minuten bei 100°C gerührt. Abschließend wurden 666 g Hydroxypropylmethacrylat zugegeben.

Hierdurch wurde der Reaktivharz-Masterbatch 3 erhalten, der die Verbindung (VId) als Backbone-Harz, Hydroxypropylmethacrylat und 1,4-Butandioldimethacrylat in einem 1:1:1-Verhältnis enthält.

Das Produkt (Verbindung (VId)) hat eine Oligomerverteilung, wobei das Oligomer mit einer Wiederholungseinheit folgende Struktur hat:

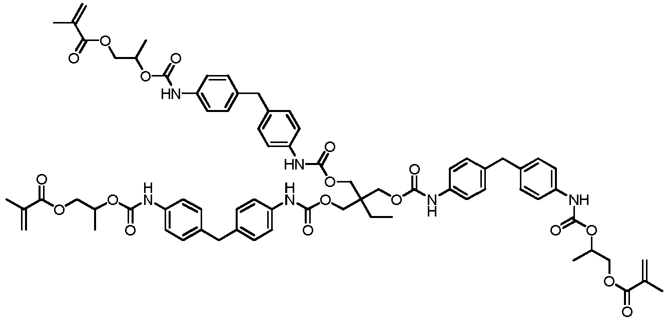

### 4. Reaktivharz-Masterbatche 4 mit Verbindung (VIIIe)

Ein Reaktivharz-Masterbatch mit 80 Gew.-% Verbindung (VIIIe) und 20 Gew.-% 1,4-Butandioldimethacrylat, bezogen auf das Gesamtgewicht des Reaktivharz-Masterbatches, ist unter den Markennamen Ecocryl 05345 (Bisphenol A diglycidylether dimethacrylat; Hexion Inc.) kommerziell erhältlich.

Die Verbindung (VIIIe) hat folgende Struktur:

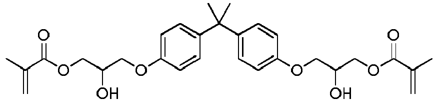

### 5. Herstellung des Reaktivharz-Masterbatches 5 mit Verbindung (IIIa)

In einem 2 Liter Laborglasreaktor mit Innenthermometer und Rührwelle wurden 1444 g Hydroxypropylmethacrylat vorgelegt und mit 0,23 g Phenothiazin (D Prills; Allessa Chemie), 0,56 g 4-Hydroxy-2,2,6,6-tetramethyl-piperidinyl-1-oxyl (TEMPOL; Evonik Degussa GmbH) und 0,38 g Dioctylzinndilaurat (TIB KAT® 216; TIB Chemicals) versetzt. Der Ansatz wurde auf 80°C erwärmt. Anschließend wurden 455 g Hexamethylen-1,6-diisocyanat (Sigma Aldrich) unter Rühren (200 U/min) über 45 Minuten zugetropft. Danach wurde weitere 60 Minuten bei 80°C gerührt.

Hierdurch wurde der Reaktivharz-Masterbatch 5 erhalten, der 65 Gew.-% der Verbindung (IIIa) als Backbone-Harz und 35 Gew.-% Hydroxypropylmethacrylat, bezogen auf das Gesamtgewicht des Reaktivharz-Masterbatches, enthält.

Die Verbindung (IIIa) hat folgende Struktur:

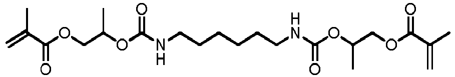

### 6. Herstellung des Reaktivharz-Masterbatches 6 mit Verbindung (VIIIa)

In einem 2 Liter Laborglasreaktor mit Innenthermometer und Rührwelle wurden 645 g 1,4-Butandiol-diglycidylether (Araldite DY 026 SP; Huntsmann Advanced Materials), 518 g Methacrylsäure (BASF SE), 6,0 g Tetraethylammoniumbromid (Merck KGaA Deutschland), 0,23 g Phenothiazin (D Prills; Allessa Chemie) und 0,25 g 4-Hydroxy-2,2,6,6-tetramethyl-piperidinyl-1-oxyl (TEMPOL; Evonik Degussa GmbH) gegeben. Der Ansatz wurde für 240 Minuten auf 100°C erwärmt.

Hierdurch wurde der Reaktivharz-Masterbatch 6 erhalten, der die Verbindung (VIIIa) als Backbone-Harz enthält. Die Verbindung hat folgende Struktur:

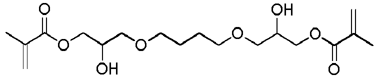

### 7. Herstellung des Reaktivharz-Masterbatches 7 mit Verbindung (IIIe)

In einem 2 Liter Laborglasreaktor mit Innenthermometer und Rührwelle wurden 1433 g Hydroxypropylmethacrylat vorgelegt und mit 0,21 g Phenothiazin (D Prills; Allessa Chemie), 0,53 g 4-Hydroxy-2,2,6,6-tetramethyl-piperidinyl-1-oxyl (TEMPOL; Evonik Degussa GmbH) und 0,36 g Dioctylzinndilaurat (TIB KAT® 216; TIB Chemicals) versetzt. Der Ansatz wurde auf 80°C erwärmt. Anschließend wurden 566 g Isophorondiisocyanat (Sigma Aldrich) unter Rühren (200 U/min) über 45 Minuten zugetropft. Danach wurde noch 120 Minuten bei 80°C gerührt.

Hierdurch wurde der Reaktivharz-Masterbatch 7 erhalten, der 65 Gew.-% Verbindung (IIIe) als Backbone-Harz und 35 Gew.-% Hydroxypropylmethacrylat, bezogen auf das Gesamtgewicht des Reaktivharz-Masterbatches, enthält.

Die Verbindung (IIIe) hat folgende Struktur:

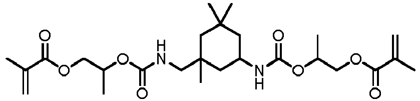

Aus den obigen Reaktivharz-Masterbatches 1 bis 7 wurden Reaktivharze wie folgt hergestellt:

### Herstellung der Reaktivharze

### 8. Reaktivharz 1

10,1 g 4-Hydroxy-2,2,6,6-tetramethyl-piperidinyl-1-oxyl (TEMPOL; Evonik Industries AG) und 38,5 g Di-iso-propanol-p-toluidin (BASF SE) wurden zu einer Mischung aus 1103 g Reaktivharz-Masterbatch 1, 330 g Hydroxypropylmethacrylat und 717 g 1,4-Butandioldimethacrylat (BDDMA; Evonik AG) gegeben.

### 9. Reaktivharz 2

301 g Reaktivharz-Masterbatch 2 wurden mit 91 g Hydroxypropylmethacrylat und 196 g 1,4-Butandioldimethacrylat (BDDMA; Evonik AG) gemischt. Zu dieser Mischung wurden 2,75 g 4-Hydroxy-2,2,6,6-tetramethyl-piperidinyl-1-oxyl (TEMPOL; Evonik Degussa GmbH) und 10,5 g Di-iso-propanol-p-toluidin (BASF SE) gegeben.

### 10. Reaktivharz 3

6,0 g 4-Hydroxy-2,2,6,6-tetramethyl-piperidinyl-1-oxyl (TEMPOL; Evonik Industries AG) und 22,8 g Di-iso-propanol-p-toluidin (BASF SE) wurden zu 1271 g Reaktivharz-Masterbatch 3 gegeben.

### 11. Reaktivharz 4

9,0 g 4-Hydroxy-2,2,6,6-tetramethyl-piperidinyl-1-oxyl (TEMPOL; Evonik Industries AG) und 40,3 g Di-iso-propanol-p-toluidin (BASF SE) wurden zu einer Mischung aus 937 g Reaktivharz-Masterbatch 4, 751 g Hydroxypropylmethacrylat und 563 g 1,4-Butandioldimethacrylat (BDDMA; Evonik AG) gegeben.

### 12. Reaktivharz 5

6,4 g 4-Hydroxy-2,2,6,6-tetramethyl-piperidinyl-1-oxyl (TEMPOL; Evonik Industries AG) und 24,5 g Di-iso-propanol-p-toluidin (BASF SE) wurden zu einer Mischung aus 702 g Reaktivharz-Masterbatch 5, 210 g Hydroxypropylmethacrylat und 456 g 1,4-Butandioldimethacrylat (BDDMA; Evonik AG) gegeben.

### 13. Reaktivharz 6

6,5 g 4-Hydroxy-2,2,6,6-tetramethyl-piperidinyl-1-oxyl (TEMPOL; Evonik Industries AG) und 26,25 g Di-iso-propanol-p-toluidin (BASF SE) wurden zu einer Mischung aus 489 g Reaktivharz-Masterbatch 6, 489 g Hydroxypropylmethacrylat und 489 g 1,4-Butandioldimethacrylat (BDDMA; Evonik AG) gegeben.

### 14. Reaktivharz 7

3,3 g 4-Hydroxy-2,2,6,6-tetramethyl-piperidinyl-1-oxyl (TEMPOL; Evonik Degussa GmbH) und 14,0 g Di-iso-propanol-p-toluidin (BASF SE) wurden zu einer Mischung aus 401 g Reaktivharz-Masterbatch 7, 120 g Hydroxypropylmethacrylat und 261 g 1,4-Butandioldimethacrylat (BDDMA; Evonik AG) gegeben.

Hierdurch wurden die Reaktivharze 1 bis 7 erhalten.

### Vergleichsverbindungen 1, 2 und 3

Als weiterer Vergleich, insbesondere zu den Reaktivharz-Masterbatches, Reaktivharzen, Reaktivharzkomponenten und Reaktivharz-Systemen, welche die erfindungsgemäßen Mischungen als Backbone-Harz enthalten, wurden Vergleichsreaktivharz-Masterbatches, Vergleichsreaktivharze, Vergleichsreaktivharzkomponenten und Vergleichszweikomponenten-Reaktivharz-Systeme, die die Vergleichsverbindungen 1, 2 und 3 enthalten, hergestellt.

### 15. Herstellung des Vergleichsreaktivharz-Masterbatches 1 mit Vergleichsverbindung 1

In einem 250 ml Laborglaskolben mit Innenthermometer und Rührwelle wurden 30,9 g Hydroxypropylmethacrylat vorgelegt und mit 0,018 g Phenothiazin (D Prills; Allessa Chemie), 0,044 g 4-Hydroxy-2,2,6,6-tetramethyl-piperidinyl-1-oxyl (TEMPOL; Evonik Industries AG), 0,032 g Dioctylzinndilaurat (TIB KAT® 216; TIB Chemicals) und 12,69 g 1,6-Hexandiol (TCI Deutschland GmbH) versetzt. Der Ansatz wurde auf 80°C erwärmt. Anschließend wurden 53,7 g Lupranat® MIS (Mischung aus 2,4'- und 4,4'-Diphenylmethaylendiisocyanat (MDI; BASF Polyurethanes GmbH), unter Rühren (200 U/min) über 45 Minuten zugetropft. Danach wurde für weitere 45 Minuten bei 80°C gerührt. Anschließend wurden 52,6 g Hydroxypropylmethacrylat zugegeben.

Hierdurch wurde der Vergleichsreaktivharz-Masterbatch 1 erhalten, der 65 Gew.-% der Vergleichsverbindung 1 als Backbone-Harz und 35 Gew.-% Hydroxypropylmethacrylat, bezogen auf das Gesamtgewicht des Reaktivharz-Masterbatches, enthält.

Die Vergleichsverbindung 1 hat folgende Struktur und enthält somit Strukturelemente der Verbindungen (IId) und (IIId):

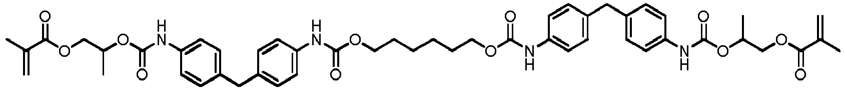

### 16. Herstellung des Vergleichsreaktivharzes 1

2,3 g 4-Hydroxy-2,2,6,6-tetramethyl-piperidinyl-1-oxyl (TEMPOL; Evonik Industries AG) und 8,75 g Di-iso-propanol-p-toluidin (BASF SE) wurden zu 489 g Vergleichsreaktivharz-Masterbatch 1 gegeben.

Hierdurch wurde das Vergleichsreaktivharz 1 erhalten.

### 17. Herstellung des Vergleichsreaktivharz-Masterbatches 2 mit Vergleichsverbindung 2

In einem 250 ml Laborglaskolben mit Innenthermometer und Rührwelle wurden 31 g Hydroxypropylmethacrylat vorgelegt und mit 0,02 g Phenothiazin, 0,05 g 4-Hydroxy-2,2,6,6-tetramethyl-piperidinyl-1-oxyl (TEMPOL; Evonik Industries AG), 0,04 g Dioctylzinndilaurat (TIB KAT® 216; TIB Chemicals) und 11,9 g Resorcin versetzt. Der Ansatz wurde auf 120°C erwärmt. Anschließend wurden 54 g Lupranat® MIS (Mischung aus 2,4'- und 4,4'-Diphenylmethaylendiisocyanat (MDI; BASF Polyurethanes GmbH) unter Rühren (200 U/min) über 45 Minuten zugetropft. Danach wurde für weitere 480 Minuten bei 120°C gerührt. Anschließend wurden 53 g Hydroxypropylmethacrylat zugegeben.

Hierdurch wurde der Vergleichsreaktivharz-Masterbatch 2 erhalten, der 65 Gew.-% der Vergleichsverbindung 2 als Backbone-Harz und 35 Gew.-% Hydroxypropylmethacrylat, bezogen auf das Gesamtgewicht des Reaktivharz-Masterbatches, enthält.

Die Vergleichsverbindung 2 hat folgende Struktur und enthält Strukturelemente der Verbindungen (IId) und (IIc):

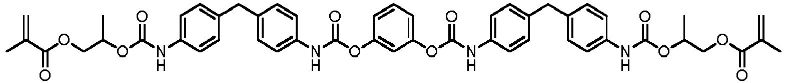

### 18. Herstellung des Vergleichsreaktivharzes 2

1,2 g 4-Hydroxy-2,2,6,6-tetramethyl-piperidinyl-1-oxyl (TEMPOL; Evonik Industries AG) und 4,6 g Di-iso-propanol-p-toluidin (BASF SE) wurden zu einer Mischung aus 133 g Vergleichsreaktivharz-Masterbatch 2, 40 g Hydroxypropylmethacrylat und 86 g 1,4-Butandioldimethacrylat (BDDMA; Evonik AG) gegeben.

Hierdurch wurde das Vergleichsreaktivharz 2 erhalten.

### 19. Herstellung des Vergleichsreaktivharz-Masterbatches 3 mit Vergleichsverbindung 3

In einem 500 ml Laborglaskolben mit Innenthermometer und Rührwelle wurden 191 g Bisphenol-A-diglycidylether mittlerer Viskosität (Epilox® A 19-03; Viskosität bei 25°C (DIN 53 015) 10.000-14.000 mPa·s; LEUNA-Harze GmbH), 49 g Methacrylsäure (BASF SE), 70 g 1,4-Butandioldimethacrylat (BDDMA; Evonik AG), 38 g Adipinsäure, 2,2 g Tetraethylammoniumbromid (Merck KGaA Deutschland), 0,05 g Phenothiazin (D Prills; Allessa Chemie) und 0,05 g 4-Hydroxy-2,2,6,6-tetramethyl-piperidinyl-1-oxyl (TEMPOL; Evonik Industries AG) gegeben. Der Ansatz wurde für 240 Minuten auf 100°C erwärmt. Hierdurch wurde der Vergleichsreaktivharz-Masterbatch 3 erhalten, der 80 Gew.-% der Vergleichsverbindung 3 als Backbone-Harz und 20 Gew.-% 1,4-Butandioldimethacrylat enthält.

Die Vergleichsverbindung 3 hat folgende Struktur und enthält Strukturelemente der Verbindungen (VIIIe) und (VIIIa):

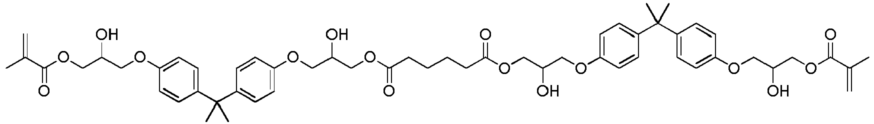

### 20. Herstellung des Vergleichsreaktivharzes 3

2,0 g 4-Hydroxy-2,2,6,6-tetramethyl-piperidinyl-1-oxyl (TEMPOL; Evonik Industries AG) und 8,8 g Di-iso-propanol-p-toluidin (BASF SE) wurden zu einer Mischung aus 204 g Vergleichsreaktivharz-Masterbatch 3, 163 g Hydroxypropylmethacrylat und 122 g 1,4-Butandioldimethacrylat gegeben.

Hierdurch wurde das Vergleichsreaktivharz 3 erhalten.

### 21. Mischungen aus den Reaktivharzen 1 bis 7 (Backbone-Harze 8-19)

Aus den obigen Reaktivharzen 1 bis 7 wurden Mischungen hergestellt, um Reaktivharze zu erhalten, die jeweils eine Mischung der radikalisch härtbaren Verbindungen als Backbone-Harz enthalten.

Für die Mischung der Reaktivharze, genauer für das Mischungsverhältnis, wurde Folgendes zugrunde gelegt:
Zur Herstellung einer Reaktivharzmischung, die mit einem Vergleichsreaktivharz, das eine bestimmte Vergleichsverbindung enthält, verglichen werden soll, wurden die molaren Verhältnisse der in der bestimmten Vergleichsverbindung vorhandenen Strukturelemente der difunktionellen Edukte, die zur Herstellung der Vergleichsverbindung eingesetzt wurden, zu Grunde gelegt. So beinhaltet zum Beispiel die Vergleichsverbindung 1 (Strukturelemente aus Verbindung (IId) und Verbindung (IIId)), zwei Methylendi(phenylen)gruppen und eine Hexylengruppe als Strukturelemente. Zur Herstellung einer entsprechenden Reaktivharzmischung, für die ein Reaktivharz mit der Vergleichsverbindung 1 als Vergleich dienen soll, wurde für die Mischung ein Reaktivharz mit einer Verbindung, die eine Methylendi(phenylen)gruppe als Strukturelement aufweist (Reaktivharz 1 mit Verbindung (IId)), und ein weiteres Reaktivharz mit einer Verbindung, die eine Hexylengruppe als Strukturelement aufweist (Reaktivharz 5 mit Verbindung (IIId)), ausgewählt. Dementsprechend wurde für die Mischung der Reaktivharze 1 und 5 entsprechend dem in der Vergleichsverbindung vorhandenen molaren Verhältnis der Strukturelemente (Methylendi(phenylen)gruppe : Hexylengruppe = 2 : 1), auch ein molares Verhältnis von Verbindung (IId) zu Verbindung (IIId) (IId : IIId = 2 : 1) für die zu vergleichenden Reaktivharzmischung gewählt. Analog wurden Vergleichsmischungen für die anderen Vergleichsverbindungen hergestellt.

Für die Messung der Viskosität von Reaktivharzmischungen, daraus hergestellter Reaktivharzkomponenten und der Auspresskräfte von aus den Reaktivharzkomponenten hergestellten Zweikomponenten-Reaktivharz-Systemen wurden bei Raumtemperatur Mischungen aus den Reaktivharzen 1, 2, 4, 5 und 6, nach den schematisch in Tabelle 1 gezeigten Zusammensetzungen, hergestellt. Die Herstellung erfolgte durch das Mischen von mindestens zwei der oben genannten Reaktivharze in einem Kessel mit Rührwerk.

**Tabelle 1: Schematisierte Zusammensetzung der Reaktivharzmischungen für die Messung der Viskosität der Reaktivharzmischungen, daraus hergestellter Reaktivharzkomponenten und der Auspresskräfte von aus den Reaktivharzkomponenten hergestellten Zweikomponenten-Reaktivharz-Systemen**

| **Mischung** | **1** | **2** | **3** | **4** | **5** | **6** | **7** |
|---|---|---|---|---|---|---|---|
| **Resultierendes Reaktivharz** | **8** | **9** | **10** | **11** | **12** | **13** | **14** |
| Verwendete Reaktivharze | 1+5 | 1+2 | 4+6 | 1+6 | 4+5 | 1+4+5 | 1+4+6 |
| Verbindungen | IId + IIId | IId + IIc | VIIIe + VIIIa | IId + VIIIa | VIIIe + IIId | IId + VIIIe + IIId | IId + VIIIe + VIIIa |
| Entsprechende Vergleichsverbindung(en) | 1 | 2 | 3 | 1 und 3 | 1 und 3 | 1 und 3 | 1 und 3 |

Für die Messung der Verbundspannungen von Befestigungsmassen, die erfindungsgemäße Mischungen enthalten, wurden bei Raumtemperatur Mischungen aus den Reaktivharzen 1, 2, 3, 4, 5, 6 und 7, nach den schematisch in Tabelle 2 gezeigten Zusammensetzungen, hergestellt. Die Herstellung erfolgte durch das Mischen von mindestens zwei der oben genannten Reaktivharze in einem Kessel mit Rührwerk.

**Tabelle 2: Schematisierte Zusammensetzung der Reaktivharzmischungen für die Messung der Lastwerte der Mörtelmassen aus Zweikomponenten-Reaktivharz-Systemen mit den erfindungsgemäßen Reaktivharzmischungen**

| **Mischung** | **8** | **9** | **10** | **11** | **12** |
|---|---|---|---|---|---|
| **Resultierendes Reaktivharz** | **15** | **16** | **17** | **18** | **19** |
| Verwendete Reaktivharze | 1+2 | 4+3 | 5+7 | 4+6 | 7+4+6 |
| Verbindungen | IId + IIc | VIIIe + VId | IIId + IIIe | VIIIe + VIIIa | IIIe + VIIIe + VIIIa |

Aus diesen Reaktivharzmischungen 1 bis 12 (auch als Reaktivharze 8 bis 19 bezeichnet) resultierten die Backbone-Harze 8 bis 19, die als Mischung von zwei oder drei Verbindungen vorliegen.

### 22. Herstellung der Reaktivharzkomponenten 1 bis 19

Zur Herstellung der Reaktivharzkomponenten 1 bis 7 wurden jeweils 354 g der oben hergestellten Reaktivharze 1 bis 7 und zur Herstellung der Reaktivharzkomponenten 8 bis 19 wurden jeweils 354 g der oben hergestellten Reaktivharzmischungen 1 bis 12 mit 185 g Secar® 80 (Kerneos Inc.), 27 g Cab-O-Sil® TS-720 (Cabot Corporation) und 335 g Quarzsand F32 (Quarzwerke GmbH) im Dissolver unter Vakuum mit einem PC Laborsystem Dissolver vom Typ LDV 0.3-1 gemischt. Die Mischungen wurden für 8 Minuten bei 3500 U/min unter Vakuum (Druck≤100 mbar) mit einer 55 mm Dissolverscheibe und einem Randabstreifer gerührt.

### 23. Herstellung der Vergleichsreaktivharzkomponenten 1 bis 3

Jeweils 354 g Vergleichsreaktivharz 1, 2 und 3 wurden mit 185 g Secar® 80 (Kerneos Inc.), 27 g Cab-O-Sil® TS-720 (Cabot Corporation) und 335 g Quarzsand F32 (Quarzwerke GmbH) im Dissolver unter Vakuum mit einem PC Laborsystem Dissolver vom Typ LDV 0.3-1 gemischt. Die Mischungen wurden für 8 Minuten bei 3500 U/min unter Vakuum (Drucke≤100 mbar) mit einer 55 mm Dissolverscheibe und einem Randabstreifer gerührt.

Die so hergestellten Reaktivharzkomponenten 1 bis 19 und Vergleichsreaktivharzkomponenten 1 bis 3 dienten als A-Komponente bei der Herstellung von Zweikomponenten-Reaktivharz-Systemen.

### 24. Herstellung der Zweikomponenten-Reaktivharz-Svsteme 1 bis 19

Zur Herstellung der Zweikomponenten-Reaktivharz-Systeme 1 bis 7, die die Reaktivharze 1 bis 7 enthalten, und der Zweikomponenten-Reaktivharz-Systeme 8 bis 19, die die Reaktivharze 8 bis 19 (Reaktivharzmischungen 1 bis 12) enthalten, wurden die jeweiligen Reaktivharzkomponenten (Komponente (A)) und jeweils die Härterkomponente (Komponente (B)) des kommerziell erhältlichen Produkts HIT-HY 110 (Hilti Aktiengesellschaft; Chargennummer: 1610264) in Plastikkartuschen (Firma Ritter GmbH; Volumenverhältnis A:B = 3:1) mit den Innendurchmessern 47 mm (Komponente (A)) bzw. 28 mm (Komponente (B)) gefüllt.

Um den Einfluss der erfindungsgemäßen Backbone-Harze (Mischungen aus radikalisch härtbaren Verbindungen) auf die Eigenschaften von Reaktivharzen, Reaktivharzkomponenten, Zweikomponenten-Reaktivharz-Systemen und die ausgehärteten Befestigungsmassen, insbesondere die Viskosität und die Auspresskräfte von Reaktivharzkomponenten und Zweikomponenten-Reaktivharz-Systemen sowie die Verbundspannungen von ausgehärteten Befestigungsmassen, zu ermitteln, wurden die Viskosität von Reaktivharzen und Reaktivharzkomponenten, die jeweils die erfindungsgemäßen Backbone-Harze enthalten, und die Auspresskräfte von daraus hergestellten Zweikomponenten-Reaktivharz-Systemen sowie die Verbundspannungen der ausgehärteten Befestigungsmassen gemessen und mit den Messwerten der Formulierungen, welche nur eine radikalisch härtbare Verbindung als Backbone-Harz enthalten, und der Vergleichsformulierungen, welche die Vergleichsbackbone-Harze enthalten, verglichen.

### Messung der dynamischen Viskosität der Reaktivharze 1, 2, 4, 5, 6, 8, 9 und 10 sowie der Vergleichsreaktivharze 1, 2 und 3

Die Messung der dynamischen Viskosität der Reaktivharze 1, 5 und 8 sowie des Vergleichsreaktivharzes 1 (Tabelle 3), der Reaktivharze 1, 2 und 9 sowie des Vergleichsreaktivharzes 2 (Tabelle 4), der Reaktivharze 4, 6, und 10 sowie des Vergleichsreaktivharzes 3 (Tabelle 5) erfolgte mit einem Kegel-Platte Messsystem nach DIN 53019. Der Durchmesser des Kegels betrug 60mm und der Öffnungswinkel war 1°. Es wurde bei einer konstanten Schergeschwindigkeit von 150/s und einer Temperatur von 23°C gemessen (wenn keine abweichende Angabe bei den Messdaten gemacht wird). Die Messdauer betrug 180s und jede Sekunde wurde ein Messpunkt generiert. Zur Erreichung der Schergeschwindigkeit war eine Rampe von 0-150/s mit einer Dauer von 120s vorgeschaltet. Da es sich um newtonschen Flüssigkeiten handelt, wurde über den Messabschnitt mit konstanter Schergeschwindigkeit von 150/s eine lineare Auswertung über den Messabschnitt vorgenommen und die Viskosität bestimmt. Es wurden jeweils drei Messungen gemacht, wobei in Tabelle 3 die entsprechenden Mittelwerte angegeben sind.

### Messung der dynamischen Viskosität der Reaktivharzkomponenten 1, 2, 4, 5, 6, 8, 9 und 10 sowie der Vergleichsreaktivharzkomponenten 1, 2 und 3

Die Messung der dynamischen Viskosität der Reaktivharzkomponenten 1, 5 und 8 sowie der Vergleichsreaktivharzkomponente 1 (Tabelle 3), der Reaktivharzkomponenten 1, 2, und 9 sowie der Vergleichsreaktivharzkomponente 2 (Tabelle 4), der Reaktivharzkomponenten 4, 6 und 10 sowie der Vergleichsreaktivharzkomponente 3 (Tabelle 5) erfolgte mit einem Platte-Platte Messsystem nach DIN 53019. Der Durchmesser der Platte betrug 20mm und der Spaltabstand betrug 3mm. Um ein Austreten der Probe aus dem Spalt zu verhindern, wurde ein Begrenzungsring aus Teflon verwendet, der einen Abstand von 1mm von der oberen Platte hatte. Die Messtemperatur betrug 25°C. Die Methode bestand aus drei Abschnitten: 1. Niedrige Scherung, 2. Hohe Scherung, 3. Niedrige Scherung. Beim 1. Abschnitt wurden 3 Minuten bei 0,5/s geschert. Im 2. Abschnitt wurde in 8 Stufen zu je 15 Sekunden logarithmisch die Schergeschwindigkeit von 0,8/s auf 100/s gesteigert. Die einzelnen Stufen dabei waren: 0,8/s; 1,724/s; 3,713/s; 8/s; 17,24/s; 37,13/s; 80/s; 100/s. Der 3. Abschnitt war die Wiederholung des 1 Abschnitts. Am Ende eines jeden Abschnittes wurden die Viskositäten ausgelesen. In den Tabellen 3 bis 5 ist der Wert des zweiten Abschnittes bei 100/s angegeben. Es wurden jeweils drei Messungen gemacht, wobei in den Tabellen 3 bis 5 die entsprechenden Mittelwerte angegeben sind.

### Messung der Auspresskräfte:

Zur Messung der Auspresskräfte bei 25°C wurden die Reaktivharz-Systeme auf 25°C temperiert. Die Kartuschen wurden auf einer Material-Prüfmaschine der Firma Zwick mit einem Kraftaufnehmer (Prüfbereich bis 10 kN) über einen Statikmischer (Mischer HIT-RE-M; Hilti Aktiengesellschaft) mit einer konstanten Geschwindigkeit von 100 mm/min über eine Strecke von 45 mm ausgepresst und die mittlere dabei auftretende Kraft gemessen.

In einem Beispiel wurden Zusammensetzungen mit Urethanmethacrylat-basierten Backbone-Harzen miteinander verglichen. Dazu wurde die dynamische Viskosität des Reaktivharzes 1 mit einem aromatischen Urethanmethacrylat als Backbone-Harz, des Reaktivharzes 5 mit einem aliphatischen Urethanmethacrylat als Backbone-Harz und des Vergleichsreaktivharzes 1 mit der Vergleichsverbindung 1, die die Strukturelemente der beiden Urethanmethacrylate beinhaltet, als Backbone-Harz mit der dynamischen Viskosität des Reaktivharzes 8 (Mischung 1 aus aromatischem und aliphatischem Urethanmethacrylat) verglichen. Ferner wurde die dynamische Viskosität der aus den eben genannten Reaktivharzen hergestellten Reaktivharzkomponenten und die Auspresskräfte der entsprechenden Reaktivharz-Systeme miteinander verglichen. Die Ergebnisse sind in Tabelle 3 gezeigt.

**Tabelle 3: Ergebnisse der Messung der dynamischen Viskosität der Reaktivharze 1, 5 und 8, des Vergleichsreaktivharzes 1, der daraus hergestellten Reaktivharzkomponenten 1, 5 und 8 und Vergleichsreaktivharzkomponente 1 sowie der Auspresskräfte der Reaktivharz-Systeme 1, 5 und 8 und des Vergleichsreaktivharz-Systems 1**

| **Verwendetes Reaktivharz** | **Dynamische Viskosität Reaktivharz [mPa·s] (23°C)** | **Dynamische Viskosität Reaktivharzkomponente [Pa·s] (25°C)** | **Auspresskräfte Zweikomponenten-Reaktivharz-System [N]** |
|---|---|---|---|
| Reaktivharz 1 | 43 | 13,6 | 972 |
| Reaktivharz 5 | 25 | 11,2 | 937 |
| Reaktivharz 8 (Reaktivharzmischung 1) | 35 | 14,2 | 910 |
| Vergleichsreaktivharz 1 | 287 | 31,4 | 1748 |

In einem weiteren Beispiel wurden Zusammensetzungen mit anderen Urethanmethacrylat-basierten Backbone-Harzen miteinander verglichen. Dazu wurde die dynamische Viskosität des Reaktivharzes 1 mit einem aromatischen Urethanmethacrylat als Backbone-Harz, des Reaktivharzes 2 ebenfalls mit einem aromatischen Urethanmethacrylat als Backbone-Harz und des Vergleichsreaktivharzes 2 mit der Vergleichsverbindung 2, die die Strukturelemente der beiden Urethanmethacrylate beinhaltet, als Backbone-Harz mit der dynamischen Viskosität des Reaktivharzes 9 (Mischung 2 aus zwei aromatischen Urethanmethacrylaten) verglichen. Ferner wurde die dynamische Viskosität der aus den eben genannten Reaktivharzen hergestellten Reaktivharzkomponenten und die Auspresskräfte der entsprechenden Reaktivharz-Systeme miteinander verglichen. Die Ergebnisse sind in Tabelle 4 gezeigt.

**Tabelle 4: Ergebnisse der Messung der dynamischen Viskosität der Reaktivharze 1, 2 und 9, des Vergleichsreaktivharzes 2, der daraus hergestellten Reaktivharzkomponenten 1, 2 und 9 und Vergleichsreaktivharzkomponente 2 sowie der Auspresskräfte der Reaktivharz-Systeme 1, 2 und 9 und des Vergleichsreaktivharz-Systems 2**

| **Verwendetes Reaktivharz** | **Dynamische Viskosität Reaktivharz [mPa·s] (23°C)** | **Dynamische Viskosität Reaktivharzkomponente [Pa·s] (25°C)** | **Auspresskraft Zweikomponenten-Reaktivharz-System [N]** |
|---|---|---|---|
| Reaktivharz 1 | 43 | 13,6 | 972 |
| Reaktivharz 2 | 39 | 10,8 | 1036 |
| Reaktivharz 9 (Reaktivharzmischung 2) | 40 | 11,2 | 855 |
| Vergleichsreaktivharz 2 | 173 | 18,6 | 912 |

In einem weiteren Beispiel wurden Zusammensetzungen mit Glycidylmethacrylat-basierten Backbone-Harzen miteinander verglichen. Dazu wurde die dynamische Viskosität des Reaktivharzes 4 mit einem aromatischen Glycidylmethacrylat als Backbone-Harz, des Reaktivharzes 6 mit einem aliphatischen Glycidylmethacrylat als Backbone-Harz und des Vergleichsreaktivharzes 3 mit der Vergleichsverbindung 3, die die Strukturelemente der beiden Glycidylmethacrylate beinhaltet, als Backbone-Harz mit der dynamischen Viskosität des Reaktivharzes 10 (Mischung 3 aus aromatischem und aliphatischen Glycidylmethacrylat) verglichen. Ferner wurde die dynamische Viskosität der aus den eben genannten Reaktivharzen hergestellten Reaktivharzkomponenten und die Auspresskräfte der entsprechenden Reaktivharz-Systeme miteinander verglichen. Die Ergebnisse sind in Tabelle 5 gezeigt.

**Tabelle 5: Ergebnisse der Messung der dynamischen Viskosität der Reaktivharze 4, 6 und 10, des Vergleichsreaktivharzes 3, der daraus hergestellten Reaktivharzkomponenten 4, 6 und 10 und Vergleichsreaktivharzkomponente 3 sowie der Auspresskräfte der Reaktivharz-Systeme 4, 6, 10 und des Vergleichsreaktivharz-Systems 3**

| **Verwendetes Reaktivharz** | **Dynamische Viskosität Reaktivharz [mPa·s] (23°C)** | **Dynamische Viskosität Reaktivharzkomponente [Pa·s] (25°C)** | **Auspresskraft Zweikomponenten-Reaktivharz-System [N]** |
|---|---|---|---|
| Reaktivharz 4 | 45 | 12,1 | 1035 |
| Reaktivharz 6 | 22 | 9,3 | 785 |
| Reaktivharz 10 (Reaktivharzmischung 3) | 33 | 12,6 | 844 |
| Vergleichsreaktivharz 3 | 151 | 20,1 | 1240 |

In einem weiteren Beispiel wurden Reaktivharzkomponenten mit einem Glycidylmethacrylat-basierten Backbone-Harz und einem Urethanmethacrylat-basierten Backbone-Harz miteinander verglichen. Dazu wurden einmal die Auspresskräfte des Reaktivharz-Systems 1 mit einem aromatischen Urethanmethacrylat als Backbone-Harz, des ReaktivharzSystems 6 mit einem aliphatischen Glycidylmethacrylat als Backbone-Harz und des Vergleichsreaktivharz-Systems 1 und 3 mit den Vergleichsverbindung 1 bzw. 3 als Backbone-Harz mit der Auspresskraft des Reaktivharz-Systems 11 (Mischung 4 aus aromatischem und aliphatischen Glycidylmethacrylat als Backbone-Harz) verglichen. Des Weiteren wurden die Auspresskräfte des Reaktivharz-Systems 4 mit einem aromatischen Glycidylmethacrylat als Backbone-Harz, des Reaktivharz-Systems 5 mit einem aliphatischen Urethanmethacrylat als Backbone-Harz und des Vergleichsreaktivharz-Systems 1 und 3 mit den Vergleichsverbindungen 1 bzw. 3 als Backbone-Harz mit der Auspresskraft des Reaktivharz-Systems 12 (Mischung 5 aus aromatischem Glycidylmethacrylat und einem aliphatischen Urethanmethacrylat) verglichen. Die Ergebnisse sind in Tabelle 6 gezeigt.

**Tabelle 6: Ergebnisse der Messung der Auspresskräfte der Reaktivharz-Systeme 1, 4, 5, 6, 11 und 12 sowie der Vergleichsreaktivharz-Systeme 1 und 3**

| **Verwendetes Reaktivharz** | **Auspresskraft Zweikomponenten-Reaktivharz-System [N]** | **Verwendetes Reaktivharz** | **Auspresskraft Zweikomponenten-Reaktivharz-System [N]** |
|---|---|---|---|
| Reaktivharz 1 | 972 | Reaktivharz 4 | 1035 |
| Reaktivharz 6 | 785 | Reaktivharz 5 | 937 |
| Reaktivharz 11 (Reaktivharzmischung 4) | 945 | Reaktivharz 12 (Reaktivharzmischung 5) | 920 |
| Vergleichsreaktivharz 1 | 1748 | Vergleichsreaktivharz 1 | 1748 |
| Vergleichsreaktivharz 3 | 1240 | Vergleichsreaktivharz 3 | 1240 |

In einem weiteren Beispiel wurden die Auspresskräfte von Zusammensetzungen mit einem Glycidylmethacrylat-basierten Backbone-Harz und einem Urethanmethacrylat-basierten Backbone-Harz miteinander verglichen. Dazu wurde zum einen die Auspresskraft des Reaktivharz-Systems 1 mit einem aromatischen Urethanmethacrylat als Backbone-Harz, des Reaktivharz-Systems 4 mit einem aromatischen Glycidylmethacrylat als Backbone-Harz, des Reaktivharz-Systems 5 mit einem aliphatischen Urethanmethacrylat als Backbone-Harz und der Vergleichsreaktivharz-Systeme 1 und 3 mit den Vergleichsverbindung 1 bzw. 3 als Backbone-Harz mit der Auspresskraft des Reaktivharz-Systems 13 (Mischung 6 aus aromatischem und aliphatischem Urethanmethacrylat und aromatischen Glycidylmethacrylat) verglichen. Des Weiteren wurde die Auspresskraft des Reaktivharz-Systems 1 mit einem aromatischen Urethanmethacrylat als Backbone-Harz, des Reaktivharz-Systems 4 mit einem aromatischen Glycidylmethacrylat als Backbone-Harz, des Reaktivharz-Systems 6 mit einem aliphatischen Glycidylmethacrylat als Backbone-Harz und der Vergleichsreaktivharz-Systeme 1 und 3 mit den Vergleichsverbindung 1 bzw. 3 als Backbone-Harz mit der Auspresskraft des Reaktivharz-Systems 14 (Mischung 7 aus aromatischem und aliphatischen Glycidylmethacrylat und aromatischen Urethanmethacrylat) verglichen. Die Ergebnisse sind in Tabelle 7 gezeigt.

**Tabelle 7: Ergebnisse der Messung der Auspresskräfte der Reaktivharz-Systeme 1, 4, 5, 6, 13 und 14 sowie der Vergleichsreaktivharz-Systeme 1 und 3**

| **Verwendetes Reaktivharz** | **Auspresskraft Zwei komponenten-Reaktivharz-System [N]** | **Verwendetes Reaktivharz** | **Auspresskraft Zweikomponenten-Reaktivharz-System [N]** |
|---|---|---|---|
| Reaktivharz 1 | 972 | Reaktivharz 1 | 972 |
| Reaktivharz 4 | 1035 | Reaktivharz 4 | 1035 |
| Reaktivharz 5 | 937 | Reaktivharz 6 | 785 |
| Reaktivharz 13 (Reaktivharzmischung 6) | 897 | Reaktivharz 14 (Reaktivharzmischung 7) | 828 |
| Vergleichsreaktivharz 1 | 1748 | Vergleichsreaktivharz 1 | 1748 |
| Vergleichsreaktivharz 3 | 1240 | Vergleichsreaktivharz 3 | 1240 |

Die Ergebnisse zeigen eine deutliche Erniedrigung der Viskosität der Reaktivharzkomponenten und eine Erniedrigung der Auspresskräfte der Zweikomponentenreaktivharz-Systeme, die jeweils eine erfindungsgemäße Mischung aus niederviskosen Verbindungen als Backbone-Harz enthalten, verglichen mit der Viskosität der Reaktivharzkomponenten und der Auspresskräfte der Zweikomponentenreaktivharz-Systeme, die die Vergleichsverbindungen und nur eine Verbindung als Backbone-Harz enthalten. Insbesondere eine Mischung aus einer aromatischen Urethanmethacrylat-Verbindung und einer aliphatischen Urethanmethacrylat-Verbindung führt zu einer deutlichen Erniedrigung der Auspresskraft des Zweikomponentenreaktivharz-Systems, das diese Mischung als Backbone-Harz enthält, verglichen mit der Auspresskraft des Zweikomponentenreaktivharz-Systems, das die entsprechende Vergleichsverbindung als Backbone-Harz enthält.

### Messung der Verbundspannung

Zur Messung der Verbundspannungen (Lastwerte) der ausgehärteten Befestigungsmassen wurden Ankergewindestanden M12 in Bohrlöcher in Beton C20/25 mit einem Durchmesser von 14 mm und einer Bohrlochtiefe von 72 mm, die mit den Reaktionsharzmörtel-Zusammensetzungen gefüllt wurden, eingeführt. Die Verbundspannungen wurden durch zentrisches Ausziehen der Ankergewindestanden ermittelt. Es wurden jeweils fünf Ankergewindestangen gesetzt und nach 24 Stunden Aushärtung die Verbundspannung bestimmt. Hierbei diente das kommerziell erhältliche Produkt Hilti HIT-HY 110 (Hilti Aktiengesellschaft) als Vergleich. Die Befestigungsmassen wurden über einen Statikmischer (Mischer HIT-RE-M; Hilti Aktiengesellschaft) aus den Kartuschen ausgepresst und in die Bohrlöcher injiziert.

Die Messung der Verbundspannung erfolgte unter der folgenden Bohrlochbedingung:
A1: Es handelt sich um ein gereinigtes, staubfreies, trockenes, hammergebohrtes Bohrloch. Das Setzen, Aushärten und Ausziehen erfolgt bei Raumtemperatur. Die Temperatur des Zweikomponenten-Reaktivharz-Systems bzw. der Befestigungsmasse beträgt beim Setzen 20°C.

Im Folgenden werden die Verbundspannungen von Befestigungsmassen, die die erfindungsgemäßen Backbone-Harze (Mischung aus zwei oder drei radikalisch härtbaren Verbindungen) enthalten, mit den Verbundspannungen von Befestigungsmassen, die die entsprechenden radikalisch härtbare Verbindung als Einzelverbindung als Backbone-Harz enthalten, und der Verbundspannung des kommerziell erhältlichen Produkts Hilti HIT-HY 110 verglichen. Um zu zeigen, dass sich der Einfluss der erfindungsgemäßen Backbone-Harze auf die Verbundspannung einer diese enthaltenden Befestigungsmasse nicht additiv aus den Backbone-Harzen, die jeweils nur eine radikalisch härtbare Verbindung umfassen, zusammensetzt, wurden theoretische Verbundspannungen für die Mischungen aus den Verbundspannungen der Befestigungsmassen mit den Backbone-Harzen, die jeweils nur eine radikalisch härtbare Verbindung umfassen, errechnet.

In einem Beispiel wurden Befestigungsmassen mit zwei Urethanmethacrylat-basierten Backbone-Harzen miteinander verglichen. Dazu wurde die Verbundspannung der Befestigungsmasse 1 mit einem aromatischen Urethanmethacrylat als Backbone-Harz, der Befestigungsmasse 2 mit einem anderen aromatischen Urethanmethacrylat als Backbone-Harz und von Hilti HIT-HY 110 mit der Verbundspannung der Befestigungsmasse 15 (Mischung 8 aus aromatischen Urethanmethacrylaten) verglichen. Die Ergebnisse sind in Tabelle 8 gezeigt. Tabelle 8 zeigt auch die aus den Verbundspannungen der Befestigungsmassen 1 und 2 berechnete mittlere Verbundspannung (theoretische Verbundspannung 1+2 = Mittelwert aus Verbundspannung 1 und Verbundspannung 2).

**Tabelle 8: Ergebnisse der Messung der Verbundspannung der Befestigungsmassen 1, 2, 15, und von Hilti HIT-HY 110 sowie die theoretischen Verbundspannung 1+2**

| | **Verbundspannung [N/mm²]** |
|---|---|
| Befestigungsmasse 1 | 20,1 |
| Befestigungsmasse 2 | 20,1 |
| Befestigungsmasse 15 | 21,4 |
| Theoretische Verbundspannung 1+2 | 20,1 |
| Hilti HIT-HY 110 | 20,7 |

In einem weiteren Beispiel wurden Befestigungsmassen mit zwei Urethanmethacrylat-basierten Backbone-Harzen miteinander verglichen. Dazu wurde die Verbundspannung der Befestigungsmasse 4 mit einem aromatischen Urethanmethacrylat als Backbone-Harz, der Befestigungsmasse 3 mit einem verzweigten aromatischen Urethanmethacrylat als Backbone-Harz und von Hilti HIT-HY 110 mit der Verbundspannung der Befestigungsmasse 16 (Mischung 9 aus zwei aromatischen Urethanmethacrylaten) verglichen. Die Ergebnisse sind in Tabelle 9 gezeigt. Tabelle 9 zeigt auch die aus den Verbundspannungen der Befestigungsmassen 3 und 4 berechnete Verbundspannung (theoretische Verbundspannung 3+4 = Mittelwert aus Verbundspannung 3 und Verbundspannung 4).

**Tabelle 9: Ergebnisse der Messung der Verbundspannung der Befestigungsmassen 4, 3, 16 und von Hilti HIT-HY 110 sowie die theoretische Verbundspannung 3+4**

| | **Verbundspannung [N/mm²]** |
|---|---|
| Befestigungsmasse 4 | 17,5 |
| Befestigungsmasse 3 | 22,0 |
| Befestigungsmasse 16 | 22,8 |
| Theoretische Verbundspannung 3+4 | 19,8 |
| HIT-HY 110 | 20,7 |

In einem weiteren Beispiel wurden Befestigungsmassen mit zwei Urethanmethacrylat-basierten Backbone-Harzen miteinander verglichen. Dazu wurde die Verbundspannung der Befestigungsmasse 7 mit einem cycloaliphatischen Urethanmethacrylat als Backbone-Harz, der Befestigungsmasse 5 mit einem linearen aliphatischen Urethanmethacrylat als Backbone-Harz und von Hilti HIT-HY 110 mit der Verbundspannung der Befestigungsmasse 17 (Mischung 10 aus einem cycloaliphatischen und einem linearen aliphatischen Urethanmethacrylat) verglichen. Die Ergebnisse sind in Tabelle 10 gezeigt. Tabelle 10 zeigt auch die aus den Verbundspannungen der Befestigungsmassen 5 und 7 berechnete Verbundspannung (theoretische Verbundspannung 5+7 = Mittelwert aus Verbundspannung 5 und Verbundspannung 7).

**Tabelle 10: Ergebnisse der Messung der Verbundspannung der Befestigungsmassen 7, 5, 17 und von Hilti HIT-HY 110 sowie die theoretische Verbundspannung 5+7**

| | **Verbundspannung [N/mm²]** |
|---|---|
| Befestigungsmasse 7 | 14,9 |
| Befestigungsmasse 5 | 14,2 |
| Befestigungsmasse 17 | 16,9 |
| Theoretische Verbundspannung 5+7 | 14,6 |
| HIT-HY 110 | 20,7 |

In einem weiteren Beispiel wurden Befestigungsmassen mit zwei Glycidylmethacrylat-basierten Backbone-Harzen miteinander verglichen. Dazu wurde die Verbundspannung der Befestigungsmasse 4 mit einem aromatischen Glycidylmethacrylat als Backbone-Harz, der Befestigungsmasse 6 mit einem linearen aliphatischen Glycidylmethacrylat als Backbone-Harz und von Hilti HIT-HY 110 mit der Verbundspannung der Befestigungsmasse 18 (Mischung 11 aus einem aromatischen und einem linearen aliphatischen Glycidylmethacrylat) verglichen. Die Ergebnisse sind in Tabelle 11 gezeigt. Tabelle 11 zeigt auch die aus den Verbundspannungen der Befestigungsmassen 4 und 6 berechnete Verbundspannung (theoretische Verbundspannung 4+6 = Mittelwert aus Verbundspannung 4 und Verbundspannung 6).

**Tabelle 11: Ergebnisse der Messung der Verbundspannungen der Befestigungsmassen 4, 6, 18, und von Hilti HIT-HY 110 sowie die theoretische Verbundspannung 4+6**

| | **Verbundspannung [N/mm²]** |
|---|---|
| Befestigungsmasse 4 | 15,5 |
| Befestigungsmasse 6 | 9,7 |
| Befestigungsmasse 18 | 17,4 |
| Theoretische Verbundspannung 4+6 | 12,6 |
| Hilti HIT-HY 110 | 20,7 |

In einem weiteren Beispiel wurden Befestigungsmassen mit zwei Glycidylmethacrylat-basierten Backbone-Harzen und einem Urethanmethacrylat-basierten Backbone-Harz miteinander verglichen. Dazu wurde die Verbundspannung der Befestigungsmasse 4 mit einem aromatischen Glycidylmethacrylat als Backbone-Harz, der Befestigungsmasse 6 mit einem linearen aliphatischen Glycidylmethacrylat als Backbone-Harz, der Befestigungsmasse 6 mit einem cycloaliphatischen Urethanmethacrylat als Backbone-Harz und von Hilti HIT-HY 110 mit der Verbundspannung der Befestigungsmasse 19 (Mischung 19 aus einem aromatischen und einem linearen aliphatischen Glycidylmethacrylat und einem cycloaliophatischen Urethanmethacrylat) verglichen. Die Ergebnisse sind in Tabelle 12 gezeigt. Tabelle 12 zeigt auch die aus den Verbundspannungen der Befestigungsmassen 4, 6 und 7 berechnete Verbundspannung (theoretische Verbundspannung 4+6+7 = Mittelwert aus Verbundspannung 4, Verbundspannung 6 und Verbundspannung 7).

**Tabelle 12: Ergebnisse der Messung der Verbundspannungen der Befestigungsmassen 7, 4, 6, 19, und von Hilti HIT-HY 110 sowie die theoretische Verbundspannung 4+6+7**

| | **Verbundspannung [N/mm²]** |
|---|---|
| Befestigungsmasse 7 | 14,9 |
| Befestigungsmasse 4 | 17,1 |
| Befestigungsmasse 6 | 10,4 |
| Befestigungsmasse 19 | 15,9 |
| Hteoretische Verbundspannung 4+6+7 | 14,1 |
| Hilti HIT-HY 110 | 20,7 |

Die Ergebnisse zeigen, dass die Verbundspannungen von ausgehärteten Befestigungsmassen, die jeweils eine Mischung aus zwei radikalisch härtbaren Verbindungen als Backbone-Harz enthalten, höher sind als die Verbundspannung der ausgehärteten Vergleichsbefestigungsmasse aus Hilti HIT-HY 110.

Ferner ist aus den Tabellen ersichtlich, dass die theoretischen Verbundspannungen niedriger sind als die Verbundspannungen von ausgehärteten Befestigungsmassen, die jeweils eine Mischung aus zwei radikalisch härtbaren Verbindungen als Backbone-Harz enthalten. Dies belegt den synergistischen Effekt der erfindungsgemäßen Backbone-Harze, also der erfindungsgemäßen Mischungen aus mindestens zwei radikalisch härtbaren Verbindungen.

## Patentansprüche

1. Mischung umfassend mindestens zwei radikalisch härtbare Verbindungen ausgewählt aus der Gruppe bestehend aus Verbindungen der allgemeinen Formeln (I), (V) oder (VII) 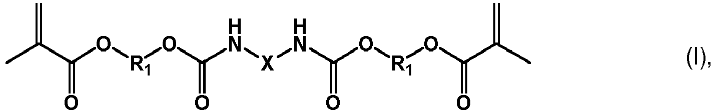 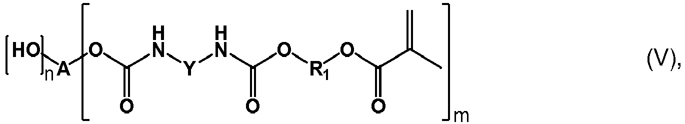 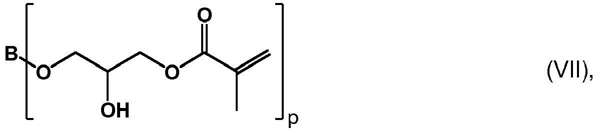 worin
jedes R₁ unabhängig voneinander eine verzweigte oder lineare aliphatische C₁-C₁₅-Alkylengruppe ist,
A eine lineare oder verzweigte aliphatische C₃-C₁₀-Alkylengruppe ist,
B eine lineare, verzweigte oder cyclische aliphatische Kohlenwasserstoffgruppe oder eine aromatische Kohlenwasserstoffgruppe ist,
X eine zweiwertige lineare, verzweigte oder cyclische aliphatische oder aromatische Kohlenwasserstoffgruppe, oder eine Gruppe Z der Formel 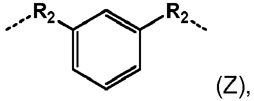 worin R₂ eine zweiwertige verzweigte oder lineare aliphatische C₁-C₆-Alkylengruppe ist,
ist,
Y ein aromatische Kohlenwasserstoffgruppe ist,
n eine ganze Zahl größer oder gleich 0 ist,
m eine ganze Zahl größer oder gleich 3 ist, und
p eine ganze Zahl größer oder gleich 2 ist.

2. Mischung nach Anspruch 1, wobei X eine zweiwertige aromatische C₆-C₂₀-Kohlenstoffgruppe oder eine zweiwertige lineare, verzweigte oder cyclische aliphatische Kohlenwasserstoffgruppe ist.

3. Mischung nach Anspruch 2, wobei X eine zweiwertige aromatische C₆-C₂₀-Kohlenstoffgruppe ist, die einen oder zwei Benzolringe, die gegebenenfalls substituiert sind, enthält.

4. Mischung nach einem der vorhergehenden Ansprüche, wobei die Kohlenwasserstoffgruppe B eine aliphatische Kohlenwasserstoffgruppe B ist, die gegebenenfalls substituiert ist, insbesondere hydroxysubstituiert ist.

5. Mischung nach Anspruch 4, wobei die aliphatische Kohlenwasserstoffgruppe B eine lineare oder verzweigte C₂-C₁₂-Alkylengruppe, insbesondere C₂-C₈-Alkylengruppe ist.

6. Mischung nach einem der Ansprüche 1 bis 4, wobei die Kohlenwasserstoffgruppe B eine aromatische Kohlenwasserstoffgruppe B ist.

7. Mischung nach einem der vorhergehenden Ansprüche, wobei p 2 oder 3 ist.

8. Mischung nach einem der vorhergehenden Ansprüche, wobei Y eine aromatische C₆-C₂₀-Kohlenstoffgruppe ist.

9. Mischung nach Anspruch 8, wobei Y einen oder zwei Benzolringe, die gegebenenfalls substituiert sind, enthält.

10. Mischung nach einem der vorhergehenden Ansprüche, wobei die lineare oder verzweigte aliphatische C₃-C₁₀-Alkylengruppe A eine drei- oder höherwertige, bevorzugt drei- oder vierwertige Gruppe ist, wie sie durch Entfernung der Hydroxylgruppen aus einem tri- oder höherfunktionellen, bevorzugt tri- oder tetrafunktionellen Alkohol, erhalten wird.

11. Mischung nach einem der vorhergehenden Ansprüche, wobei n = 0, 1 oder 2 ist und m = 3, 4 oder 5 ist

12. Mischung nach Anspruch 11, wobei n = 0 oder 1 ist und m = 3, 4 oder 5 ist, mit n + m = 4 oder 5.

13. Mischung nach einem der vorhergehenden Ansprüche, wobei R₁ eine zweiwertige lineare oder verzweigte C₁-C₆-Alkylengruppe ist.

14. Mischung nach einem der vorhergehenden Ansprüche, wobei die mindestens zwei radikalisch härtbaren Verbindungen aus der Gruppe bestehend aus Verbindungen der Formeln (IIa), (IIb), (IIIa), (IIIb), (IIIc), (IVa), (IVb), (VIa), (VIb) und (VII) 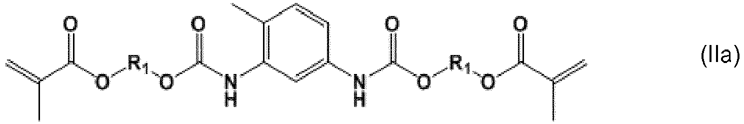 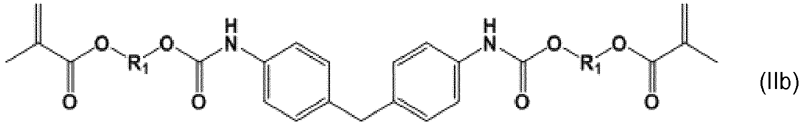 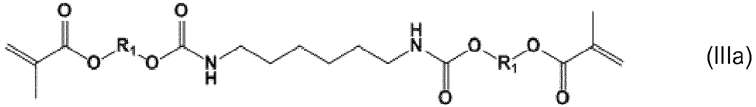 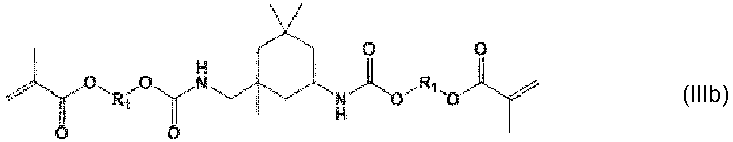 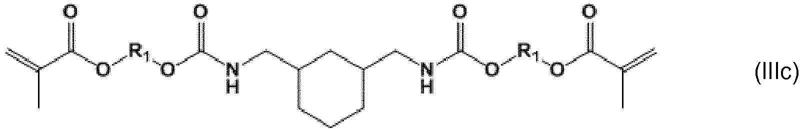 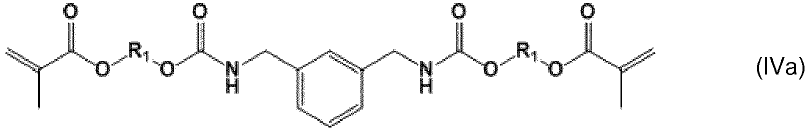 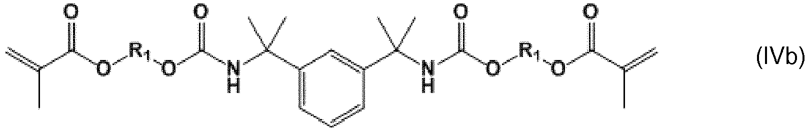 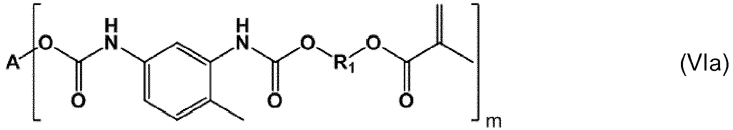 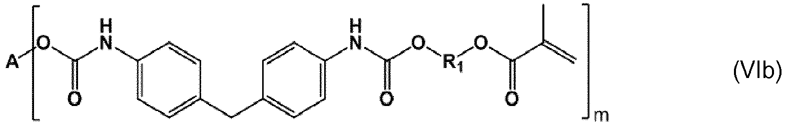 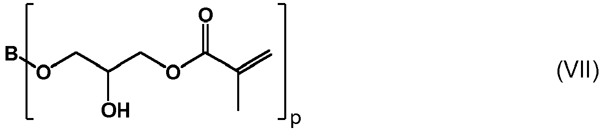 ausgewählt sind.

15. Mischung nach einem der vorhergehenden Ansprüche, wobei die mindestens zwei radikalisch härtbaren Verbindungen aus der Gruppe bestehend aus Verbindungen der Formeln (IIc), (IId), (IIId), (IIIe), (IIIf), (IVc), (IVd), (VIc), (VId), (VIIIa), (VIIIb), (VIIIc), (VIIId), (VIIIe) und (IX) 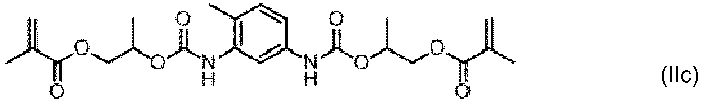 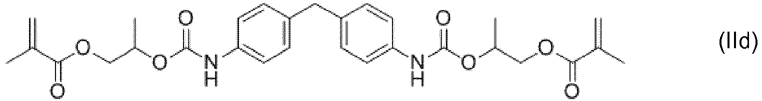 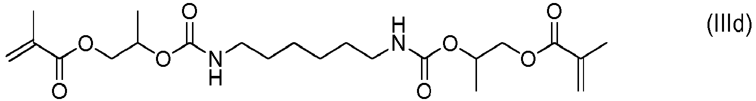 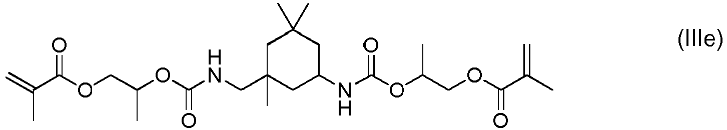 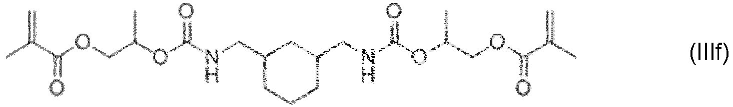 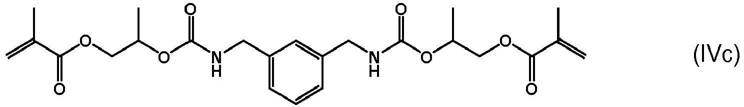 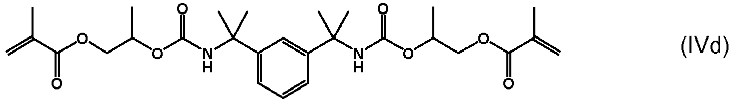 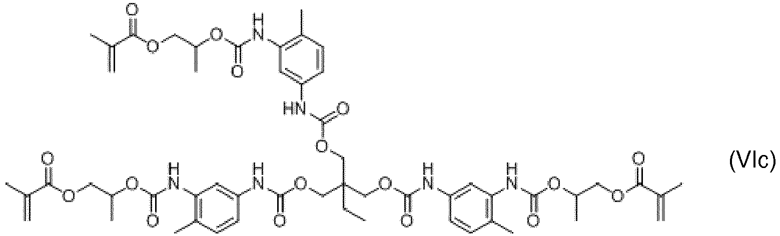 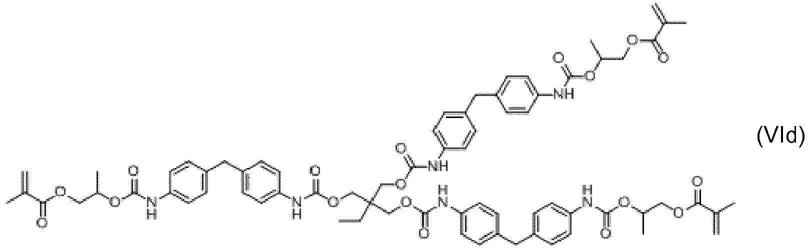 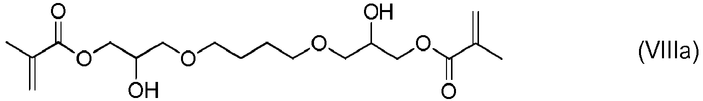 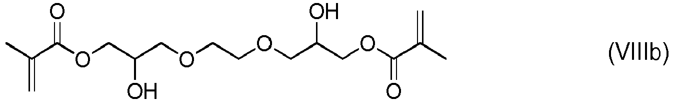 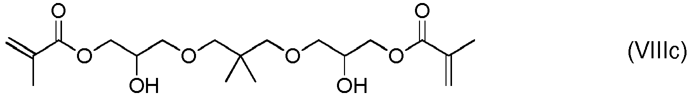 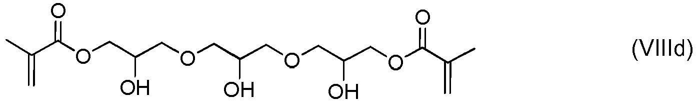 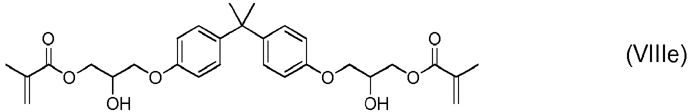 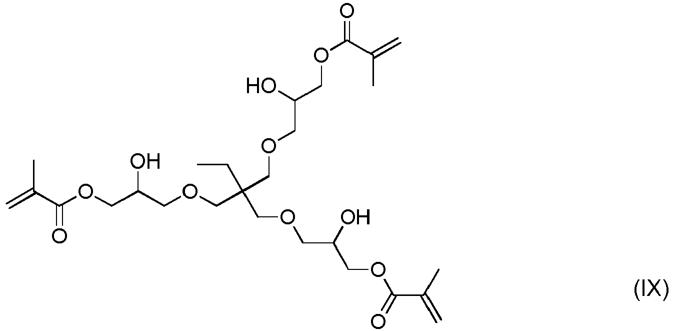 ausgewählt sind.

16. Mischung nach einem der vorhergehenden Ansprüche, umfassend die Verbindung (IIb) und (IIIa), oder (IIa) und (IIb), oder (VIIIa) und (VIIIe), oder (IIb) und (VIIIa), oder (IIIa) und (VIIIe), oder (IIb), (IIIa) und (VIIIe) oder (IIb), (VIIIa) und (VIIIe).

17. Verwendung einer Mischung nach einem der vorhergehenden Ansprüche zur Herstellung eines Reaktivharzes oder einer Reaktivharzkomponente für bauliche Zwecke.

18. Verwendung einer Mischung nach einem der Ansprüche 1 bis 16 zur Erniedrigung der Viskosität eines Reaktivharzes, oder zur Erniedrigung der Auspresskräfte einer Reaktivharzkomponente oder eines Reaktivharz-Systems, für bauliche Zwecke.

19. Verwendung einer Mischung nach einem der Ansprüche 1 bis 16 zur Erhöhung der Verbundspannung einer ausgehärteten Befestigungsmasse.

20. Reaktivharz umfassend eine Mischung nach einem der Ansprüche 1 bis 16, einen Inhibitor, einen Beschleuniger und einen Reaktivverdünner.

21. Reaktivharzkomponente für ein Reaktivharz-System umfassen ein Reaktivharz nach Anspruch 20.

22. Reaktivharz-System mit einer Reaktivharzkomponente (A) nach Anspruch 21 und einer Härterkomponente (B), die einen Initiator enthält.

23. Reaktivharz-System nach Anspruch 22, wobei mindestens eine der Komponenten (A) oder (B) einen anorganischen Zuschlagstoff enthält.

24. Verwendung eines Reaktivharzes nach Anspruch 20, einer Reaktivharzkomponente nach Anspruch 21 oder eines Reaktivharz-Systems nach Anspruch 22 oder 23 für bauliche Zwecke.

25. Verwendung nach Anspruch 24 zur chemischen Befestigung von Verankerungsmitteln in Bohrlöchern.

## Claims

1. Mixture comprising at least two radically curable compounds selected from the group consisting of compounds of general formulas (I), (V) or (VII) 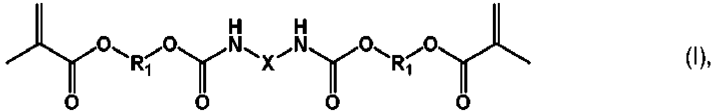 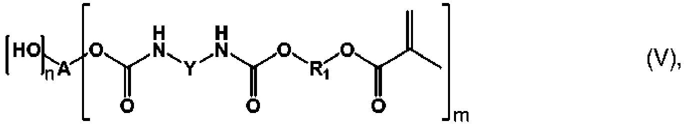 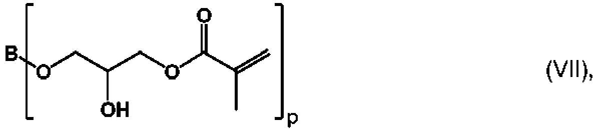 in which
each R₁ is, independently of one another, a branched or linear aliphatic C₁-C₁₅ alkylene group,
A is a linear or branched aliphatic C₃-C₁₀ alkylene group,
B is a linear, branched or cyclic aliphatic hydrocarbon group or an aromatic hydrocarbon group,
X is a divalent linear, branched or cyclic aliphatic or aromatic hydrocarbon group, or a group Z of formula 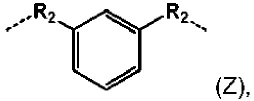 in which R₂ is a divalent branched or linear aliphatic C₁-C₆ alkylene group,
Y is an aromatic hydrocarbon group,
n is an integer greater than or equal to 0,
m is an integer greater than or equal to 3, and
p is an integer greater than or equal to 2.

2. Mixture according to claim 1, wherein X is a divalent aromatic C₆-C₂₀ carbon group or a divalent linear, branched or cyclic aliphatic hydrocarbon group.

3. Mixture according to claim 2, wherein X is a divalent aromatic C₆-C₂₀ carbon group containing one or two benzene rings which are optionally substituted.

4. Mixture according to any of the preceding claims, wherein the hydrocarbon group B is an aliphatic hydrocarbon group B which is optionally substituted, in particular hydroxy-substituted.

5. Mixture according to claim 4, wherein the aliphatic hydrocarbon group B is a linear or branched C₂-C₁₂ alkylene group, in particular C₂-C₈ alkylene group.

6. Mixture according to any of claims 1 to 4, wherein the hydrocarbon group B is an aromatic hydrocarbon group B.

7. Mixture according to any of the preceding claims, wherein p is 2 or 3.

8. Mixture according to any of the preceding claims, wherein Y is an aromatic C₆-C₂₀ carbon group.

9. Mixture according to claim 8, wherein Y contains one or two benzene rings which are optionally substituted.

10. Mixture according to any of the preceding claims, wherein the linear or branched aliphatic C₃-C₁₀ alkylene group A is a trivalent or higher-valent, preferably tri- or tetravalent, group as obtained by removing the hydroxyl groups from a trifunctional or higher-functional, preferably tri- or tetrafunctional, alcohol.

11. Mixture according to any of the preceding claims, wherein n = 0, 1 or 2 and m = 3, 4 or 5.

12. Mixture according to claim 11, wherein n = 0 or 1 and m = 3, 4 or 5, where n + m = 4 or 5.

13. Mixture according to any of the preceding claims, wherein R₁ is a divalent linear or branched C₁-C₆ alkylene group.

14. Mixture according to any of the preceding claims, wherein the at least two radically curable compounds are selected from the group consisting of compounds of formulas (IIa), (IIb), (IIIa), (IIIb), (IIIc), (IVa), (IVb), (VIa), (VIb) and (VII)

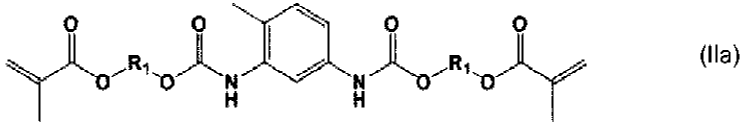

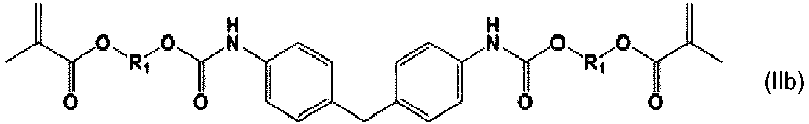

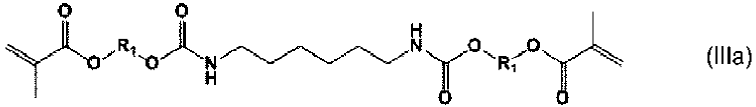

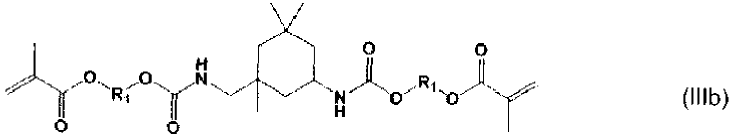

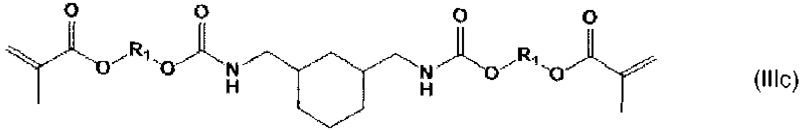

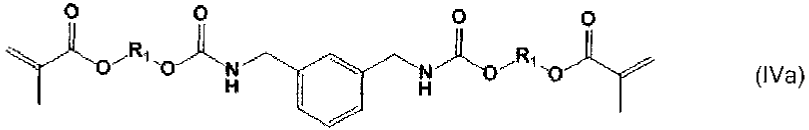

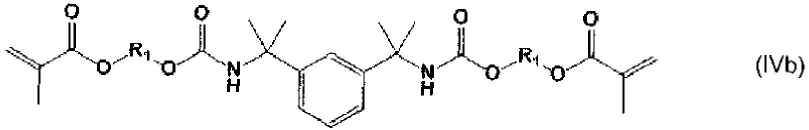

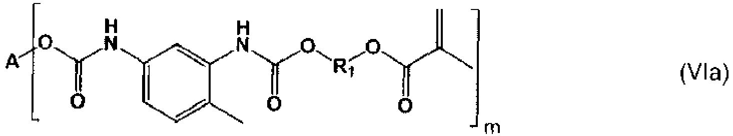

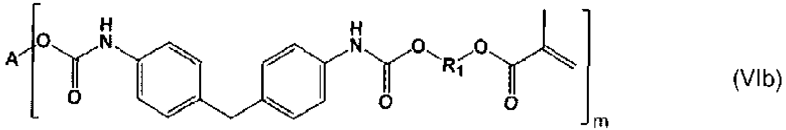

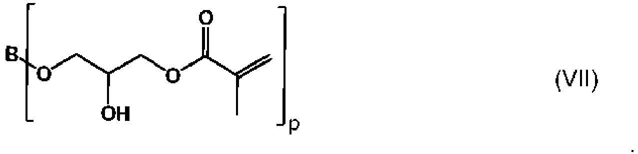

15. Mixture according to any of the preceding claims, wherein the at least two radically curable compounds are selected from the group consisting of compounds of formulas (IIc), (IId), (IIId), (IIIe), (IIIf), (IVc), (IVd), (VIc), (VId), (VIIIa), (VIIIb), (VIIIc), (VIIId), (VIIIe) and (IX)

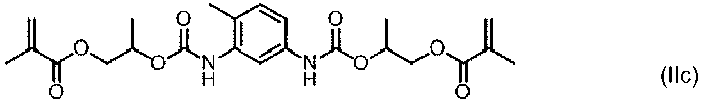

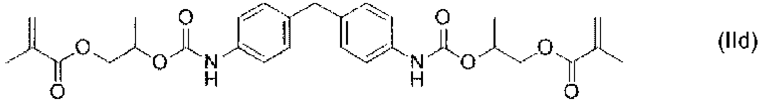

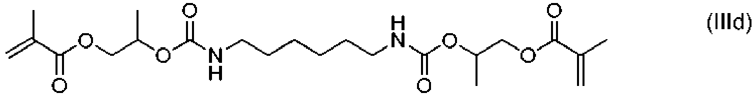

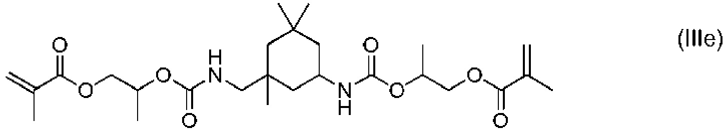

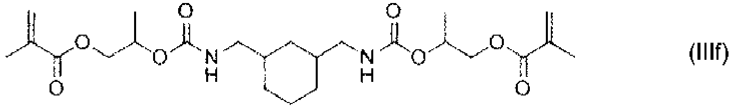

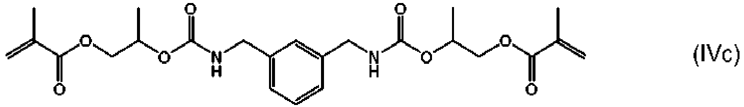

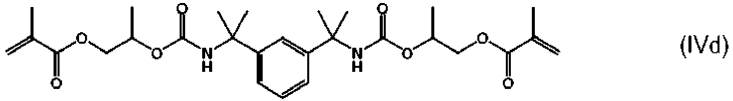

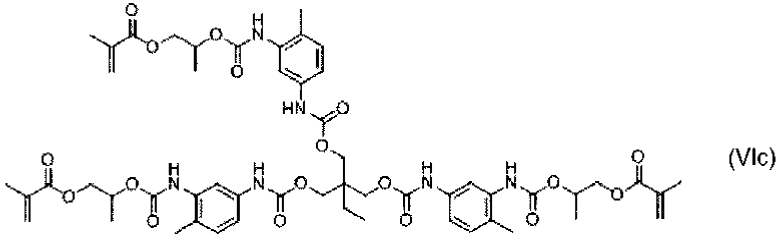

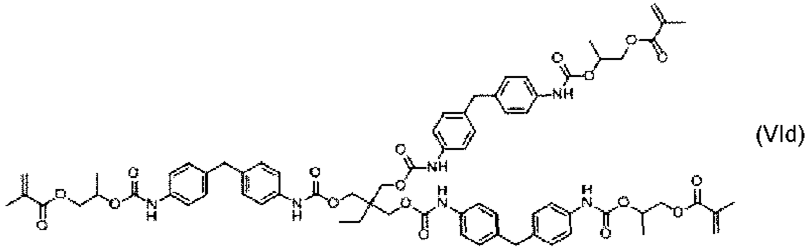

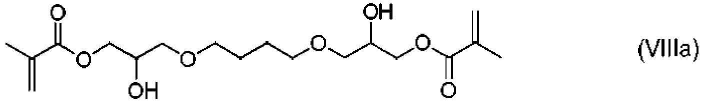

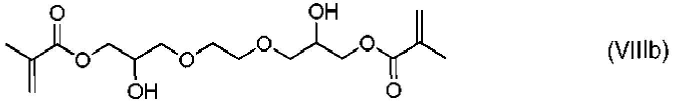

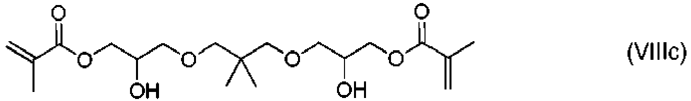

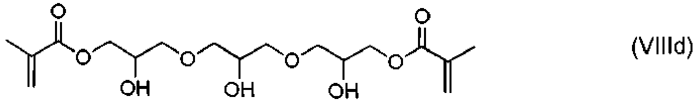

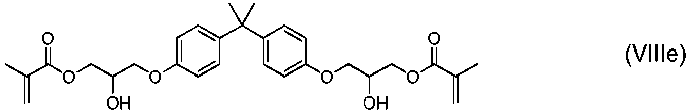

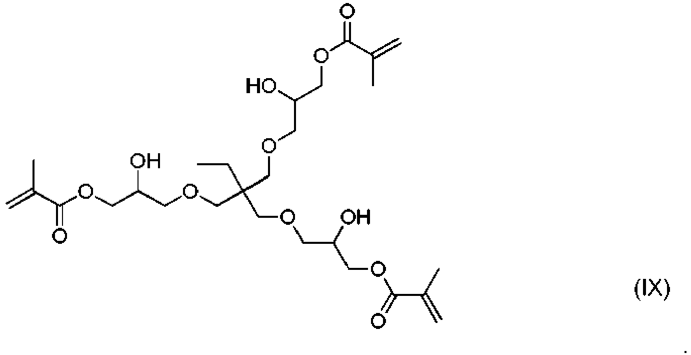

16. Mixture according to any of the preceding claims, comprising the compound (IIb) and (IIIa), or (IIa) and (IIb), or (VIIIa) and (VIIIe), or (IIb) and (VIIIa), or (IIIa) and (VIIIe), or (IIb), (IIIa) and (VIIIe) or (IIb), (VIIIa) and (VIIIe).

17. Use of a mixture according to any of the preceding claims for producing a reactive resin or a reactive resin component for construction purposes.

18. Use of a mixture according to any of claims 1 to 16 for reducing the viscosity of a reactive resin, or for reducing the ejection forces of a reactive resin component or a reactive resin system, for construction purposes.

19. Use of a mixture according to any of claims 1 to 16 for increasing the bond stress of a cured fastening composition.

20. Reactive resin comprising a mixture according to any of claims 1 to 16, an inhibitor, an accelerator and a reactive diluent.

21. Reactive resin component for a reactive resin system comprising a reactive resin according to claim 20.

22. Reactive resin system comprising a reactive resin component (A) according to claim 21 and a hardener component (B) containing an initiator.

23. Reactive resin system according to claim 22, wherein at least one of the components (A) or (B) contains an inorganic additional substance.

24. Use of a reactive resin according to claim 20, a reactive resin component according to claim 21 or a reactive resin system according to either claim 22 or claim 23 for construction purposes.

25. Use according to claim 24 for the chemical fastening of anchoring means in boreholes.

## Revendications

1. Mélange comprenant au moins deux composés durcissables par voie radicalaire choisis dans le groupe constitué des composés des formules générales (I), (V) ou (VII) 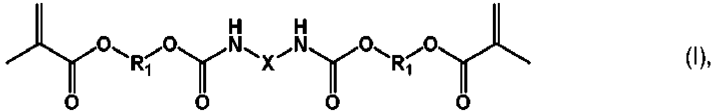 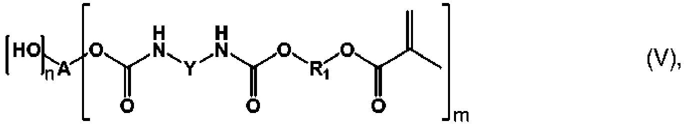 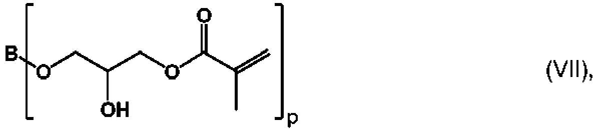 dans lesquelles
chaque R₁ représente, indépendamment les uns des autres, un groupe alkylène aliphatique ramifié ou linéaire en C₁-C₁₅,
A représente un groupe alkylène aliphatique linéaire ou ramifié en C₃-C₁₀, B représente un groupe hydrocarboné aliphatique linéaire, ramifié ou cyclique ou un groupe hydrocarboné aromatique,
X représente un groupe hydrocarboné aliphatique ou aromatique divalent linéaire, ramifié ou cyclique, ou un groupe Z de formule 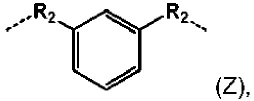
dans laquelle R₂ représente un groupe alkylène aliphatique divalent ramifié ou linéaire en C₁-C₆,
Y représente un groupe hydrocarboné aromatique,
n représente un nombre entier supérieur ou égal à 0,
m représente un nombre entier supérieur ou égal à 3, et
p représente un nombre entier supérieur ou égal à 2.

2. Mélange selon la revendication 1, dans lequel X est un groupe carboné aromatique divalent en C₆-C₂₀ ou un groupe hydrocarboné aliphatique divalent linéaire, ramifié ou cyclique.

3. Mélange selon la revendication 2, dans lequel X est un groupe carboné aromatique divalent en C₆-C₂₀ contenant un ou deux cycles benzéniques, lesquels sont éventuellement substitués.

4. Mélange selon l'une des revendications précédentes, dans lequel le groupe hydrocarboné B est un groupe hydrocarboné aliphatique B, lequel est éventuellement substitué, en particulier hydroxy-substitué.

5. Mélange selon la revendication 4, dans lequel le groupe hydrocarboné aliphatique B est un groupe alkylène linéaire ou ramifié en C₂-C₁₂, en particulier un groupe alkylène en C₂-C₈.

6. Mélange selon l'une des revendications 1 à 4, dans lequel le groupe hydrocarboné B est un groupe hydrocarboné aromatique B.

7. Mélange selon l'une des revendications précédentes, dans lequel p vaut 2 ou 3.

8. Mélange selon l'une des revendications précédentes, dans lequel Y est un groupe carboné aromatique en C₆-C₂₀.

9. Mélange selon la revendication 8, dans lequel Y contient un ou deux cycles benzéniques, lesquels sont éventuellement substitués.

10. Mélange selon l'une des revendications précédentes, dans lequel le groupe alkylène aliphatique linéaire ou ramifié A en C₃-C₁₀ est un groupe au moins trivalent, de préférence trivalent ou tétravalent, tel qu'obtenu en éliminant les groupes hydroxyle d'un alcool au moins trifonctionnel, de préférence trifonctionnel ou tétrafonctionnel.

11. Mélange selon l'une des revendications précédentes, dans lequel n = 0, 1 ou 2 et m = 3, 4 ou 5.

12. Mélange selon la revendication 11, dans lequel n = 0 ou 1 et m = 3, 4 ou 5, avec n + m = 4 ou 5.

13. Mélange selon l'une des revendications précédentes, dans lequel R₁ représente un groupe alkylène divalent linéaire ou ramifié en C₁-C₆.

14. Mélange selon l'une des revendications précédentes, dans lequel les au moins deux composés durcissables par voie radicalaire sont choisis dans le groupe constitué des composés de formules (IIa), (IIb), (IIIa), (IIIb), (IIIc), (IVa), (IVb), (VIa), (VIb) et (VII)

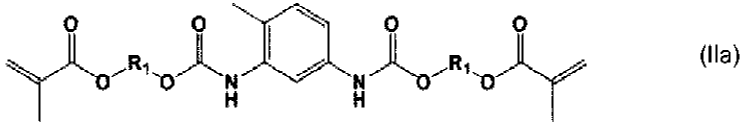

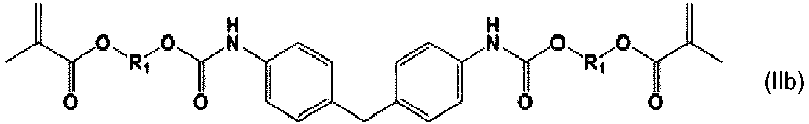

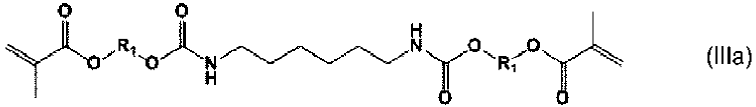

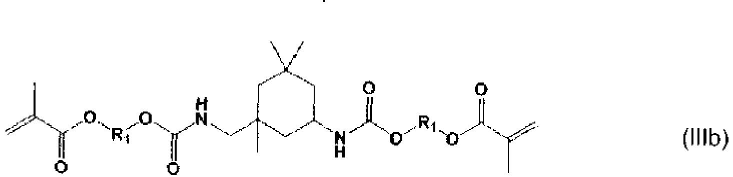

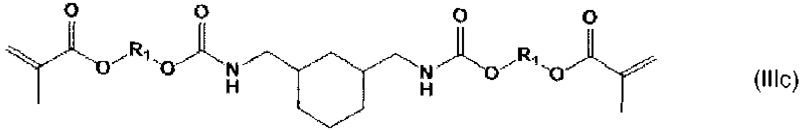

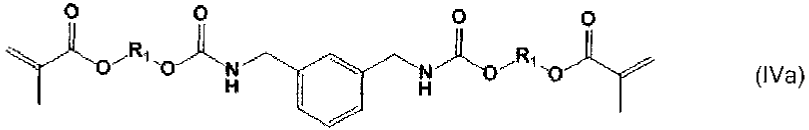

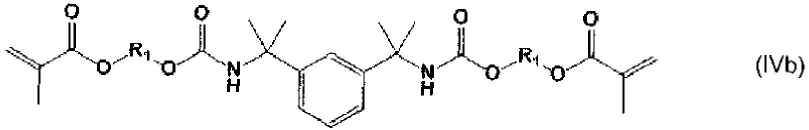

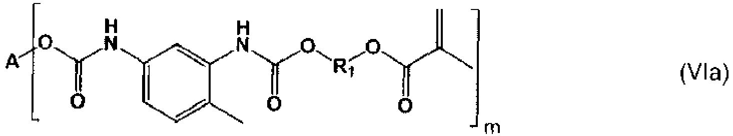

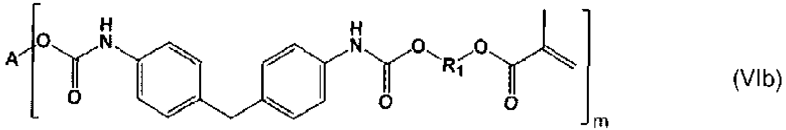

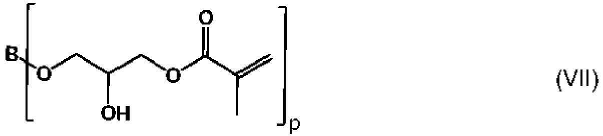

15. Mélange selon l'une des revendications précédentes, dans lequel les au moins deux composés durcissables par voie radicalaire sont choisis dans le groupe constitué des composés de formules (IIc), (IId), (IIId), (IIIe), (IIIf), (IVc), (IVd), (VIc), (VId), (VIIIa), (VIIIb), (VIIIe), (VIIId), (VIIIe) et (IX)

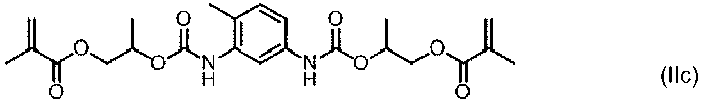

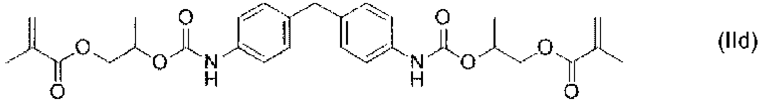

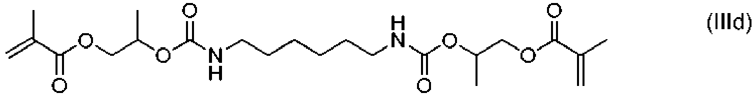

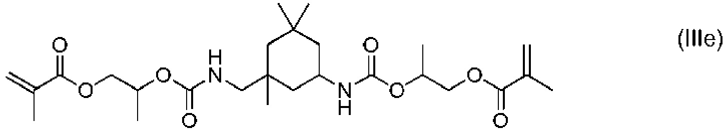

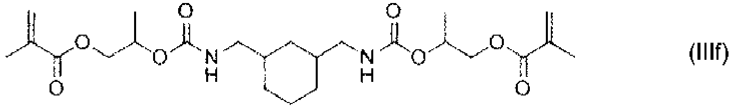

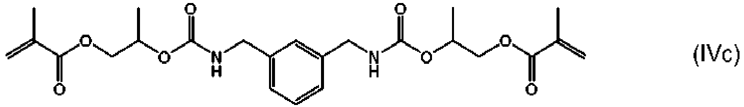

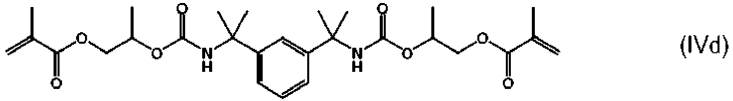

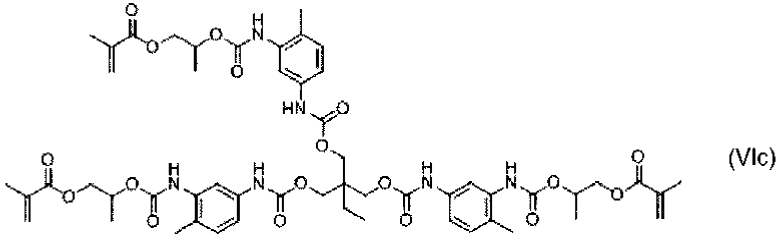

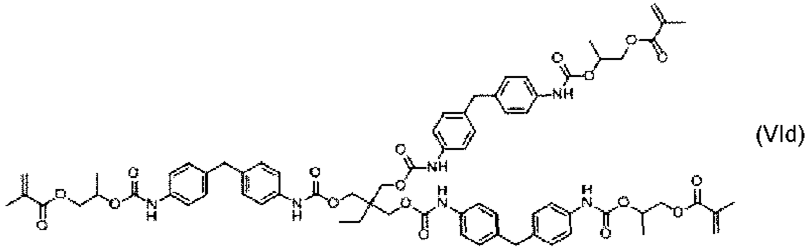

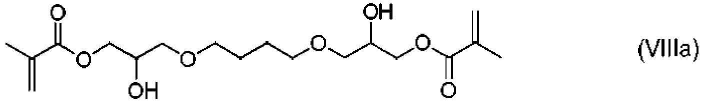

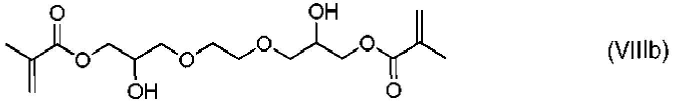

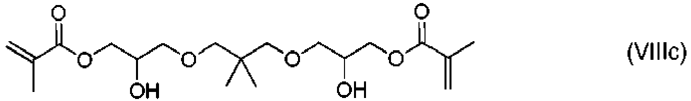

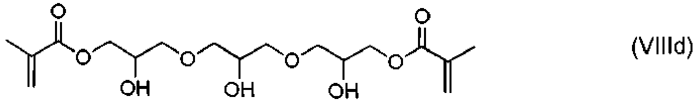

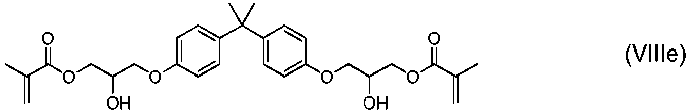

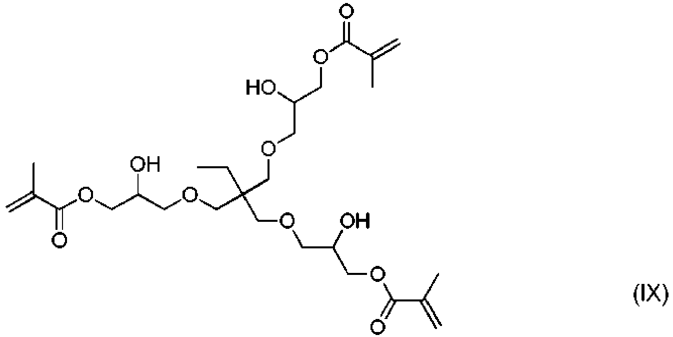

16. Mélange selon l'une des revendications précédentes, comprenant les composés (IIb) et (IIIa), ou (IIa) et (IIb), ou (VIIIa) et (VIIIe), ou (IIb) et (VIIIa), ou (IIIa) et (VIIIe), ou (IIb), (IIIa) et (VIIIe) ou (IIb), (VIIIa) et (VIIIe).

17. Utilisation d'un mélange selon l'une des revendications précédentes pour produire une résine réactive ou un constituant de résine réactive à des fins structurelles.

18. Utilisation d'un mélange selon l'une des revendications 1 à 16 pour réduire la viscosité d'une résine réactive, ou pour réduire les forces d'extrusion d'un constituant de résine réactive ou d'un système de résine réactive, à des fins structurelles.

19. Utilisation d'un mélange selon l'une des revendications 1 à 16 pour augmenter la contrainte d'adhérence d'une masse de fixation durcie.

20. Résine réactive comprenant un mélange selon l'une des revendications 1 à 16, un inhibiteur, un accélérateur et un diluant réactif.

21. Constituant de résine réactive destiné à un système de résine réactive comprenant une résine réactive selon la revendication 20.

22. Système de résine réactive comportant un constituant de résine réactive (A) selon la revendication 21 et un constituant durcisseur (B), lequel contient un initiateur.

23. Système de résine réactive selon la revendication 22, dans lequel au moins l'un des constituants (A) ou (B) contient un additif inorganique.

24. Utilisation d'une résine réactive selon la revendication 20, d'un constituant de résine réactive selon la revendication 21 ou d'un système de résine réactive selon la revendication 22 ou 23 à des fins structurelles.

25. Utilisation selon la revendication 24 pour fixer de façon chimique des moyens d'ancrage dans des trous de forage.
